(19) Europäisches Patentamt European Patent Office Office européen des brevets

(11) **EP 4 405 861 B1**

(12) **EUROPEAN PATENT SPECIFICATION**

(45) Date of publication and mention of the grant of the patent:
**05.08.2026 Bulletin 2026/32**

(21) Application number: **22873365.5**

(22) Date of filing: **28.07.2022**

(51) International Patent Classification (IPC):
**G06N 3/0464** $^{(2023.01)}$    **G06N 3/063** $^{(2023.01)}$
**G06N 3/045** $^{(2023.01)}$    **G06N 3/0495** $^{(2023.01)}$

(52) Cooperative Patent Classification (CPC):
**G06N 3/063; G06N 3/045; G06N 3/0464; G06N 3/0495**

(86) International application number:
**PCT/US2022/038710**

(87) International publication number:
**WO 2023/048824 (30.03.2023 Gazette 2023/13)**

(54) **METHODS, APPARATUS, AND ARTICLES OF MANUFACTURE TO INCREASE UTILIZATION OF NEURAL NETWORK (NN) ACCELERATOR CIRCUITRY FOR SHALLOW LAYERS OF AN NN BY REFORMATTING ONE OR MORE TENSORS**

VERFAHREN, VORRICHTUNG UND HERSTELLUNGSARTIKEL ZUR ERHÖHUNG DER NUTZUNG VON NEURONALEM NETZWERKBESCHLEUNIGER FÜR FLACHE NN-SCHICHTEN DURCH NEUFORMATIERUNG EINES ODER MEHRERER TENSOREN

PROCÉDÉS, APPAREIL ET ARTICLES MANUFACTURÉS POUR AUGMENTER L'UTILISATION DE CIRCUITS ACCÉLÉRATEURS DE RÉSEAU DE NEURONES ARTIFICIELS (NN) POUR DES COUCHES PEU PROFONDES D'UN NN PAR REFORMATAGE D'UN OU PLUSIEURS TENSEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.09.2021 US 202117484661**

(43) Date of publication of application:
**31.07.2024 Bulletin 2024/31**

(73) Proprietor: **Intel Corporation**
**Santa Clara, CA 95054 (US)**

(72) Inventors:
• **BRADY, Kevin**
**Newry, BT342GB (GB)**
• **POWER, Martin**
**Dublin, D20 V024 (IE)**
• **HANRAHAN, Niall**
**Galway, H91 N6K7 (IE)**
• **PALLA, Alessandro**
**56121 Pisa (IT)**
• **GRYMEL, Martin-Thomas**
**Leixlip, W23 VP97 (IE)**
• **BERNARD, David**
**Nicholstown, Kilcullen, R56E160 (IE)**

(74) Representative: **Maiwald GmbH**
**Engineering**
**Elisenhof**
**Elisenstrasse 3**
**80335 München (DE)**

(56) References cited:
US-A1- 2020 401 895    US-A1- 2021 117 755
US-A1- 2021 151 431    US-A1- 2021 248 459
US-A1- 2022 012 578    US-B2- 11 061 738

• CHEN YIRAN, XIE YUAN, SONG LINGHAO, CHEN FAN, TANG TIANQI: "A Survey of Accelerator Architectures for Deep Neural Networks", ENGINEERING, vol. 6, no. 3, 1 March 2020 (2020-03-01), pages 264 - 274, XP055810329, ISSN: 2095-8099, DOI: 10.1016/j.eng.2020.01.007

# EP 4 405 861 B1

**Description**

FIELD OF THE DISCLOSURE

This disclosure relates generally to accelerator circuitry and, more particularly, to methods, apparatus, and articles of manufacture to increase utilization of neural network (NN) accelerator circuitry for shallow layers of an NN by reformatting one or more tensors.

BACKGROUND

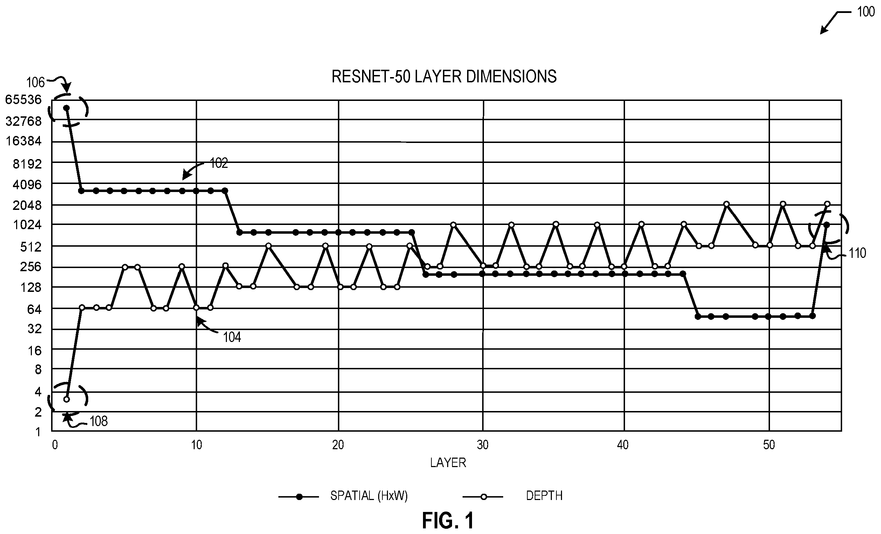

Demand for image processing capabilities has moved beyond high-power dedicated desktop hardware and has become an expectation for personal and/or otherwise mobile devices. Mobile devices typically include processing capabilities that are limited by size constraints, temperature management constraints, and/or power constraints. US11061738 B2 discloses methods and apparatus for efficiently storing and accessing multi-dimensional data, particularly in the context of neural networks and image processing. In the Background section, it addresses the limitations of mobile devices due to constraints like size, temperature, and power, highlighting the need for efficient data handling. The Detailed Description elaborates on using sparse vectors and sparsity maps to reduce memory usage and improve bandwidth by storing only non-zero elements and their positions. It further describes breaking down data into smaller storage elements (SEs) that can be stored non-contiguously, allowing for flexible memory allocation and facilitating parallel processing, as detailed in the sections on SEs and their organization. The document also discusses various tensor storage schemes, such as XYZ and ZXY orders (col.17), which impact data access and processing efficiency, as illustrated in the tables and figures. By organizing data into SEs and using pointers for access, D1 enables parallel processing, enhancing the speed and efficiency of data manipulation. The figures and flowcharts (e.g., FIGS. 1-12) provide visual and procedural guidance for implementing the data storage manager, covering memory allocation, data storage, and access processes. Overall, D1 presents a comprehensive approach to optimizing data storage and processing through sparse data management, non-contiguous storage, and parallel processing, offering a robust framework for efficient data handling in neural networks and image processing applications.

BRIEF DESCRIPTION OF THE DRAWINGS

FIG. 1 is a graphical illustration showing how dimensions of input tensors change as the depth of a neural network increases.

FIG. 2 is a block diagram of an example system on a chip (SoC) including an example central processor unit (CPU), an example system memory, example direct memory access (DMA) circuitry, and example artificial intelligence (AI) accelerator circuitry.

FIG. 3 illustrates an example tensor.

FIG. 4 illustrates example tensor data stored in the system memory of FIG. 2.

FIG. 5 illustrates an example memory including an example pointer table and corresponding tensor data.

FIG. 6 is a graphical illustration showing data layout in memory without storage element pointers.

FIG. 7 is a graphical illustration showing data layout in memory with storage element pointers.

FIG. 8 is a block diagram illustrating an example implementation of the example data replication preprocessing circuitry of FIG. 2.

FIG. 9 is a dataflow diagram illustrating example reformation of (a) a convolution of an example input tensor and an example weight set to determine an example output tensor to (b) a convolution of an example reformatted input tensor and an example reformatted weight set to determine the example output tensor.

FIG. 10 is a block diagram illustrating an example implementation of the example fractional stride preprocessing circuitry of FIG. 2.

FIG. 11 is a block diagram illustrating an example implementation of the example MAC circuitry of FIG. 2.

FIG. 12 is a dataflow diagram illustrating an example convolution of an example input tensor with no padding and an example set of 3x3x3 weight kernels having a stride of one to determine an example output tensor.

FIG. 13 is a dataflow diagram illustrating an example convolution of an example reformatted input tensor with no padding and an example set of reformatted 1x3x9 weight kernels having a stride of one to determine the example output tensor of FIG. 12.

FIG. 14 is a dataflow diagram illustrating an example convolution of an example reformatted input tensor with no padding and an example 3x3x3 weight kernel having a stride of one and one or more weight sparsity bitmaps to facilitate refined fractional striding.

FIG. 15 is a dataflow diagram illustrating an example convolution of an example input tensor with no padding and an example set of 3x3x3 weight kernels having a stride of two to determine an example output tensor.

FIG. 16 is a dataflow diagram illustrating an example convolution of an example reformatted input tensor with no padding and an example set of reformatted 1x3x9 weight kernels having a stride of two to determine the example output tensor of FIG. 15.

FIG. 17 is a dataflow diagram illustrating an example convolution of an example reformatted input tensor with no padding and an example 3x3x3 weight kernel having a stride of two and one or more weight sparsity bitmaps to facilitate refined fractional striding.

FIG. 18 is a dataflow diagram illustrating an example convolution of an example input tensor with padding and an example set of 3x3x3 weight kernels having a stride of one to determine an example output tensor.

FIG. 19 is a dataflow diagram illustrating an example convolution of an example reformatted input tensor with padding and an example set of reformatted 1x3x9 weight kernels having a stride of one to determine the example output tensor of FIG. 18.

FIG. 20 is a dataflow diagram illustrating an example convolution of an example reformatted input tensor with padding and an example 3x3x3 weight kernel having a stride of one and one or more weight sparsity bitmaps to facilitate refined fractional striding.

FIG. 21 is a flowchart representative of example machine-readable instructions and/or example operations that may be executed and/or instantiated by processor circuitry to implement the data replication preprocessing circuitry of FIGS. 2 and/or 8.

FIG. 22 is a flowchart representative of example machine-readable instructions and/or example operations that may be executed and/or instantiated by processor circuitry to implement the fractional stride preprocessing circuitry of FIGS. 2 and/or 10.

FIG. 23 is a block diagram of an example processing platform including processor circuitry structured to execute the example machine-readable instructions of FIG. 21 to implement the data replication preprocessing circuitry of FIGS. 2 and/or 8 and/or the example machine-readable instructions of FIG. 22 to implement the fractional stride preprocessing circuitry of FIGS. 2 and/or 10.

FIG. 24 is a block diagram of an example implementation of the processor circuitry of FIG. 23.

FIG. 25 is a block diagram of another example implementation of the processor circuitry of FIG. 23.

FIG. 26 is a block diagram of an example software distribution platform (e.g., one or more servers) to distribute software (e.g., software corresponding to the example machine-readable instructions of FIGS. 21 and/or 22) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. In general, the same reference numbers will be used throughout the drawing(s) and accompanying written description to refer to the same or like parts. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g.,

one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

## DETAILED DESCRIPTION

Typical computing systems, including personal computers and/or mobile devices, employ advanced image processing or computer vision algorithms to automate tasks that human vison can perform. Computer vision tasks include acquiring, processing, analyzing, and/or understanding digital images. Such tasks facilitate, in part, extraction of dimensional data from the digital images to produce numerical and/or symbolic information. Computer vision algorithms can use the numerical and/or symbolic information to make decisions and/or otherwise perform operations associated with three-dimensional (3D) pose estimation, event detection, object recognition, video tracking, etc., among others. To support augmented reality (AR), virtual reality (VR), robotics, and/or other applications, it is then accordingly important to perform such tasks quickly (e.g., in real time or near real time) and efficiently.

Advanced image processing or computer vision algorithms sometimes employ a convolutional neural network (CNN). A CNN is a deep, artificial neural network typically used to classify images, cluster the images by similarity (e.g., a photo search), and/or perform object recognition within the images using convolution. As used herein, convolution is defined to be a function derived from two given functions by integration that expresses how a shape of one of the functions is modified by a shape of the other function. Thus, a CNN can be used to identify faces, individuals, street signs, animals, etc., included in an input image by passing an output of one or more filters corresponding to an image feature (e.g., a horizontal line, a two-dimensional (2D) shape, etc.) over the input image to identify matches of the image feature within the input image. CNNs obtain vectors (e.g., broken down from multidimensional arrays) that need to be stored and/or used in computations to perform one or more functions. Thus, a CNN may receive multidimensional arrays (e.g., tensors) including data corresponding to one or more images. To perform a convolution, processor circuitry applies one or more filters and an activation function to an input tensor (e.g., a multidimensional array, a 3D array, etc.) to generate an output tensor. As used herein, the term tensor refers to a dimensional set of data. Tensors may be categorized by rank where the rank is independent of the number of dimensions of the tensor. For example, rank zero tensors correspond to scalar values, rank one tensors correspond to vector values, rank two tensors correspond to matrix values, and rank three tensors or greater correspond to tensor values.

Artificial intelligence (AI) accelerator circuitry, including neural compute engines (NCEs) and neural network accelerators (NNAs), is dedicated hardware circuitry for executing operations of AI models (e.g., neural network (NN) models). For example, such operations can be divided into two phases: a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data.

Once trained and deployed, the model may be operated in the inference phase to process data. In the inference phase, data to be analyzed (e.g., live data) is input to the model, and the model executes to create an output. This inference phase can be thought of as the AI model "thinking" to generate the output based on what it learned from the training (e.g., by executing the model to apply the learned patterns and/or associations to the live data). In some examples, input data undergoes preprocessing before being used as an input to the AI model. Moreover, in some examples, the output data may undergo post-processing after it is generated by the AI model to transform the output into a useful result (e.g., a display of data, an instruction to be executed by a machine, etc.).

There is an increasing number of architectures for NNs across various use cases including computer vision, speech recognition, and image and video processing. Example NN architectures include ResNet-50, MobileNet, EfficientNet, and TinyYolo. Each of these example NN architectures includes many processing layers where each processing layer has very high compute requirements and includes many multiply and accumulate (MAC) operations. Additionally, each layer in the NN architecture receives an input tensor including one or more channels. The one or more channels correspond to the depth of a corresponding input tensor.

A common feature of most NN architectures is that the initial input layer to the NN includes three channels. For example, in some CNNs (e.g., for computer vision, for image and video processing, etc.), the input layer, when executed, performs a convolution on an image. In such an example, the image pixels are fed into the CNN and typically only include 3 channels (e.g., Red, Green, Blue (RGB) values) which is considered very shallow as compared to input tensors to subsequent layers of the CNN.

Modern CNNs, when executed, typically apply 32, 64, or 96 filters to the input image. As such, the input tensor to the next layer of the CNN will be much deeper than the input image, with a depth corresponding to the number of filters (e.g., 32, 64, 96, etc.). As the CNN gets deeper, the channel depth of the input tensors typically ranges from 256 to 2,048 channels. Conversely, the spatial dimensions (e.g., height and width) of the tensors tend to decrease as the CNN gets deeper. FIG. 1 is a graphical illustration 100 showing how dimensions of input tensors change as the depth of an NN increases. The graphical illustration 100 illustrates how the dimensions of input tensors change as the depth of the ResNet-50 NN increases.

**In** the illustrated example of FIG. 1, the graphical illustration 100 includes an example first plot 102 and an example second plot 104. In the example of FIG. 1, the first plot 102 represents the spatial dimensions of input tensors as the depth of the ResNet-50 NN increases. In the example of FIG. 1, the second plot 104 represents the depth of input tensors as the depth of the ResNet-50 NN increases. At an example initial layer of the ResNet-50 NN, the input image is 224x224 pixels resulting in spatial dimensions of 50,176 pixels (point 106) with a channel depth of 3 (point 108). The second plot 104 increases from 64 channels to 2,048 channels as the depth of the ResNet-50 NN increases while the first plot 102 progresses to 56x56 pixels, 28x28 pixels, 14x14 pixels, and 7x7 pixels. The final layer (e.g., the deepest layer) of the ResNet-50 NN is a fully connected layer as opposed to a convolution layer. As such, the first plot 102 increases from 7x7 pixels to 32x32 pixels (block 110).

As illustrated in FIG. 1, apart from the initial layer, input tensors to most layers of an NN have significant depth. As deep input tensors comprise most of the computing of AI accelerator circuitry, there is an industry wide trend for AI accelerator circuitry to be increasingly efficient at processing deep tensors. For example, AI accelerator circuitry includes a large number of MAC circuits that are arranged in an array and optimized for processing deeper input tensors. To achieve high utilization, such MAC circuits of example AI accelerator circuitry require a minimum number of channels in the corresponding input tensor. Most convolutional layers with an input tensor having a depth of 32 or greater achieve close to 100% utilization, with low single digit percentage degrade due to processing overhead. By contrast, the input layer utilization, when processed in the same way as these layers having deeper input tensors achieves a MAC utilization of < 30%.

Accordingly, the lack of depth of the input tensor to the initial layer of NNs reduces the efficiency of AI accelerator circuitry and results in low utilization of the MAC circuits. The low utilization of MAC circuits coupled with the comparatively large size (in terms of the width and height) of the initial input tensor causes the initial input tensor to NNs to result in a significant proportion of the processing time of the overall NNs. Therefore, adding depth to the input tensor to the initial layer of an NN can improve the performance of processing the initial layer.

Existing AI accelerator circuitry uses hardware logic circuitry that is dedicated to processing initial input tensors to improve the efficiency of processing the relatively shallow input tensors. This hardware logic circuitry relies on configurations where kernel dimensions and stride allow overlapping input activations to be reused to boost utilization. Such hardware logic circuitry requires the initial input tensor to be formatted in planer format. As such, existing AI accelerator circuitry is configuration dependent, resulting in slow processing of initial input tensors.

Additionally, the dedicated hardware logic circuitry consumes area and requires a dedicated interconnect between the MAC circuits and memories in existing AI accelerator circuitry. Such a dedicated interconnect results in a routing bottleneck and limits the maximum frequency at which the MAC array can operate. Additionally, the dedicated hardware logic circuitry and interconnect is only used for processing the initial input tensor while input tensors to deeper layers in the network are processed by different circuitry. As the industry trends toward AI accelerator circuitry with larger MAC arrays, scaling such dedicated hardware logic circuitry requiring a dedicated interconnect is not realistic.

Unlike existing AI accelerator circuitry, examples disclosed herein do not rely on overlapping kernel dimensions and stride to achieve higher utilization. Additionally, examples disclosed herein advantageously utilize a common tensor format for all layers in a network (e.g., Z major format). To increase utilization, examples disclosed herein reformat input tensors such that activations for multiple points in a kernel are input simultaneously to the array of MAC circuits. As such, examples disclosed herein increase MAC circuit utilization for input tensors to initial layers of NNs. For example, disclosed methods, apparatus, and articles of manufacture result in a significant improvement in performance of AI accelerator circuitry that processes input tensors to initial layers of NNs. As processing the input tensor to the initial layer of an NN can result in a significant proportion of the overall network processing time, decreasing the time to process such layers reduces overall network latency.

A tensor may be a 3D structure in XYZ space. Each XY plane of the tensor corresponds to a channel, and each step along the Z axis corresponds to a different channel. In example memory disclosed herein, tensors are stored in ZXY format, which is also referred to as Z major format. In memory, ZXY format data is stored in the Z dimension, followed by the X dimension, followed by the Y dimension. That is, example tensors are split into ZX planes that are stored consecutively in memory. As such, MAC circuits can read data for each XY position across multiple channels simultaneously.

Example methods, apparatus, and articles of manufacture disclosed herein include tensor data replication in which Z values of XY locations of an input tensor that overlap a width of a weight kernel are copied and consecutively loaded into a reformatted tensor to increase depth of input tensors. Additionally, example methods, apparatus and articles of manufacture disclosed herein include fractional striding in which multiple weight sparsity bitmaps with different sparsity patterns are generated for the same weight kernel to selectively process activation data of an input tensor effectively deepening the input tensor.

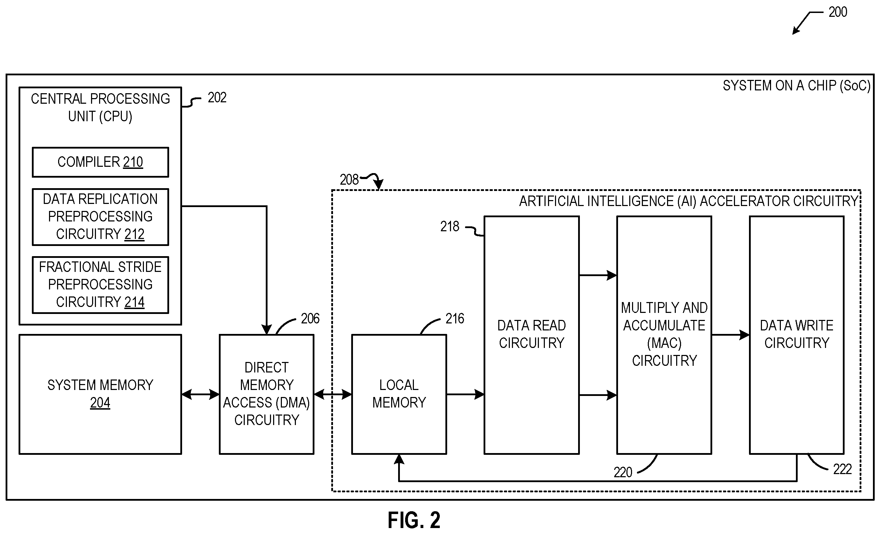

FIG. 2 is a block diagram of an example system on a chip (SoC) 200 including an example central processor unit (CPU) 202, an example system memory 204, example direct memory access (DMA) circuitry 206, and example artificial intelligence (AI) accelerator circuitry 208. In the example of FIG. 2, the CPU 202 includes an example compiler 210, example data replication preprocessing circuitry 212, and example fractional stride preprocessing circuitry 214. Additionally, in the example of FIG. 2, the AI accelerator circuitry 208 includes an example local memory 216, example data read circuitry 218, example multiply and accumulate (MAC) circuitry 220, and example data write circuitry 222.

In the illustrated example of FIG. 2, the CPU 202 is coupled to the DMA circuitry 206. In the example of FIG. 2, the CPU 202 is implemented by one or more general purpose semiconductor-based electrical circuits programmed with instructions to perform specific operations and including one or more semiconductor-based logic devices (e.g., electrical hardware implemented by one or more transistors). For example, the CPU 202 is programmed with instructions to perform the operations of the compiler 210, the operations of the data replication preprocessing circuitry 212, and/or the operations of the fractional stride preprocessing circuitry 214. Additionally, the CPU 202 may obtain data (e.g., input tensors and/or one or more weight kernels) that are to be stored or used in computations to perform one or more AI or image processing related functions. For example, the SoC 200 may include interface circuitry to access one or more input tensors representative of images to be processed and the CPU 202 may obtain the one or more input tensors from the interface circuitry. Thus, the CPU 202 may receive multidimensional arrays (e.g., tensors or rows of vectors) including data corresponding to one or more images. In the example of FIG. 2, the CPU 202 causes storage of data (e.g., one or more tensors and/or one or more weight kernels) to be processed by the AI accelerator circuitry 208 in the system memory 204 via the DMA circuitry 206. When the CPU 202 stores data to be processed by the AI accelerator circuitry 208 in the system memory 204, the data is stored in a sparse format including one or more sparsity bitmaps (discussed further herein). In some examples, if an input tensor is shallow (e.g., has a depth of 3, 4, 5, etc.), the CPU 202 stores the input tensor in the system memory 204 in a dense format. Additionally, the CPU 202 offloads one or more AI workloads (e.g., compiled by the compiler 210) to the AI accelerator circuitry 208 for processing.

In the illustrated example of FIG. 2, the CPU 202 includes the example compiler 210. In the example of FIG. 2, the compiler 210 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 2, the compiler 210 compiles outputs from AI and/or other NN program(s) such as TensorFlow, Keras, PyTorch, among others, for implementation on the AI accelerator circuitry 208. The example compiler 210 processes the variables of the AI program(s) to determine how to configure the AI accelerator circuitry 208 to increase utilization of the MAC circuitry 220 for shallow layers of NNs by reformatting one or more tensors.

In the illustrated example of FIG. 2, the compiler 210 may configure the AI accelerator circuitry 208 to operate in accordance with at least two configurations. In such an example, the at least two configurations include a tensor data replication configuration and a fractional striding configuration. The example compiler 210 sets a configuration by setting one or more configuration bits in one or more configuration registers of the AI accelerator circuitry 208. In some examples, a programming manual associated with the AI accelerator circuitry 208 describes how to configure the AI accelerator circuitry 208 to increase utilization of the MAC circuitry 220 for shallow layers of NNs.

In the illustrated example of FIG. 2, the system memory 204 is coupled to the DMA circuitry 206. In the example of FIG. 2, the system memory 204 stores input data (e.g., input tensors) for AI workloads and/or output data (e.g., output tensors) from AI workloads. For example, input data for an AI workload includes one or more activation tensors and one or more weight sets. Weight sets may additionally or alternatively be referred to as weight kernels. In the example of FIG. 2, the system memory 204 is implemented by DRAM. In additional or alternative examples, the system memory 204 is implemented by other volatile memory (e.g., Synchronous Dynamic Random-Access Memory (SDRAM), RAMBUS Dynamic Random-Access Memory (RDRAM), etc.) and/or a non-volatile memory (e.g., flash memory). The example system memory 204 may additionally or alternatively be implemented by one or more double data rate (DDR) memories, such as DDR, DDR2, DDR3, DDR4, mobile DDR (mDDR), etc. In additional or alternative examples, the example system memory 204 may be implemented by one or more mass storage devices such as hard disk drive(s), compact disk drive(s), digital versatile disk drive(s), solid-state disk drive(s), etc., that are external to the SoC 200.

In the illustrated example of FIG. 2, data stored in the system memory 204 is stored as sparse data such as a sparse tensor. As described above, in some examples (e.g., when an input tensor is shallow), the data stored in the system memory 204 is dense data. As defined herein, sparse data (e.g., a sparse tensor) is data that includes all non-zero elements of dense data in the same order as the dense data but excludes all zero elements of the dense data. As defined herein, dense data (e.g., a dense tensor) is data that includes both zero and non-zero elements. As such, a dense vector [0, 0, 5, 0, 18, 0, 4, 0] corresponds to the sparse vector [5, 18, 4]. In some examples, dense data may be referred to as unpacked data and/or uncompressed data. Additionally, in some examples, sparse data may be referred to as packed data and/or compressed data.

Dense data may be generated and/or determined based on the corresponding sparse data and a sparsity bitmap. As defined herein, a sparsity bitmap is a vector that includes one-bit elements identifying whether respective elements of dense data are zero or non-zero. Thus, a sparsity bitmap may map non-zero values of the dense data to '1' and may map the zero values of the dense data to '0'. For the above-dense vector of [0, 0, 5, 0, 18, 0, 4, 0], the sparsity bitmap may be [0, 0, 1, 0, 1, 0, 1, 0] (e.g., because the third, fifth, and seventh elements of the dense vector are non-zero). The combination of sparse data and a sparsity bitmap represents corresponding dense data (e.g., the dense data could be generated and/or reconstructed based on the corresponding sparse data and sparsity bitmap).

In the illustrated example of FIG. 2, the DMA circuitry 206 is coupled to the CPU 202, the system memory 204, and the local memory 216. In the example of FIG. 2, the DMA circuitry 206 is implemented by one or more special purpose electrical circuits structured to perform specific operation(s) and including one or more semiconductor-based logic devices (e.g., electrical hardware implemented by one or more transistors). In the example of FIG. 2, the DMA circuitry 206 operates as a controller for accessing the system memory 204 (e.g., to read and/or write data thereto). In this manner, the CPU 202 and the AI accelerator circuitry 208 may access the system memory 204 independently of one another. For example, the AI accelerator circuitry 208 communicates with the local memory 216 directly to obtain input activation tensors and/or weight sets. The local memory 216 may obtain the input tensors and/or weight sets from the system memory 204 as needed. Additionally, for example, the AI accelerator circuitry 208 can communicate with the local memory 216 directly to store output tensors. The local memory 216 may transfer storage of such output tensors to the system memory 204 and/or feed such output tensors back to the MAC circuitry 220 as they become available.

In the illustrated example of FIG. 2, the AI accelerator circuitry 208 is coupled to the DMA circuitry 206. In the example of FIG. 2, the AI accelerator circuitry 208 is implemented by one or more special purpose electrical circuits structured to perform specific operation(s) and including one or more semiconductor-based logic devices (e.g., electrical hardware implemented by one or more transistors). In the example of FIG. 2, the AI accelerator circuitry 208 processes reformatted input tensors such that utilization of the MAC circuitry 220 is increased.

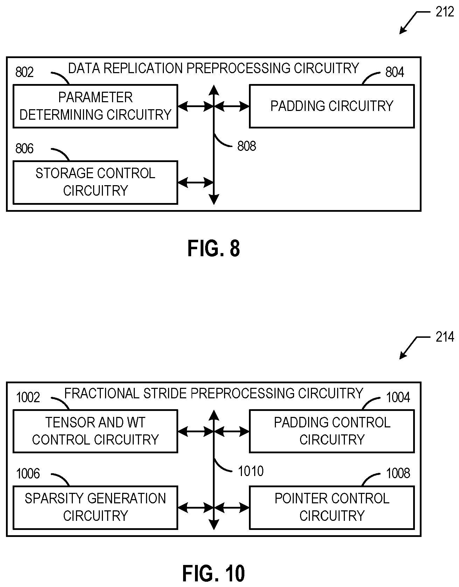

In the illustrated example of FIG. 2, the CPU 202 includes the data replication preprocessing circuitry 212. In the example of FIG. 2, the data replication preprocessing circuitry 212 is implemented by one or more instructions (e.g., software) to perform specific operations on one or more general purpose semiconductor-based electrical circuits and including one or more semiconductor-based logic devices (e.g., electrical hardware implemented by one or more transistors). In some examples, the data replication preprocessing circuitry 212 is implemented by one or more special purpose electrical circuits structured to perform specific operation(s) and including one or more semiconductor-based logic devices (e.g., electrical hardware implemented by one or more transistors). For example, in some such examples, the AI accelerator circuitry 208 implements the data replication preprocessing circuitry 212. In the example of FIG. 2, the data replication preprocessing circuitry 212 preprocesses input tensors before the input tensors are read from the system memory 204 by the AI accelerator circuitry 208. For example, the data replication preprocessing circuitry 212 reformats input tensors to generate reformatted input tensors that are deeper than non-reformatted input tensors. The data replication preprocessing circuitry 212 is described further in connection with FIG. 8.

In the illustrated example of FIG. 2, the CPU 202 includes the fractional stride preprocessing circuitry 214. In the example of FIG. 2, the fractional stride preprocessing circuitry 214 is implemented by one or more instructions (e.g., software) to perform specific operations on one or more general purpose semiconductor-based electrical circuits and including one or more semiconductor-based logic devices (e.g., electrical hardware implemented by one or more transistors). In some examples, the fractional stride preprocessing circuitry 214 is implemented by one or more special purpose electrical circuits structured to perform specific operation(s) and including one or more semiconductor-based logic devices (e.g., electrical hardware implemented by one or more transistors). For example, in some such examples, the AI accelerator circuitry 208 implements the fractional stride preprocessing circuitry 214. In the example of FIG. 2, the fractional stride preprocessing circuitry 214 reformats input tensors via fractional striding using storage element pointers and sparsity. The fractional stride preprocessing circuitry 214 is described further in connection with FIG. 10.

In the illustrated example of FIG. 2, the AI accelerator circuitry 208 includes the local memory 216. The example local memory 216 is coupled to the DMA circuitry 206 and the data read circuitry 218. In the example of FIG. 2, the local memory 216 stores compressed input data (e.g., compressed input tensors, compressed activation tensors, compressed weight sets, etc.) for AI workloads as well as output data (e.g., output tensors). The local memory 216 is comparatively much smaller than the system memory 204. For example, the local memory 216 is typically between one and two megabytes (MB). In the example of FIG. 2, the local memory 216 is implemented by SRAM. In additional or alternative examples, the local memory 216 is implemented by other volatile memory (e.g., DRAM, SDRAM, RDRAM, etc.) and/or a non-volatile memory (e.g., flash memory). The example local memory 216 may additionally or alternatively be implemented by one or more DDR memories, such as DDR, DDR2, DDR3, DDR4, mDDR, etc. In the illustrated example of FIG. 2, data stored in the local memory 216 is stored as compressed data including sparse data and a corresponding sparsity bitmap.

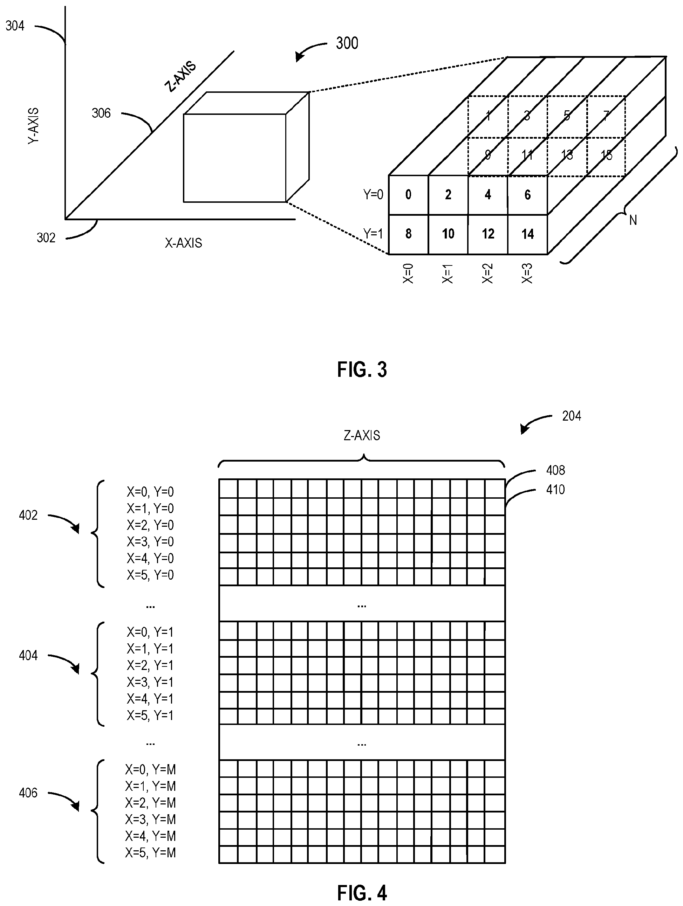

In the illustrated example of FIG. 2, the system memory 204 and/or the local memory 216 store data differently depending on the configuration of the AI accelerator circuitry 208. For example, if the compiler 210 indicates that the tensor data replication configuration is active, the system memory 204 and/or the local memory 216 store tensor data as illustrated in FIGS. 3 and 4. FIG. 3 illustrates an example tensor 300. In the illustrated example of FIG. 3, the tensor 300 is three-dimensional. Examples disclosed herein traverse the tensor 300 along an example X axis 302, an example Y axis 304, and an example Z axis 306. In some examples, the tensor 300 is stored in a compressed (e.g., sparse) format. In other examples, (e.g., when the tensor 300 is shallow), the tensor 300 is stored in an uncompressed (e.g., dense) format. In the example of FIG. 3, the tensor 300 is stored in the system memory 204 in ZXY format.

In some examples, the tensor 300 has dimensions X = 4, Y = 2, and Z = N. In some examples, the data width of each point of the tensor 300 is 8-bit. In some examples, the CPU 202 determines to store the tensor 300 in the system memory 204 in ZXY format with 16-byte alignment storage, as illustrated in example Table 1.

Table 1

| Address | | | | | | | | | | | | | | | |
|---|---|---|---|---|---|---|---|---|---|---|---|---|---|---|---|
| 0x00 | | | | | | | | | | | | | | 1 | 0 |
| 0x10 | | | | | | | | | | | | | | 3 | 2 |
| 0x20 | | | | | | | | | | | | | | 5 | 4 |
| 0x30 | | | | | | | | | | | | | | 7 | 6 |
| 0x40 | | | | | | | | | | | | | | 9 | 8 |
| 0x50 | | | | | | | | | | | | | | 11 | 10 |
| 0x60 | | | | | | | | | | | | | | 13 | 12 |
| 0x70 | | | | | | | | | | | | | | 15 | 14 |

That is, the CPU 202 traverses the tensor 300 along the ZX plane (e.g., 0, 1, 2, 3, etc.) where the Z values for each XY location is dedicated 16 bytes of the system memory 204. When the DMA circuitry 206 loads the tensor 300 and/or a portion thereof into the local memory 216, the DMA circuitry 206 similarly dedicates 16 bytes of the local memory 216 to Z values for each XY location of the tensor 300. In the illustrated example of FIG. 3, the bold data point indices correspond to data points of the XY plane for Z = 0 (e.g., the front XY plane).

FIG. 4 illustrates example tensor data stored in the system memory 204 of FIG. 2. For example, the system memory 204 stores the tensor 300 in ZXY format with 16-byte alignment storage. However, in additional or alternative examples, the system memory 204 may be (e.g., the memory being) at least one of sixteen byte aligned or thirty two byte aligned. That is, the tensor 300 is split into ZX planes that are stored consecutively. For example, the system memory 204 stores an example first ZX plane 402, an example second ZX plane 404, and an example third ZX plane 406. The example first ZX plane 402 corresponds to the tensor data of the tensor 300 when Y = 0, the example second ZX plane 404 corresponds to the tensor data of the tensor 300 when Y = 1, and the example third ZX plane 406 corresponds to the tensor data of the tensor 300 when Y = 2. While the illustrated example of FIG. 4 includes three ZX planes 402, 404, 406, examples disclosed herein can include a fewer or greater number of ZX planes (e.g., corresponding to the Y dimension of the tensor 300).

In the illustrated example of FIG. 4, when the CPU 202 stores data in the system memory 204, the CPU 202 traverses the Z axis of the tensor 300. For example, the CPU 202 stores an example first row 408 of data based on traversing the Z axis for X = 0, Y = 0. When the CPU 202 finishes traversing the Z axis, the CPU 202 increments X by 1 and traverses the Z axis (e.g., X = 1, Y = 0) to generate an example second row 410, etc. The example CPU 202 stores the data of the tensor 300 contiguously in the system memory 204 of FIG. 2. Weight kernels are also stored contiguously in the system memory 204 (not shown). For example, each weight kernel is stored as a 27x1 array of weight values.

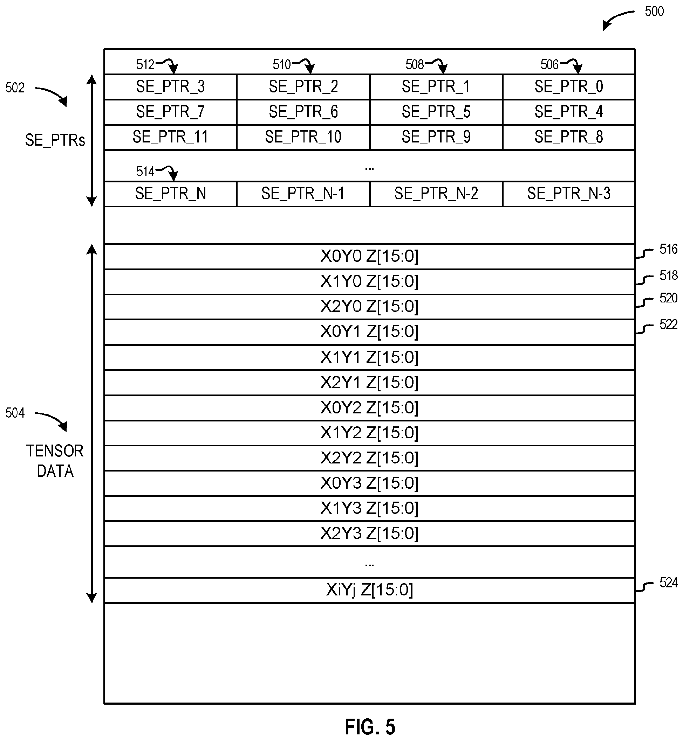

Returning to FIG. 2, as described above, the system memory 204 stores data differently depending on the configuration of the AI accelerator circuitry 208. For example, if the compiler 210 indicates that the fractional striding configuration is active, the system memory 204 stores tensor data as illustrated in FIG. 5. FIG. 5 illustrates an example memory 500 including an example pointer table 502 and corresponding tensor data 504. In some examples, the memory 500 corresponds to the system memory 204.

In the illustrated example of FIG. 5, the example pointer table 502 includes an example first storage element pointer 506 (SE_PTR_0), an example second storage element pointer 508 (SE_PTR_1), an example third storage element pointer 510 (SE_PTR_2), an example fourth storage element pointer 512 (SE_PTR_3), and an example Nth storage element pointer 514. In the example of FIG. 5, the CPU 202 has partitioned the tensor data 504 into an example first storage element 516, an example second storage element 518, an example third storage element 520, an example fourth storage element 522, and an example Nth storage element 524. Each of the storage elements represents the Z values of a tensor at an XY location of the tensor. For example, the first storage element 516 corresponds to the Z values of a tensor at a first XY location (X=0, Y=0) of the tensor.

In the illustrated example of FIG. 5, the pointer table 502 stores the start location of each of the storage elements in the memory 500. For example, the first storage element pointer 506 corresponds to the start location of the first storage element 516 and the second storage element pointer 508 corresponds to the start location of the second storage element 518. Additionally, for example, the third storage element pointer 510 corresponds to the start location of the third storage element 520 and the fourth storage element pointer 512 corresponds to the start location of the fourth storage element 522. Also, for example, the Nth storage element pointer 514 corresponds to the start location of the Nth storage element 524. As such, each of the storage elements 516, 518, 520, 522, 524 may start anywhere in the memory 500.

In the illustrated example of FIG. 5, the pointer table 502 is a dense structure stored in the memory 500 as a contiguous table where each storage element pointer occupies a portion of the memory word length of the memory 500. For example, if the memory word length of the memory 500 is 16 bytes, then, because there are four storage element pointers in each row of the pointer table 502, each of the storage elements occupies 4 bytes (e.g., 32 bits) of the memory 500. However, in other examples, the memory word length of the memory 500 may be different (e.g., 32 bytes, 64 bytes, etc.). As described above, each storage element pointer of the pointer table 502 points to an XY location in the tensor data 504. Generally, the storage elements are sized to match the memory word length of the memory 500 even if individual storage elements include less data due to sparsity. In general, the granularity of storage element pointers is based on the memory word size. In some examples, the CPU 202 stores an indication that a storage element is empty (e.g., the storage element includes only zeros).

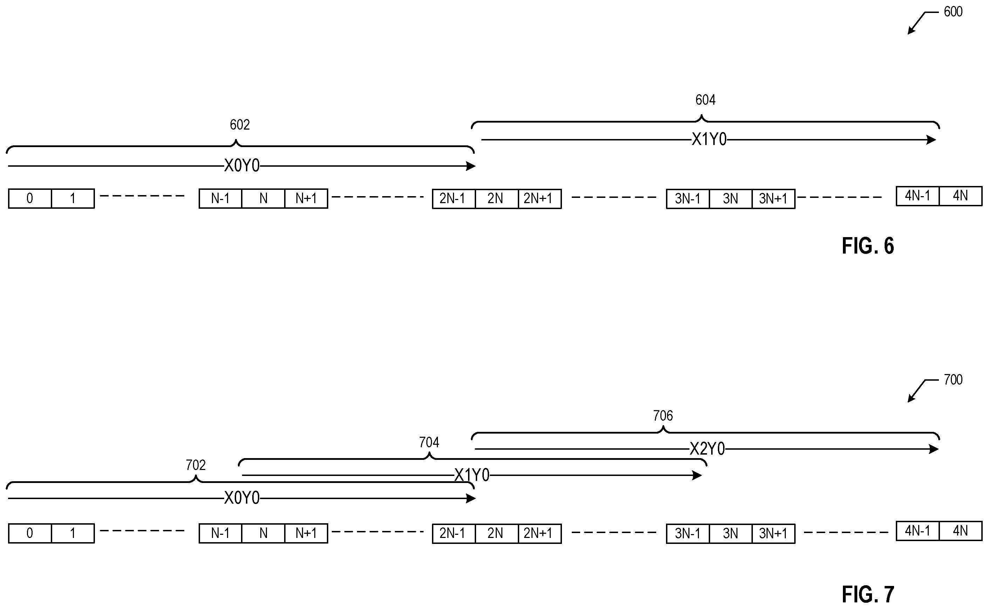

FIG. 6 is a graphical illustration 600 showing data layout in memory without storage element pointers. The graphical illustration 600 includes an example first static storage element 602 and an example second static storage element 604. Without storage element pointers, a tensor comprised of the first static storage element 602 and the second static storage element 604 is arranged as a contiguous stream of data in memory. Thus, for a tensor with 2N channels (e.g., Z=2) the data layout in memory is arranged as illustrated in FIG. 6.

FIG. 7 is a graphical illustration 700 showing data layout in memory with storage element pointers. The graphical illustration 700 includes an example first dynamic storage element 702, an example second dynamic storage element 704, and an example third dynamic storage element 706. Because storage element pointers allow the first dynamic storage element 702, the second dynamic storage element 704, and the third dynamic storage element 706 to start anywhere in memory, when the data in consecutive XY locations is repeated, storage element pointers allow an example tensor to be reformatted as deeper without replicating data. For example, with the addition of storage element pointers, because the Z values of each XY location (e.g., each of the first dynamic storage element 702, the second dynamic storage element 704, and the third dynamic storage element 706) overlaps with the previous XY location, fractional striding can be applied to increase the depth of the tensor without replicating data. The fractional stride length defines the overlap of the successive XY locations of the tensor. In the example of FIG. 7, the fractional stride of 50%.

Implementing sparsity allows the MAC circuitry 220 to reduce the number of MAC operations performed by skipping a MAC operation when either the input tensor or weight kernel is zero. As a general matter the MAC circuitry 220 performs a compute cycle when the input tensor sparsity bitmap and the weight sparsity bitmap indicate that both corresponding activations of the input tensor and weights are non-zero. As a sparsity bitmap includes 1 bit for every byte of activation or weight data, sparsity bitmaps have a 12.5% overhead when compared with dense data.

Returning to FIG. 2, the AI accelerator circuitry 208 includes the data read circuitry 218. The example data read circuitry 218 is coupled to the local memory 216 and the MAC circuitry 220. In the example of FIG. 2, the data read circuitry 218 is implemented by one or more special purpose electrical circuits structured to perform specific operation(s) and including one or more semiconductor-based logic devices (e.g., electrical hardware implemented by one or more transistors). In the example of FIG. 2, the data read circuitry 218 reads the compressed data stored in the local memory 216.

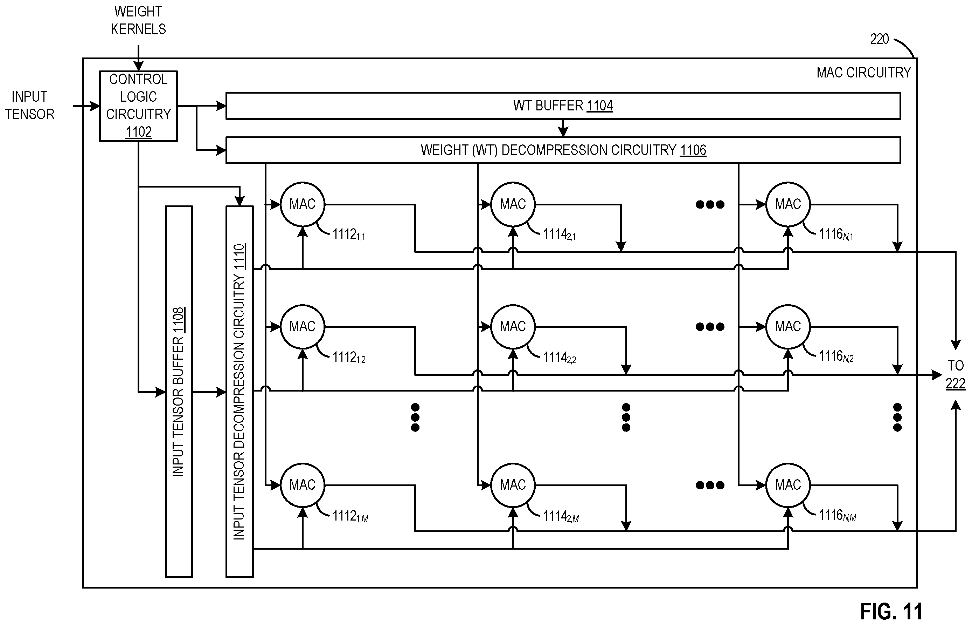

In the illustrated example of FIG. 2, the AI accelerator circuitry 208 includes the MAC circuitry 220. The example MAC circuitry 220 is coupled to the data read circuitry 218 and the data write circuitry 222. In the example of FIG. 2, the MAC circuitry 220 is implemented by one or more special purpose electrical circuits structured to perform specific operation(s) and including one or more semiconductor-based logic devices (e.g., electrical hardware implemented by one or more transistors). For example, the MAC circuitry 220 includes one or more buffers, decompression circuitry, one or more MAC circuits, and control logic circuitry. In the illustrated example of FIG. 2, the MAC circuitry 220 reads in one or more input tensors and one or more weight kernels and processes the one or more input tensors and the one or more weight sets to generate one or more output tensors. The MAC circuitry 220 is described further in connection with FIG. 11.

In the illustrated example of FIG. 2, the AI accelerator circuitry 208 includes the data write circuitry 222. The example data write circuitry 222 is coupled to the MAC circuitry 220 and the local memory 216. In the example of FIG. 2, the data write circuitry 222 is implemented by one or more special purpose electrical circuits structured to perform specific operation(s) and including one or more semiconductor-based logic devices (e.g., electrical hardware implemented by one or more transistors). In the example of FIG. 2, the data write circuitry 222 writes the result generated by the MAC circuitry 220 to the local memory 216. For example, the data write circuitry 222 writes a compressed output tensor and corresponding sparsity bitmap to the local memory 216.

FIG. 8 is a block diagram illustrating an example implementation of the example data replication preprocessing circuitry 212 of FIG. 2. As described above, the data replication preprocessing circuitry 212 generates reformatted input tensors that are deeper than non-reformatted input tensors. In the illustrated example of FIG. 8, the data replication preprocessing circuitry 212 includes example parameter determining circuitry 802, example padding circuitry 804, and example storage control circuitry 806. In the example of FIG. 8, any of the parameter determining circuitry 802, the padding circuitry 804, and/or the storage control circuitry 806 can communicate via an example communication bus 808. In examples disclosed herein, the communication bus 808 may be implemented using any suitable wired and/or wireless communication. In additional or alternative examples, the communication bus 808 includes software, machine-readable instructions, and/or communication protocols by which information is communicated among the parameter determining circuitry 802, the padding circuitry 804, and/or the storage control circuitry 806.

In the illustrated example of FIG. 8, the parameter determining circuitry 802 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 8, the parameter determining circuitry 802 determines one or more parameters of input tensors and weight kernels. For example, the parameter determining circuitry 802 selects a weight kernel to be processed and determines a width, a height, and a stride of the weight kernel. The parameter determining circuitry 802 additionally determines a width, a height, and a depth of an input tensor to be convolved with the selected weight kernel.

In the illustrated example of FIG. 8, the padding circuitry 804 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 8, the padding circuitry 804 determines whether external padding is to be applied to the input tensor. For example, the padding circuitry 804 determines whether external padding is to be applied to an input tensor based on the dimensions of the weight kernel and/or desired dimension of an output tensor. In such an example, the padding circuitry 804 determines that external padding is to be applied the input tensor if the weight kernel has a width greater than one and the desired dimensions of the output tensor are the same as those of the input tensor.

In the illustrated example of FIG. 8, external padding corresponds to the padding circuitry 804 adding one or more pads to the left and right side of the input tensor. For example, in response to determining that padding is to be applied to the input tensor, the padding circuitry 804 loads one or more pads before the first X location at the first Y location of the input tensor (X=-1, Y=0) (e.g., on the left side of the input tensor) based on the dimensions of the weight kernel. Additionally, the padding circuitry 804 loads one or more pads after the last X location (e.g., a last point) at the first Y location of the input tensor (X=i+1, Y=0) (e.g., on the right side of the input tensor). In the example of FIG. 8, an external pad applied to an input tensor is equal to the depth of the input tensor (e.g., 3 channels, 3 bytes, etc.). To load an external pad into the system memory 204, the padding circuitry 804 instructs the DMA circuitry 206 to implement one or more byte offsets when copying data of the input tensor. In examples disclosed herein, an external pad is data with null value inserted around the edges of a tensor. External pad bytes disclosed herein, if not loaded into memory, are implemented as sparsity, and do not occupy any space in memory. For example, while the padding circuitry 804 inserts external pads to the right and left of input tensors in memory, the CPU 202 instructs the AI accelerator circuitry 208 to implement external pads on the top and bottom of the input tensor via sparsity. Thus, because the top and bottom external pads are implemented by the AI accelerator circuitry 208 via sparsity, the padding circuitry 804 does not consider the height of the weight kernel when determining whether external padding is to be applied to the input tensor.

In the illustrated example of FIG. 8, the storage control circuitry 806 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 8, in response to the padding circuitry 804 determining that padding is not to be applied, the storage control circuitry 806 selects a first Y location of the input tensor to be reformatted. Additionally, the storage control circuitry 806 selects a first X location of the input tensor at the selected Y location.

In the illustrated example of FIG. 8, starting at the selected XY location, the storage control circuitry 806 copies Z values, up to the depth of the input tensor, of consecutive XY locations that overlap the width of the weight kernel that is to be convolved with the input tensor. In some examples disclosed herein, an XY location is referred to as an intersection of a first point along a first dimension of a first tensor and a first point along a second dimension of the first tensor. Additionally, in some examples disclosed herein, one or more Z values are referred to one or more values along a third dimension of the first tensor. Also, in some examples disclosed herein, consecutive XY locations that overlap the width of the weight kernel are referred to as consecutive intersections of points along the first dimension and the second dimension that overlap the width of the weight kernel.

In the illustrated example of FIG. 8, the storage control circuitry 806 loads the copied Z values consecutively in a next XY location of the reformatted tensor. For example, on a first iteration, the storage control circuitry 806 loads the copied Z values consecutively in a first XY location (X = 0, Y = 0) of the reformatted tensor. In some examples disclosed herein, loading the copied Z values consecutively in a next XY location of the reformatted tensor is referred to as loading the one or more values along the third dimension of the first tensor consecutively in a first intersection of a first point along a first dimension of a second tensor and a first point along a second dimension of the second tensor. On subsequent iterations, the storage control circuitry 806 loads the copied Z values in a next XY location of the reformatted tensor equal to the number of iterations after the initial iteration. For example, the storage control circuitry 806 may implement a counter to track the number of iterations after the initial iteration.

In the illustrated example of FIG. 8, the storage control circuitry 806 determines whether there is sufficient input tensor data outside the width of the weight kernel to generate another column of the reformatted input tensor. For example, depending on the stride of a weight kernel, more than one additional X location may be required to generate another column of the reformatted input tensor. If the stride of the weight kernel is one, then the storage control circuitry 806 determines whether there is an additional X location (e.g., an additional point) of the input tensor outside the width of the weight kernel. In response to determining that there is sufficient input tensor data outside the width of the weight kernel, the storage control circuitry 806 is to select a next X location of the input tensor at the selected Y location according to the stride of the weight kernel. In response to determining that there is not sufficient input tensor data outside the width of the weight kernel, the storage control circuitry 806 is to determine whether there is sufficient input tensor data outside the height of the weight kernel to generate another row of the reformatted input tensor. For example, depending on the stride of a weight kernel, more than one additional Y location may be required to generate another row of the reformatted input tensor.

In the illustrated example of FIG. 8, if the stride of the weight kernel is one, then the storage control circuitry 806 determines whether there is an additional Y location (e.g., an additional point) of the input tensor outside the height of the weight kernel. In response to the storage control circuitry 806 determining that there is sufficient input tensor data outside the height of the weight kernel, the storage control circuitry 806 is to select a next Y location of the input tensor according to the stride of the weight kernel. In response to the storage control circuitry 806 determining that there is not sufficient input tensor data outside the height of the weight kernel, processing proceeds to the parameter determining circuitry 802 which determines whether there is an additional weight kernel to be processed.

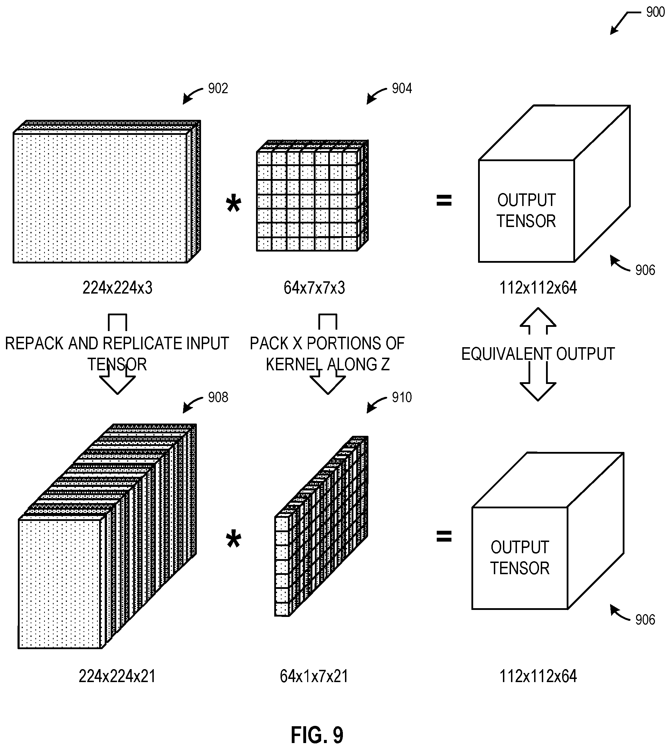

FIG. 9 is a dataflow diagram 900 illustrating example reformation of (a) a convolution of an example input tensor 902 and an example weight set 904 to determine an example output tensor 906 to (b) a convolution of an example reformatted input tensor 908 and an example reformatted weight set 910 to determine the example output tensor 906. In the example of FIG. 9, the input tensor 902 is a 224x224x3 tensor and the weight set includes 64 7x7x3 weight kernels with a stride of 2. The example output tensor 906 is a 112x112x64 tensor.

In the illustrated example of FIG. 9, according to the tensor data replication configuration, the data replication preprocessing circuitry 212 reformats the input tensor 902 and the weight set 904 to generate the reformatted input tensor 908 and the reformatted weight set 910. Although the reformatted input tensor 908 and the reformatted weight set 910 have different dimensions than the input tensor 902 and the weight set 904 (namely depth), convolving the reformatted tensors results in an equivalent output tensor with identical constants (e.g., the output tensor 906).

In the illustrated example of FIG. 9, the data replication preprocessing circuitry 212 reformats the weight kernels of the weight set 904 such that the X dimension of each of the weight kernels is repacked along the Z dimension to reformat individual weight kernels of the weight set 904 from 7x7 filters with a depth of 3 to 1x7 filters with a depth of 21 (e.g., the reformatted weight set 910). The values of the weight set 904 are not changed. In the example of FIG. 9, while the shape of the weight kernels of the weight set 904 are reformatted to the reformatted weight set 910, the manner in which the weight set 904 is stored in memory does not change. Instead, to reformat the weight set 904, the MAC circuitry 220 sequences the weight set 904 through the MAC circuits of FIG. 11 to accommodate the new dimensions of the reformatted input tensor 908.

In the illustrated example of FIG. 9, the data replication preprocessing circuitry 212 reformats the input tensor 902 to match the depth of the reformatted weight set 910. Such reformatting includes replicating some of the existing pixels and repacking such pixels along the Z dimension to match the depth of the reformatted weight set 910. As illustrated in FIG. 9, convolving the reformatted input tensor 908 with the reformatted weight set 910 yields the same output tensor (e.g., the output tensor 906) as convolving the input tensor 902 with the weight set 904 but the former convolution utilizes a deeper input tensor and therefore yield improved performance as compared to the latter convolution.

FIG. 10 is a block diagram illustrating an example implementation of the example fractional stride preprocessing circuitry 214 of FIG. 2. As described above, the fractional stride preprocessing circuitry 214 reformats input tensors via fractional striding using storage element pointers and sparsity. In the illustrated example of FIG. 10, the fractional stride preprocessing circuitry 214 includes example tensor and weight control circuitry 1002, example padding control circuitry 1004, example sparsity generation circuitry 1006, and the example pointer control circuitry 1008. In the example of FIG. 10, any of the tensor and weight control circuitry 1002, the padding control circuitry 1004, the sparsity generation circuitry 1006, and/or the pointer control circuitry 1008 can communicate via an example communication bus 1010. In examples disclosed herein, the communication bus 1010 may be implemented using any suitable wired and/or wireless communication. In additional or alternative examples, the communication bus 1010 includes software, machine-readable instructions, and/or communication protocols by which information is communicated among the tensor and weight control circuitry 1002, the padding control circuitry 1004, the sparsity generation circuitry 1006, and/or the pointer control circuitry 1008.

As described above, storage element pointers have a granularity based on the memory word size, which in the example of FIG. 10 is 16 bytes. Because input tensors to initial layers of a NN have less channels than the granularity of storage element pointers (e.g., 3 < 16), the fractional stride preprocessing circuitry 214 utilizes sparsity and input tensor manipulation to refine fractional striding thereby increasing the effective depth of input tensors.

In the illustrated example of FIG. 10, the tensor and weight control circuitry 1002 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 10, the tensor and weight control circuitry 1002 determines one or more parameters of input tensors and weight kernels. For example, the tensor and weight control circuitry 1002 selects a weight kernel to be processed and determines a width, a height, and a stride of the weight kernel. The tensor and weight control circuitry 1002 additionally determines a width, a height, and a depth of an input tensor to be convolved with the weight kernel.

In the illustrated example of FIG. 10, the tensor and weight control circuitry 1002 also replicates the selected weight kernel to generate *N* weight kernels match the number of points of an output tensor that can be generated per XY location of the reformatted input tensor. After the input tensor has been reformatted via fractional striding using storage element pointers and sparsity, the tensor and weight control circuitry 1002 offloads the input tensor, one or more weight kernels, and one or more weight sparsity bitmaps to be processed and/or stored in memory. In an example where the input tensor is shallow, the weight control circuitry 1002 offloads the input tensor as dense data.

In the illustrated example of FIG. 10, the padding control circuitry 1004 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 10, the padding control circuitry 1004 whether external padding is to be applied to the input tensor. For example, the padding control circuitry 1004 determines whether external padding is to be applied to an input tensor based on the dimensions of the weight kernel and/or desired dimension of an output tensor. In such an example, the padding control circuitry 1004 determines that external padding is to be applied to the input tensor if the weight kernel has a width greater than one and the desired dimensions of the output tensor are the same as those of the input tensor.

In the illustrated example of FIG. 10, external padding corresponds to the padding control circuitry 1004 adding one or more pads to the left and right side of the input tensor. For example, in response to determining that padding is to be applied to the input tensor, the padding control circuitry 1004 loads one or more pads before the first X location at the first Y location of the input tensor (X=-1, Y=0) (e.g., on the left side of the input tensor) based on the dimensions of the weight kemel. Additionally, the padding control circuitry 1004 loads one or more pads after the last X location (e.g., a last point) at the first Y location of the input tensor (X=i+1, Y=0) (e.g., on the right side of the input tensor). For example, for a 3x3 weight kernel having a stride of one, the padding control circuitry 1004 adds 1 external pad to the left of the XY plane and 1 external pad to the right of the XY plane. In the example of FIG. 10, an external pad applied to an input tensor is equal to the depth of the input tensor. Thus, in such an example, the padding control circuitry 1004 adds an external pad having a depth of 3 bytes to the left of the input tensor and an external pad having a depth of 3 bytes to the right of the input tensor. In another examples, for a 5x5 weight kernel having a stride of one, the padding control circuitry 1004 adds 2 externals pads to the left of the XY plane and 2 external pads to the right of the XY plane. In such an example, the padding control circuitry 1004 adds two external pads, each having a depth of 3 bytes, to the left of the input tensor and two external pads, each having a depth of 3 bytes, to the right of the input tensor.

In the illustrated example of FIG. 10, to load an external pad into the system memory 204, the padding control circuitry 1004 instructs the DMA circuitry 206 to implement one or more byte offsets when copying data of the input tensor. External pad bytes disclosed herein, if not loaded into memory, are implemented as sparsity, and do not occupy any space in memory. For example, while the padding control circuitry 1004 inserts external pads to the right and left of input tensors in memory, the CPU 202 instructs the AI accelerator circuitry 208 to implement external pads on the top and bottom of the input tensor via sparsity. Thus, because the top and bottom external pads are implemented by the AI accelerator circuitry 208 via sparsity, the padding control circuitry 1004 does not consider the height of the weight kernel when determining whether external padding is to be applied to the input tensor.

In the illustrated example of FIG. 10, the sparsity generation circuitry 1006 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 10, the sparsity generation circuitry 1006 determines whether internal padding is to be applied to the input tensor. For example, the sparsity generation circuitry 1006 determines whether internal padding is to be applied to the input tensor by dividing the granularity of storage elements by a depth of the input tensor. If the remainder of the division operation is not zero, the sparsity generation circuitry 1006 determines that internal padding is to be applied and vice versa.

In the illustrated example of FIG. 10, in response to determining that internal padding is to be applied to the input tensor, the sparsity generation circuitry 1006 is to separate Z values of each XY location of the input tensor by a number of pads. To determine the number of pads, the sparsity generation circuitry 1006 first rounds the depth of the input tensor up to the nearest multiple of four that returns a remainder of zero when divided into the granularity of storage elements. For example, if the granularity of storage elements is 16 bytes and the depth of the input tensor is 3, then the sparsity generation circuitry 1006 rounds 3 up to 4 because 4 divides evenly into 16. Then, the sparsity generation circuitry 1006 finds the difference between the rounded value and the depth of the input tensor to determine the number of pads. For example, if the granularity of storage elements is 16 and the depth of the input tensor is 3, the sparsity generation circuitry 1006 determines the number of pads to be 1 (e.g., 4 - 3 = 1). In examples disclosed herein, the length of an internal pad for an input tensor is one byte.

In the illustrated example of FIG. 10, the sparsity generation circuitry 1006 generates $N$ weight sparsity bitmaps where each weight sparsity bitmap includes a sparsity pattern offset from the start of respective weight sparsity bitmaps by the product of the number of strides of the selected weight kernel and the sum of the depth of the input tensor and the number of internal pads. In the example of FIG. 10, $N$ is equal to the number of weight kernels that match the number of points of an output tensor that can be generated per XY location of the reformatted input tensor. The offset of the respective sparsity patterns depends on the depth of the input tensor and the number of internal pads. For example, if the depth of the input tensor is 3 and the number of internal pads is 1, then the offset is equal to a product of the number of strides of the selected weight kernel and 4. In the example of FIG. 10, the sparsity pattern of each weight sparsity bitmap includes $w_K$ sets of $d$ consecutive one bits where $w_K$ is the width of the weight kernel and $d$ is the depth of the input tensor. If internal padding is applied to the input tensor, each of the $w_K$ sets are appended with one or more zero bits equal to the number of internal pads. Thus, for a weight kernel having a width of 3 and an input tensor have a depth of 3 with internal padding of 1, the sparsity pattern of each weight sparsity bitmap includes 3 sets of 3 consecutive one bits where each set is appended with one zero bit (e.g., [1, 1, 1, 0, 1, 1, 1, 0, 1, 1, 1, 0]). The total number of 1 bits generated by the sparsity generation circuitry 1006 for the N sparsity bitmaps is equal to the product of the width of the weight kernel, the height of the weight kernel, and the depth of the input tensor.

In the illustrated example of FIG. 10, the pointer control circuitry 1008 is implemented by one or more instructions (e.g., software) to perform specific operations on one or more general purpose semiconductor-based electrical circuits and including one or more semiconductor-based logic devices (e.g., electrical hardware implemented by one or more transistors). In the example of FIG. 10, the pointer control circuitry 1008 determines a fractional stride offset to apply to consecutive storage element pointers based on $N$, the depth of the input tensor, the stride of the weight kernel, and internal pad lengths if applied. For example, the pointer control circuitry 1008 determines the fractional stride offset according to equation 1 below.

$$FS_{OFFSET} = N * (NUM\_CHANNELS + PAD) * STRIDE$$

<div align="center">Equation 1</div>

In the illustrated example of FIG. 10, $N$ is equal to the number of weight kernels that match the number of points of an output tensor that can be generated per XY location of the reformatted input tensor. In one example, if a 3x3 kernel having a stride of 1 is being convolved with an input channel of depth 3, then internal pad will be of length 1. In such an example, the number of points of an output tensor that can be generated per XY location of the reformatted input tensor. As such, the fractional stride offset will be equal to 4 x (3 bytes + 1 pad byte) x 1 = 16 bytes. In the illustrated example of FIG. 10, after determining the fractional striding offset, the pointer control circuitry 1008 offsets consecutive storage element pointers by the offset.

FIG. 11 is a block diagram illustrating an example implementation of the example MAC circuitry 220 of FIG. 2. In the example of FIG. 11, the MAC circuitry 220 includes example control logic circuitry 1102, an example weight buffer 1104, example weight decompression circuitry 1106, an example input tensor buffer 1108, example input tensor decompression circuitry 1110, and an example array of MAC circuits $1112_{1,1}$ - $1112_{1,M}$, $1114_{2,1}$ - $1114_{2,M}$, and $1116_{N,1}$ - $1116_{N,M}$. In the example of FIG. 11, the control logic circuitry 1102 is implemented by one or more special purpose electrical circuits structured to perform specific operation(s) and including one or more semiconductor-based logic devices (e.g., electrical hardware implemented by one or more transistors). The example control logic circuitry 1102 is coupled to the weight buffer 1104, the weight decompression circuitry 1106, the input tensor buffer 1108, and the input tensor decompression circuitry 1110.

In the illustrated example of FIG. 11, the control logic circuitry 1102 receives one or more weight kernels and corresponding weight sparsity bitmaps. Additionally, the example control logic circuitry 1102 receives one or more input tensors and input tensor sparsity bitmaps. In examples where the input tensor is shallow, the control logic circuitry 1102 does not receive an input tensor sparsity bitmap as the input tensor is too shallow to take advantage of sparsity. In the example of FIG. 11, the control logic circuitry 1102 forwards the one or more weight kernels to the weight buffer 1104 after processing such data and forwards the corresponding weight sparsity bitmaps to the weight decompression circuitry 1106 after processing such data. Additionally, the control logic circuitry 1102 forwards the one or more input tensors to the input tensor buffer 1108 after processing such data. For later layers in a neural network (e.g., when input tensors are deeper), the control logic circuitry 1102 also forwards the corresponding input tensor sparsity bitmaps to the input tensor decompression circuitry 1110 after processing such data. In some examples, the control logic circuitry 1102 implements the data replication preprocessing circuitry 212 and/or the fractional stride preprocessing circuitry 214.

In the illustrated example of FIG. 11, each of the weight buffer 1104 and the input tensor buffer 1108 is implemented by SRAM. In additional or alternative examples, each of the weight buffer 1104 and the input tensor buffer 1108 is implemented by other volatile memory (e.g., DRAM, SDRAM, RDRAM, etc.) and/or a non-volatile memory (e.g., flash memory). In the example of FIG. 11, the weight buffer 1104 is coupled to the control logic circuitry 1102 and the weight decompression circuitry 1106.

In the illustrated example of FIG. 11, the weight decompression circuitry 1106 is coupled to the control logic circuitry 1102, the weight buffer 1104, the first column of MAC circuits $1112_{1,1}$ - $1112_{1,M}$, the second column of MAC circuits $1114_{1,1}$ - $1114_{1,M}$, and the Nth column of MAC circuits $1116_{N,1}$ - $1116_{N,M}$. In the example of FIG. 11, the weight decompression circuitry 1106 is implemented by one or more special purpose electrical circuits structured to perform specific operation(s) and including one or more semiconductor-based logic devices (e.g., electrical hardware implemented by one or more transistors). In the example of FIG. 11, the example weight decompression circuitry 1106 processes compressed weight data (e.g., sparse weight kernels and a corresponding weight sparsity bitmap) and converts the sparse weight data into dense weight data. After decompressing the compressed weight data, the weight decompression circuitry 1106 transmits the dense weight data to the first column of MAC circuits $1112_{1,1}$ - $1112_{1,M}$, the second column of MAC circuits $1114_{1,1}$ - $1114_{1,M}$, and the Nth column of MAC circuits $1116_{N,1}$ - $1116_{N,M}$.

In the illustrated example of FIG. 11, the input tensor buffer 1108 is coupled to the control logic circuitry 1102 and the input tensor decompression circuitry 1110. In the example of FIG. 11, the input tensor decompression circuitry 1110 is coupled to the control logic circuitry 1102, the input tensor buffer 1108, the first row of MAC circuits $1112_{1,1}$, $1114_{2,1}$, and $1116_{N,1}$, the second row of MAC circuits $1112_{1,2}$, $1114_{2,2}$, and $1116_{N,2}$, and the Mth row of MAC circuits $1112_{1,M}$, $1114_{2,M}$, and $1116_{N,M}$. In the example of FIG. 11, the input tensor decompression circuitry 1110 is implemented by one or more special purpose electrical circuits structured to perform specific operation(s) and including one or more semiconductor-based logic devices (e.g., electrical hardware implemented by one or more transistors). In the example of FIG. 11, the example input tensor decompression circuitry 1110 processes compressed input tensor data (e.g., a sparse input tensor and a corresponding input tensor sparsity bitmap) and converts the sparse input tensor data into dense input tensor data. After decompressing the compressed input tensor data, the input tensor decompression circuitry 1110 transmits the dense input tensor data to the first row of MAC circuits $1112_{1,1}$, $1114_{2,1}$, and $1116_{N,1}$, the second row of MAC circuits $1112_{1,2}$, $1114_{2,2}$, and $1116_{N,2}$, and the Mth row of MAC circuits $1112_{1,M}$, $1114_{2,M}$, and $1116_{N,M}$. If no input tensor sparsity bitmap is received, the input tensor decompression circuitry 1110 transmits the input tensor data to the first row of MAC circuits $1112_{1,1}$, $1114_{2,1}$, and $1116_{N,1}$, the second row of MAC circuits $1112_{1,2}$, $1114_{2,2}$, and $1116_{N,2}$, and the Mth row of MAC circuits $1112_{1,M}$, $1114_{2,M}$, and $1116_{N,M}$ as the input tensor data is already dense.

In the illustrated example of FIG. 11, each of the MAC circuits $1112_{1,1}$, $1112_{1,2}$, $1112_{1,M}$, $1114_{2,1}$, $1114_{2,2}$, $1114_{2,M}$, $1116_{N,1}$, $1116_{N,2}$, and $1116_{N,M}$ (collectively, the MAC circuits of FIG. 11) is implemented by one or more special purpose electrical circuits structured to perform specific operation(s) and including one or more semiconductor-based logic devices (e.g., electrical hardware implemented by one or more transistors). In the example of FIG. 11, each of the MAC circuits of FIG. 11 receives weight data from the weight decompression circuitry 1106 and input tensor data from the input tensor decompression circuitry 1110. Each of the MAC circuits of FIG. 11 performs a number of MAC operations per cycle. For example, each of the MAC circuits of FIG. 11 performs eight MAC operations per cycle. In the example of FIG. 11, each MAC operation performed by respective ones of the MAC circuits of FIG. 11 corresponds to each of the MAC circuits of FIG. 11 processing activation data for an XY location of the input tensor. The MAC circuits of FIG. 11 are configured to receive activation data for up to 32 channels per clock cycle, allowing for efficient utilization of the MAC circuitry 220 when channel depth of the input tensor is high (e.g., for input tensors with depth greater than or equal to 16).

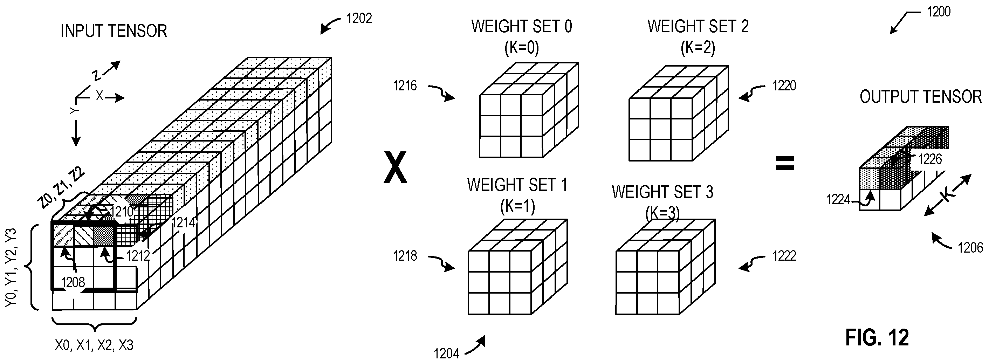

FIG. 12 is a dataflow diagram illustrating an example convolution 1200 of an example input tensor 1202 with no padding and an example set of 3x3x3 weight kernels 1204 having a stride of one to determine an example output tensor 1206. In the example of FIG. 12, the input tensor 1202 has dimensions X = 4, Y = 4, and Z = 3. The input tensor 1202 is stored in memory in Z major format, with 3 channels. In the example of FIG. 12, each XY location on the input tensor 1202 occupies a location in memory that is 16-byte aligned. Accordingly, memory after the channels of the input tensor 1202 (e.g., Z > 2) are unused bytes. In some examples no data is stored in the unused bytes while in additional or alternative examples the unused bytes may include data with a corresponding sparsity bitmap of zero. In the example of FIG. 12, there are 13 unused bytes in memory per XY location as a result of the 16-byte alignment (e.g., 16 - 3 = 13).

In the illustrated example of FIG. 12, the input tensor 1202 includes first Z values 1208 at a first XY location of the input tensor 1202, second Z values 1210 at a second XY location of the input tensor 1202, third Z values 1212 at a third XY location of the input tensor 1202, and fourth Z values 1214 at a fourth XY location of the input tensor 1202. In the example of FIG. 12, the set of 3x3x3 weight kernels 1204 includes an example first weight kernel 1216, an example second weight kernel 1218, an example third weight kernel 1220, and an example fourth weight kernel 1222. Each of the first weight kernel 1216, the second weight kernel 1218, the third weight kernel 1220, and the fourth weight kernel 1222 has a depth of 3. As such, each of the first weight kernel 1216, the second weight kernel 1218, the third weight kernel 1220, and the fourth weight kernel 1222 occupies 27 bytes (e.g., $X_{KERNEL} * Y_{KERNEL} *$ NUM_CHANNELS) in memory. Thus, MAC circuitry performs 27 MAC operations to generate each of the output points 1224, 1226 of the output tensor 1206. In the example of FIG. 12, each the first weight kernel 1216, the second weight kernel 1218, the third weight kernel 1220, and the fourth weight kernel 1222 is used four times to generate a single channel (e.g., a step in K) in the output tensor 1206.

In the example of FIG. 12, each of the first weight kernel 1216, the second weight kernel 1218, the third weight kernel 1220, and the fourth weight kernel 1222 is stored contiguously in memory. That is, each of the first weight kernel 1216, the second weight kernel 1218, the third weight kernel 1220, and the fourth weight kernel 1222 are stored in memory as a 27x1 array. In the example of FIG. 12, the first weight kernel 1216, the second weight kernel 1218, the third weight kernel 1220, and the fourth weight kernel 1222 are depicted as 3x3x3 tensors to illustrate how the set of 3x3x3 weight kernels 1204 map to the input tensor 1202.

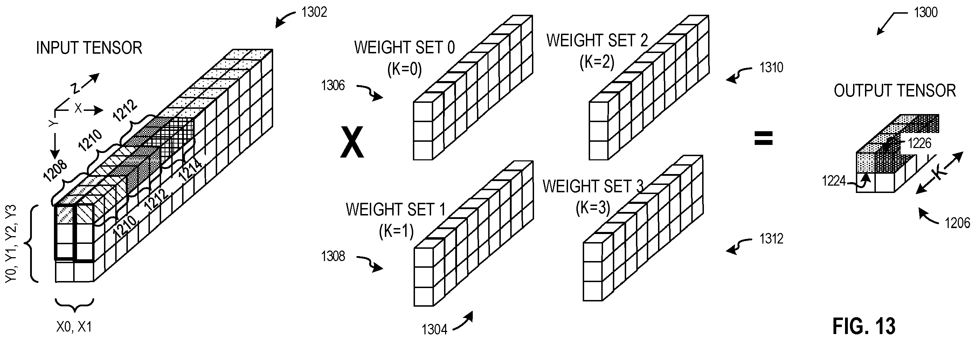

FIG. 13 is a dataflow diagram illustrating an example convolution 1300 of an example reformatted input tensor 1302 with no padding and an example set of reformatted 1x3x9 weight kernels 1304 having a stride of one to determine the example output tensor 1206 of FIG. 12. In the example of FIG. 13, the reformatted input tensor 1302 has dimensions X = 2, Y = 4, and Z = 9. The Z dimension of the reformatted input tensor 1302 can be determined as the product of the width of the first weight kernel 1216 and the number of channels of the input tensor 1202 (e.g., $Z_{REFORMATTED} = X_{KERNEL} *$ NUM_CHANNELS). In the example of FIG. 13, each XY location on the reformatted input tensor 1302 occupies a location in memory that is 16-byte aligned. Accordingly, memory after the channels of the reformatted input tensor 1302 (e.g., Z > 8) are unused bytes. In the example of FIG. 13, the data replication preprocessing circuitry 212 reformats the input tensor 1202 according to the tensor data replication configuration to generate the reformatted input tensor 1302.

In the illustrated example of FIG. 13, the set of reformatted 1x3x9 weight kernels 1304 includes an example first weight kernel 1306, an example second weight kernel 1308, an example third weight kernel 1310, and an example fourth weight kernel 1312. In the example of FIG. 13, the input tensor 1202 is reformatted so that the dimensions of respective weight kernels can be changed from $X_{KERNEL} * Y_{KERNEL}$ to $1 * Y_{KERNEL}$. For example, each of the first weight kernel 1306, the second weight kernel 1308, the third weight kernel 1310, and the fourth weight kernel 1312 is a 1x3 kernel with a depth of 9.

In the example of FIG. 13, while the shape of respective ones of the set of 3x3x3 weight kernels 1204 are reformatted to the set of reformatted 1x3x9 weight kernels 1304, the manner in which the set of 3x3x3 weight kernels 1204 is stored in memory does not change. Instead, to reformat the set of 3x3x3 weight kernels 1204, the MAC circuitry 220 sequences the set of 3x3x3 weight kernels 1204 through the MAC circuits of FIG. 11 to accommodate the new dimensions of the reformatted input tensor 1302.

In the illustrated example of FIG. 13, the parameter determining circuitry 802 determines a width (e.g., 3), a height (e.g., 3), and a stride (e.g., 1) of the first weight kernel 1216. The parameter determining circuitry 802 additionally determines a width (e.g., 4), a height (e.g., 4), and a depth (e.g., 3) of the input tensor 1202. Subsequently, the storage control circuitry 806 selects the first Y location of the input tensor 1202 (e.g., Y = 0). The storage control circuitry 806 additionally selects the first X location of the input tensor 1202 at the selected Y location (e.g., X = 0, Y = 0).

In the illustrated example of FIG. 13, starting at the selected XY location, the storage control circuitry 806 copies one or more Z values, up to the depth of the input tensor 1202, of consecutive XY locations that overlap the width of the first weight kernel 1216. For example, as the storage control circuitry 806 is starting at the first XY location of the input tensor 1202 (X = 0, Y = 0) and the width of the first weight kernel 1216 is 3, the storage control circuitry 806 copies the first Z values 1208, the second Z values 1210, and the third Z values 1212. The storage control circuitry 806 loads the copied one or more Z values in a next XY location of the reformatted input tensor 1302. If this is the first load operation, the storage control circuitry 806 loads the copied one or more Z values in the first XY location of the reformatted input tensor 1302 (X = 0, Y = 0) and increment the X location for subsequent iterations.

Thus, the storage control circuitry 806 loads the first Z values 1208 in the first XY location of the reformatted input tensor 1302 (X = 0, Y = 0), followed by the second Z values 1210, and then the third Z values 1212. The storage control circuitry 806 then determines if there is sufficient data of the input tensor 1202 (e.g., an additional X location) outside the width of the first weight kernel 1216. As the fourth XY location of the input tensor 1202 (X = 3, Y = 0) is outside the width of the first weight kernel 1216, the storage control circuitry 806 selects the next X location of the input tensor 1202 at the selected Y location according to the stride of the first weight kernel 1216. Because the stride of the first weight kernel 1216 is one, the storage control circuitry 806 selects the second XY location of the input tensor 1202 (X = 1, Y = 0).

In the illustrated example of FIG. 13, the storage control circuitry 806 copies one or more Z values, up to the depth of the input tensor 1202, of consecutive XY locations that overlap the width of the first weight kernel 1216 starting at the selected XY location. For example, as the storage control circuitry 806 is starting at the second XY location of the input tensor 1202 (X = 1, Y = 0) and the width of the first weight kernel 1216 is 3, the storage control circuitry 806 copies the second Z values 1210, the third Z values 1212, and the fourth Z values 1214. The storage control circuitry 806 loads the copied one or more Z values in a next XY location of the reformatted input tensor 1302.

Thus, for example, because the previously loaded XY location was the first XY location of the reformatted input tensor 1302, the storage control circuitry 806 loads the second Z values 1210 in the second XY location of the reformatted input tensor 1302 (X = 1, Y = 0), followed by the third Z values 1212, and then the fourth Z values 1214. Processing continues similarly for the vertical strides of the first weight kernel 1216.

As illustrated in the example of FIG. 13, for the set of 3x3x3 weight kernels 1204 having a stride of one, the reformatted input tensor 1302 has a smaller memory footprint when compared to input tensor 1202. For example, there is a memory footprint reduction by a factor of X/(X+2). In some examples (e.g., for input layers to a model), X is large in practice, providing limited reduction of memory footprint. Additionally, for the set of 3x3x3 weight kernels 1204 having a stride of one, the reformatted input tensor 1302 provides a 33% reduction in the number of input tensor memory reads (e.g., convolution is done with a 3x1 kernel instead of a 3x3 kemel). The reduced number of memory reads results in less data movement and less memory bandwidth requirements, both of which result in lower power consumption and improved performance. As such, the data replication preprocessing circuitry 212 improves performance for operations to generate the output tensor 1206. The data replication preprocessing circuitry 212 is applicable to all kernel sizes, where the width (e.g., $X_{KERNEL}$) of the weight kernel is changed to 1 and the Z dimension of the reformatted input tensor is changed to the product of the width of the weight kernel and the number of channels of the input tensor (e.g., $Z_{REFORMATTED} = X_{KERNEL}*NUM\_CHANNELS$).

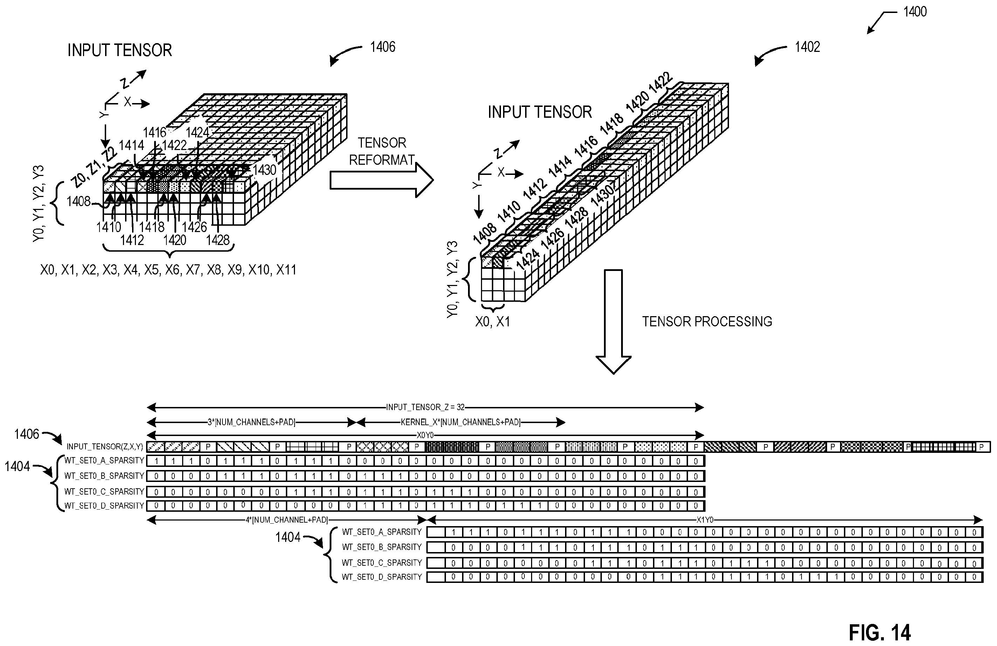

FIG. 14 is a dataflow diagram illustrating an example convolution 1400 of an example reformatted input tensor 1402 with no padding and an example 3x3x3 weight kernel having a stride of one and one or more weight sparsity bitmaps 1404 to facilitate refined fractional striding. In the example of FIG. 14, the fractional stride preprocessing circuitry 214 repurposes weight sparsity to refine the fractional stride and allow activations of input tensors to be selected at a granularity of 4 bytes. By combining sparsity with storage element pointers, the fractional stride preprocessing circuitry 214 generates the reformatted input tensor 1402 from an example input tensor 1406. In the example of FIG. 14, the input tensor 1406 has dimensions X = 12, Y = 4, and Z = 3.

In the illustrated example of FIG. 14, the input tensor 1406 includes first Z values 1408 at a first XY location of the input tensor 1406, second Z values 1410 at a second XY location of the input tensor 1406, third Z values 1412 at a third XY location of the input tensor 1406, and fourth Z values 1414 at a fourth XY location of the input tensor 1406. The input tensor 1406 also includes fifth Z values 1416 at a fifth XY location of the input tensor 1406, sixth Z values 1418 at a sixth XY location of the input tensor 1406, seventh Z values 1420 at a seventh XY location of the input tensor 1406, and eighth Z values 1422 at an eight XY location of the input tensor 1406. Additionally, the input tensor 1406 includes ninth Z values 1424 at a ninth XY location of the input tensor 1406, tenth Z values 1426 at a tenth XY location of the input tensor 1406, eleventh Z values 1428 at an eleventh XY location of the input tensor 1406, and twelfth Z values 1430 at a twelfth XY location of the input tensor 1406.

In the illustrated example of FIG. 14, the sparsity generation circuitry 1006 determines whether internal padding is to be applied to the input tensor 1406. For example, the sparsity generation circuitry 1006 determines whether internal padding is to be applied to the input tensor 1406 by dividing the granularity of storage elements by a depth of the input tensor 1406. If the remainder of the division operation is not zero, the sparsity generation circuitry 1006 determines that internal padding is to be applied and vice versa.

In the illustrated example of FIG. 14, in response to determining that internal padding is to be applied to the input tensor 1406, the sparsity generation circuitry 1006 is to separate Z values of each XY location of the input tensor 1406 by a number of pads. To determine the number of pads, the sparsity generation circuitry 1006 first rounds the depth of the input tensor 1406 up to the nearest multiple of four that returns a remainder of zero when divided into the granularity of the storage elements (e.g., 16). Then, the sparsity generation circuitry 1006 finds the difference between the rounded value and the depth of the input tensor 1406 to determine the number of pads.

In the illustrated example of FIG. 14, the granularity of storage elements is 16 and the depth of the input tensor 1406 is 3. As such, the sparsity generation circuitry 1006 determines the number of pads to be 1 (e.g., 4 - 3 = 1). In examples disclosed herein, the length of an internal pad for an input tensor is one byte. Thus, the 3 channels of the input tensor 1406 are internally padded out to four bytes to align groups of three channels to the granularity of the storage element (e.g., 4 x (3 channel bytes + 1 pad byte) = 16 bytes). The internal pad byte is not processed as the weight sparsity bitmap is zero for the internal pad byte.

In the illustrated example of FIG. 14, the tensor and weight control circuitry 1002 replicates each weight kernel that is to be convolved with the input tensor 1406 to generate N weight kernels for each weight kernel where N matches the number of points of an output tensor that can be generated per XY location of the reformatted input tensor 1402. In the example of FIG. 14, the MAC circuitry 220 can generate 4 points of an output tensor per XY location of the reformatted input tensor 1402. For example, the MAC circuitry 220 generates a first point of the output tensor based on the first Z values 1408, the second Z values 1410, and the third Z values 1412; a second point of the output tensor based on the second Z values 1410, the third Z values 1412, and the fourth Z values 1414; a third point of the output tensor based on the third Z values 1412, the fourth Z values 1414, and the fifth Z values 1416; and a fourth point of the output tensor based on the fourth Z values 1414, the fifth Z values 1416, and the sixth Z values 1418. Thus, the tensor and weight control circuitry 1002 replicates each weight kernel to generate 4 weight kernels for each weight kernel. Additionally, the sparsity generation circuitry 1006 generates the one or more weight sparsity bitmaps 1404 where each weight sparsity bitmap includes a different weight sparsity pattern (e.g., WEIGHT_SET0_A, WEIGHT_SET0_B, WEIGHT_SET0_C, WEIGHT_SET0_D).

In the illustrated example of FIG. 14, the one or more weight sparsity bitmaps 1404 include $N$ weight sparsity bitmaps. In the example of FIG. 14, the sparsity generation circuitry 1006 generates the one or more weight sparsity bitmaps 1404 where each weight sparsity bitmap includes a sparsity pattern offset from the start of respective weight sparsity bitmaps by the product of the number of strides of the selected weight kernel and the sum of the depth of the input tensor 1406 and the number of internal pads. In the example of FIG. 14, the depth of the input tensor 1406 is 3 and the number of internal pads is 1. Thus, in the example of FIG. 14, respective sparsity patterns are offset by the product of the number of strides of the selected weight kernel and 4.

In the example of FIG. 14, the sparsity pattern of each weight sparsity bitmap includes $w_K$ sets of $d$ consecutive one bits where $w_K$ is the width of the weight kernel and $d$ is the depth of the input tensor. As internal padding is applied to the input tensor 1406, the sparsity generation circuitry 1006 appends each of the $w_K$ sets with one zero bits to match the number of internal pads. As described above, total number of 1 bits generated by the sparsity generation circuitry 1006 for the $N$ sparsity bitmaps is equal to the product of the width of the weight kernel, the height of the weight kernel, and the depth of the input tensor. For a convolution of the 3x3x3 weight kernel having a stride of one and the input tensor 1406 of FIG. 14, the sparsity generation circuitry 1006 replicates a first one of the one or more weight sparsity bitmaps 1404 (e.g., WEIGHT_SET0_A) a number of times equal to the height of the weight kemel. Thus, the sparsity generation circuitry 1006 replicates a first one of the one or more weight sparsity bitmaps 1404 three times. As such, the replicated weight sparsity bitmaps include 96 bits total where each weight sparsity bitmap includes 32 bits. Each of the weight sparsity bitmaps includes 9 one bits and 23 zero bits. Accordingly, the replicated weight sparsity bitmaps include 27 one bits total and 69 zero bits total.

In the illustrated example of FIG. 14, the pointer control circuitry 1008 determines a fractional stride offset to apply to consecutive storage element pointers based on the depth of the input tensor 1406, the stride of the selected weight kernel, and internal pad lengths if applied. For example, the pointer control circuitry 1008 determines the fractional stride offset according to equation 1 above. In the example of FIG. 14, after determining the fractional striding offset, the pointer control circuitry 1008 offsets consecutive storage element pointers by the offset.

With the channels of the input tensor 1406 aligned with the granularity of the storage element and the fractional stride offset applied, the MAC circuits of FIG. 11 process the activations of the input tensor 1406 with the different weight sparsity bitmaps to select the desired input activations for each convolution. For example, the combined sparsity and storage elements pointers of the fractional stride preprocessing circuitry 214 cause the MAC circuits of FIG. 11 to processes the input tensor 1406 as a 32 channel input tensor, effectively reformatting the input tensor 1406 to the reformatted input tensor 1402. Additionally, the combined sparsity and storage element pointers of the fractional stride preprocessing circuitry 214 cause MAC circuits of FIG. 11 to processes the 3x3x3 weight kernel as a 1x3x9 weight kemel. For example, the one or more weight sparsity bitmaps 1404 select the desired bytes of the input tensor 1406 and the fractional stride of 50% is provided using overlapping storage elements. The depth of the reformatted input tensor 1402 can be determined via equation 2 below. Equation 2 is applicable to all kernel sizes

$$D_{REFORMATTED} = ROUND\_UPTO\_NEAREST\_16(3 * [NUM\_CHANNELS + PAD] * STRIDE$$
$$+ X_{KERNEL} * [NUM\_CHANNELS + PAD])$$

Equation 2

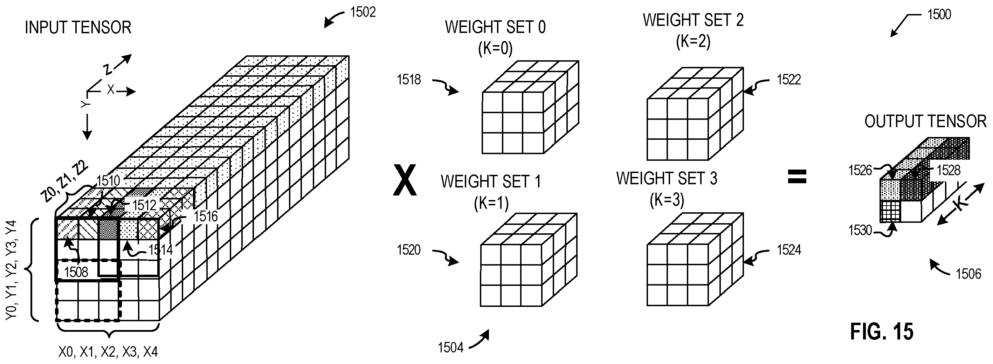

FIG. 15 is a dataflow diagram illustrating an example convolution 1500 of an example input tensor 1502 with no padding and an example set of 3x3x3 weight kernels 1504 having a stride of two to determine an example output tensor 1506. In the example of FIG. 15, the input tensor 1502 has dimensions X = 5, Y = 5, and Z = 3. The input tensor 1502 is stored in memory in Z major format, with 3 channels. In the example of FIG. 15, each XY location on the input tensor 1502 occupies a location in memory that is 16-byte aligned. Accordingly, memory after the channels of the input tensor 1502 (e.g., Z > 2) are unused bytes. In some examples no data is stored in the unused bytes while in additional or alternative examples the unused bytes may include data with a corresponding sparsity bitmap of zero. In the example of FIG. 15, there are 13 unused bytes in memory per XY location as a result of the 16-byte alignment (e.g., 16 - 3 = 13).

In the illustrated example of FIG. 15, the input tensor 1502 includes first Z values 1508 at a first XY location of the input tensor 1502, second Z values 1510 at a second XY location of the input tensor 1502, third Z values 1512 at a third XY location of the input tensor 1502, fourth Z values 1514 at a fourth XY location of the input tensor 1502, and fifth Z values 1516 at a fifth XY location of the input tensor 1502. In the example of FIG. 15, the set of 3x3x3 weight kernels 1504 includes an example first weight kernel 1518, an example second weight kernel 1520, an example third weight kernel 1522, and an example fourth weight kernel 1524. Each of the first weight kernel 1518, the second weight kernel 1520, the third weight kernel 1522, and the fourth weight kernel 1524 has a depth of 3. As such, each of the first weight kernel 1518, the second weight kernel 1520, the third weight kernel 1522, and the fourth weight kernel 1524 occupies 27 bytes (e.g., $X_{KERNEL}$ * $Y_{KERNEL}$ * NUM_CHANNELS) in memory. Thus, MAC circuitry performs 27 MAC operations to generate each of the output points 1526, 1528, 1530 of the output tensor 1506. In the example of FIG. 15, each the first weight kernel 1518, the second weight kernel 1520, the third weight kernel 1522, and the fourth weight kernel 1524 is used four times to generate a single channel (e.g., a step in K) in the output tensor 1506.

In the example of FIG. 15, each of the first weight kernel 1518, the second weight kernel 1520, the third weight kernel 1522, and the fourth weight kernel 1524 is stored contiguously in memory. That is, each of the first weight kernel 1518, the second weight kernel 1520, the third weight kernel 1522, and the fourth weight kernel 1524 are stored in memory as a 27x1 array. In the example of FIG. 15, the first weight kernel 1518, the second weight kernel 1520, the third weight kernel 1522, and the fourth weight kernel 1524 are depicted as 3x3x3 tensors to illustrate how the set of 3x3x3 weight kernels 1504 map to the input tensor 1502.

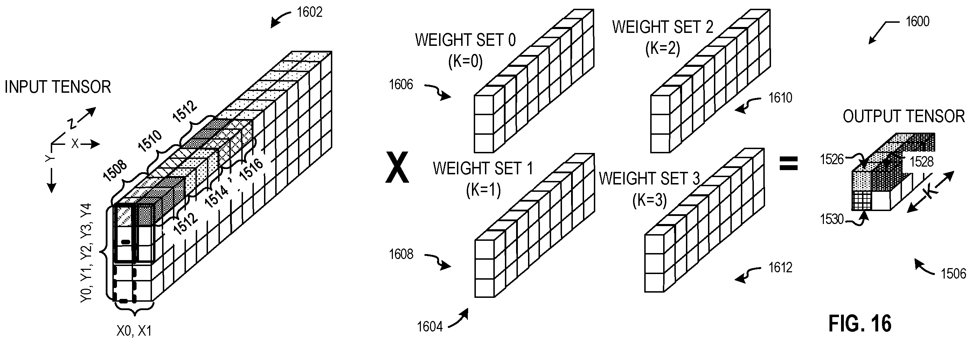

FIG. 16 is a dataflow diagram illustrating an example convolution 1600 of an example reformatted input tensor 1602 with no padding and an example set of reformatted 1x3x9 weight kernels 1604 having a stride of two to determine the example output tensor 1506 of FIG. 15. In the example of FIG. 16, the reformatted input tensor 1602 has dimensions X = 2, Y = 5, and Z = 9. The Z dimension of the reformatted input tensor 1602 can be determined as the product of the width of the first weight kernel 1518 and the number of channels of the input tensor 1502 (e.g., $Z_{REFORMATTED} = X_{KERNEL}$ * NUM_CHANNELS). In the example of FIG. 16, each XY location on the reformatted input tensor 1602 occupies a location in memory that is 16-byte aligned. Accordingly, memory after the channels of the reformatted input tensor 1602 (e.g., Z > 8) are unused bytes. In the example of FIG. 16, the data replication preprocessing circuitry 212 reformats the input tensor 1502 according to the tensor data replication configuration to generate the reformatted input tensor 1602.

In the illustrated example of FIG. 16, the set of reformatted 1x3x9 weight kernels 1604 includes an example first weight kernel 1606, an example second weight kernel 1608, an example third weight kernel 1610, and an example fourth weight kernel 1612. In the example of FIG. 16, the input tensor 1502 is reformatted so that the dimensions of respective weight kernels can be changed from $X_{KERNEL}$ * $Y_{KERNEL}$ to $1$ * $Y_{KERNEL}$. For example, each of the first weight kernel 1606, the second weight kernel 1608, the third weight kernel 1610, and the fourth weight kernel 1612 is a 1x3 kernel with a depth of 9.

In the example of FIG. 16, while the shape of respective ones of the set of 3x3x3 weight kernels 1504 are reformatted to the set of reformatted 1x3x9 weight kernels 1604, the manner in which the set of 3x3x3 weight kernels 1504 is stored in memory does not change. Instead, to reformat the set of 3x3x3 weight kernels 1504, the MAC circuitry 220 sequences the set of 3x3x3 weight kernels 1504 through the MAC circuits of FIG. 11 to accommodate the new dimensions of the reformatted input tensor 1602.

In the illustrated example of FIG. 16, the parameter determining circuitry 802 determines a width (e.g., 3), a height (e.g., 3), and a stride (e.g., 2) of the first weight kernel 1518. The parameter determining circuitry 802 additionally determines a width (e.g., 5), a height (e.g., 5), and a depth (e.g., 3) of the input tensor 1502. Subsequently, the storage control circuitry 806 selects the first Y location of the input tensor 1502 (e.g., Y = 0). The storage control circuitry 806 additionally selects the first X location of the input tensor 1502 at the selected Y location (e.g., X = 0, Y = 0).

In the illustrated example of FIG. 16, starting at the selected XY location, the storage control circuitry 806 copies one or more Z values, up to the depth of the input tensor 1502, of consecutive XY locations that overlap the width of the first weight kernel 1518. For example, as the storage control circuitry 806 is starting at the first XY location of the input tensor 1502 (X = 0, Y = 0) and the width of the first weight kernel 1518 is 3, the storage control circuitry 806 copies the first Z values 1508, the second Z values 1510, and the third Z values 1512. The storage control circuitry 806 loads the copied one or more Z values in a next XY location of the reformatted input tensor 1602. If this is the first load operation, the storage control circuitry 806 loads the copied one or more Z values in the first XY location of the reformatted input tensor 1602 (X = 0, Y = 0) and increment the X location for subsequent iterations.

Thus, the storage control circuitry 806 loads the first Z values 1508 in the first XY location of the reformatted input tensor 1602 (X = 0, Y = 0), followed by the second Z values 1510, and then the third Z values 1512. The storage control circuitry 806 then determines if there is sufficient data of the input tensor 1502 (e.g., an additional X location) outside the width of the first weight kernel 1518. As the fourth XY location of the input tensor 1502 (X = 3, Y = 0) and the fifth XY location of the input tensor 1502 (X = 4, Y = 0) are outside the width of the first weight kernel 1518, the storage control circuitry 806 selects the next X location of the input tensor 1502 at the selected Y location according to the stride of the first weight kernel 1518. Because the stride of the first weight kernel 1518 is two, the storage control circuitry 806 selects the third XY location of the input tensor 1502 (X = 2, Y = 0).

In the illustrated example of FIG. 16, the storage control circuitry 806 copies one or more Z values, up to the depth of the input tensor 1502, of consecutive XY locations that overlap the width of the first weight kernel 1518 starting at the selected XY location. For example, as the storage control circuitry 806 is starting at the third XY location of the input tensor 1502 (X = 2, Y = 0) and the width of the first weight kernel 1518 is 3, the storage control circuitry 806 copies the third Z values 1512, the fourth Z values 1514, and the fifth Z values 1516. The storage control circuitry 806 loads the copied one or more Z values in a next XY location of the reformatted input tensor 1602.

Thus, for example, because the previously loaded XY location was the first XY location of the reformatted input tensor 1602, the storage control circuitry 806 loads the third Z values 1512 in the second XY location of the reformatted input tensor 1602 (X = 1, Y = 0), followed by the fourth Z values 1514, and then the fifth Z values 1516. The storage control circuitry 806 then determines if there is sufficient data of the input tensor 1502 (e.g., an additional X location) outside the width of the first weight kernel 1518. As there are no X locations outside the width of the first weight kernel 1518, the storage control circuitry 806 determines whether there is sufficient data of the input tensor 1502 (e.g., additional Y locations) outside the height of the first weight kernel 1518. As the sixteenth XY location of the input tensor 1502 (X = 0, Y = 4) and the twenty first XY location of the input tensor 1502 (X = 0, Y = 5) are outside the height of the first weight kernel 1518, the storage control circuitry 806 selects the next Y location of the input tensor 1502 according to the stride of the first weight kernel 1518. Because the stride of the first weight kernel 1518 is two, the storage control circuitry 806 selects the sixteenth XY location of the input tensor 1502 (X = 0, Y = 4). The storage control circuitry 806 then selects the first X location of the input tensor 1502 at the selected Y location of the input tensor (X = 0, Y = 0) and processing continues similarly as described above.

As illustrated in the example of FIG. 16, for the set of 3x3x3 weight kernels 1504 having a stride of two, the reformatted input tensor 1602 has a smaller memory footprint when compared to input tensor 1502. For example, there is a memory footprint reduction by a factor of X/(2X+1). In the example of FIG. 16, the memory footprint is reduced by about 50%. Additionally, the memory footprint of the reformatted input tensor 1602 may be further reduced. For example, if the MAC circuitry 220 is configured to perform convolution with independent X stride and independent Y stride, the MAC circuitry 220 can stride one across the reformatted input tensor 1602 and stride two down the reformatted input tensor 1602. As such, the data replication preprocessing circuitry 212 improves performance for operations to generate the output tensor 1506. The data replication preprocessing circuitry 212 is applicable to all kernel sizes, where the width (e.g., $X_{KERNEL}$) of the weight kernel is changed to 1 and the Z dimension of the reformatted input tensor is changed to the product of the width of the weight kernel and the number of channels of the input tensor (e.g., $Z_{REFORMATTED} = X_{KERNEL}^{*}$-NUM_CHANNELS).

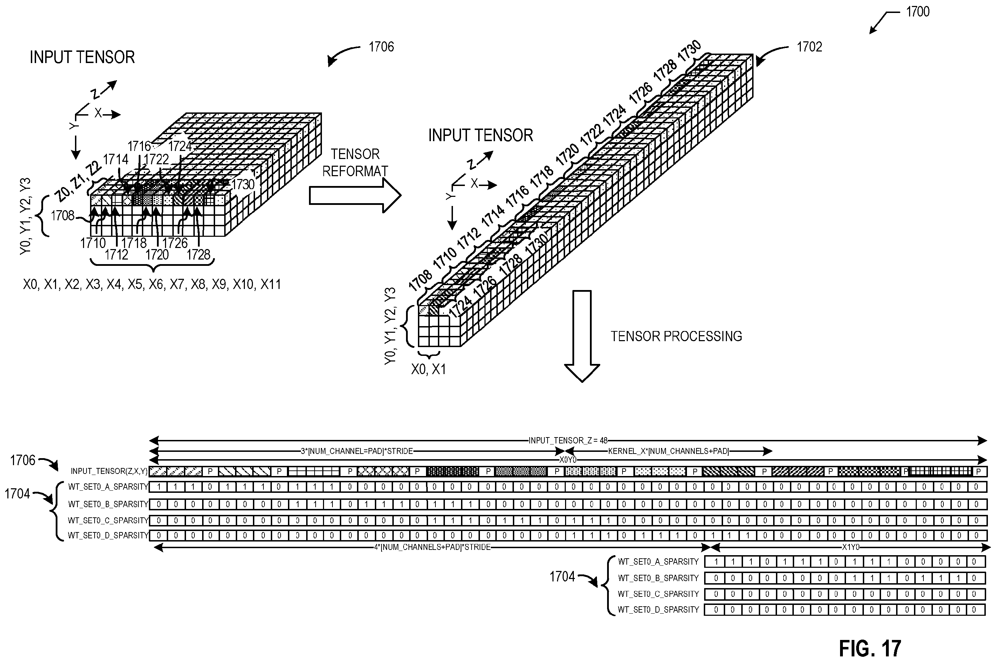

FIG. 17 is a dataflow diagram illustrating an example convolution 1700 of an example reformatted input tensor 1702 with no padding and an example 3x3x3 weight kernel having a stride of two and one or more weight sparsity bitmaps 1704 to facilitate refined fractional striding. In the example of FIG. 17, the fractional stride preprocessing circuitry 214 repurposes weight sparsity to refine the fractional stride and allow activations of input tensors to be selected at a granularity of 4 bytes. By combining sparsity with storage element pointers, the fractional stride preprocessing circuitry 214 generates the reformatted input tensor 1702 from an example input tensor 1706. In the example of FIG. 17, the input tensor 1706 has dimensions X = 12, Y = 4, and Z = 3.

In the illustrated example of FIG. 17, the input tensor 1706 includes first Z values 1708 at a first XY location of the input tensor 1706, second Z values 1710 at a second XY location of the input tensor 1706, third Z values 1712 at a third XY location of the input tensor 1706, and fourth Z values 1714 at a fourth XY location of the input tensor 1706. The input tensor 1706 also includes fifth Z values 1716 at a fifth XY location of the input tensor 1706, sixth Z values 1718 at a sixth XY location of the input tensor 1706, seventh Z values 1720 at a seventh XY location of the input tensor 1706, and eighth Z values 1722 at an eight XY location of the input tensor 1706. Additionally, the input tensor 1706 includes ninth Z values 1724 at a ninth XY location of the input tensor 1706, tenth Z values 1726 at a tenth XY location of the input tensor 1706, eleventh Z values 1728 at an eleventh XY location of the input tensor 1706, and twelfth Z values 1730 at a twelfth XY location of the input tensor 1706.

In the illustrated example of FIG. 17, the sparsity generation circuitry 1006 determines whether internal padding is to be applied to the input tensor 1706. For example, the sparsity generation circuitry 1006 determines whether internal padding is to be applied to the input tensor 1706 by dividing the granularity of storage elements by a depth of the input tensor 1706. If the remainder of the division operation is not zero, the sparsity generation circuitry 1006 determines that internal padding is to be applied and vice versa.

In the illustrated example of FIG. 17, in response to determining that internal padding is to be applied to the input tensor 1706, the sparsity generation circuitry 1006 is to separate Z values of each XY location of the input tensor 1706 by a number of pads. To determine the number of pads, the sparsity generation circuitry 1006 first rounds the depth of the input tensor 1706 up to the nearest multiple of four that returns a remainder of zero when divided into the granularity of the storage elements (e.g., 16). Then, the sparsity generation circuitry 1006 finds the difference between the rounded value and the depth of the input tensor 1706 to determine the number of pads.

In the illustrated example of FIG. 17, the granularity of storage elements is 16 and the depth of the input tensor 1706 is 3. As such, the sparsity generation circuitry 1006 determines the number of pads to be 1 (e.g., 4 - 3 = 1). In examples disclosed herein, the length of an internal pad for an input tensor is one byte. Thus, the 3 channels of the input tensor 1706 are internally padded out to four bytes to align groups of three channels to the granularity of the storage element (e.g., 4 x (3 channel bytes + 1 pad byte) = 16 bytes). The internal pad byte is not processed as the weight sparsity bitmap is zero for the internal pad byte.

In the illustrated example of FIG. 17, the tensor and weight control circuitry 1002 replicates each weight kernel that is to be convolved with the input tensor 1706 to generate N weight kernels for each weight kernel where N matches the number of points of an output tensor that can be generated per XY location of the reformatted input tensor 1402. In the example of FIG. 17, the MAC circuitry 220 can generate 4 points of an output tensor per XY location of the reformatted input tensor 1702. Thus, the tensor and weight control circuitry 1002 replicates each weight kernel to generate 4 weight kernels for each weight kernel. Additionally, the sparsity generation circuitry 1006 generates the one or more weight sparsity bitmaps 1704 where each weight sparsity bitmap includes a different weight sparsity pattern (e.g., WEIGHT_SET0_A, WEIGHT_SET0_B, WEIGHT_SET0_C, WEIGHT_SET0_D). In the example of FIG. 17, the one or more weight sparsity bitmaps 1704 include N weight sparsity bitmaps. In the example of FIG. 17, the sparsity generation circuitry 1006 generates the one or more weight sparsity bitmaps 1704 where each weight sparsity bitmap includes a sparsity pattern offset from the start of respective weight sparsity bitmaps by the product of the number of strides of the selected weight kernel and the sum of the depth of the input tensor 1706 and the number of internal pads. In the example of FIG. 17, the depth of the input tensor 1706 is 3 and the number of internal pads is 1. Thus, in the example of FIG. 17, respective sparsity patterns are offset by the product of the number of strides of the selected weight kernel and 4. The sparsity pattern of each weight sparsity bitmap includes $w_K$ sets of $d$ consecutive one bits where $w_K$ is the width of the weight kernel and $d$ is the depth of the input tensor. As internal padding is applied to the input tensor 1706, the sparsity generation circuitry 1006 appends each of the $w_K$ sets with one zero bits to match the number of internal pads.

In the illustrated example of FIG. 17, the pointer control circuitry 1008 determines a fractional stride offset to apply to consecutive storage element pointers based on the depth of the input tensor 1706, the stride of the selected weight kernel, and internal pad lengths if applied. For example, the pointer control circuitry 1008 determines the fractional stride offset according to equation 1 above. In the example of FIG. 17, after determining the fractional striding offset, the pointer control circuitry 1008 offsets consecutive storage element pointers by the offset.

With the channels of the input tensor 1706 aligned with the granularity of the storage element and the fractional stride offset applied, the MAC circuits of FIG. 11 process the activations of the input tensor 1706 with the different weight sparsity bitmaps to select the desired input activations for each convolution. For example, the combined sparsity and storage elements pointers of the fractional stride preprocessing circuitry 214 cause the MAC circuits of FIG. 11 to processes the input tensor 1706 as a 48 channel input tensor, effectively reformatting the input tensor 1706 to the reformatted input tensor 1702. Additionally, the combined sparsity and storage element pointers of the fractional stride preprocessing circuitry 214 cause MAC circuits of FIG. 11 to processes the 3x3x3 weight kernel as a 1x3x9 weight kernel. For example, the one or more weight sparsity bitmaps 1704 select the desired bytes of the input tensor 1706 and the fractional stride of 66% is provided using overlapping storage elements. The depth of the reformatted input tensor 1702 can be determined via equation 2 above.

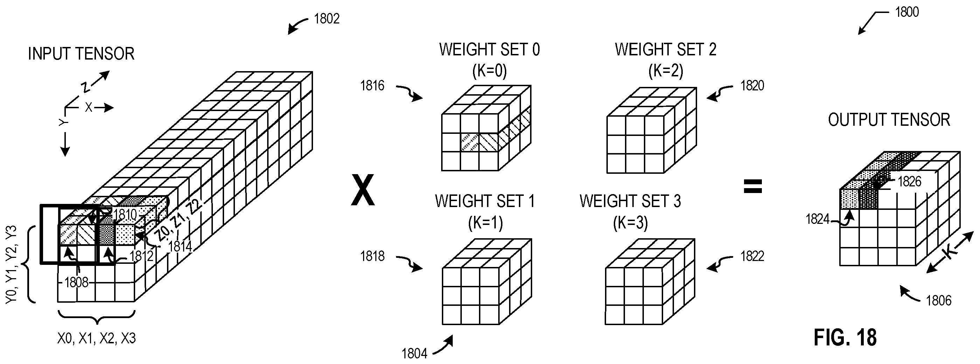

FIG. 18 is a dataflow diagram illustrating an example convolution 1800 of an example input tensor 1802 with external padding and an example set of 3x3x3 weight kernels 1804 having a stride of one to determine an example output tensor 1806. In the example of FIG. 18, the input tensor 1802 has dimensions X = 4, Y = 4, and Z = 3. The input tensor 1802 is stored in memory in Z major format, with 3 channels. In the example of FIG. 18, each XY location on the input tensor 1802 occupies a location in memory that is 16-byte aligned. Accordingly, memory after the channels of the input tensor 1802 (e.g., Z > 2) are unused bytes. In some examples no data is stored in the unused bytes while in additional or alternative examples the unused bytes may include data with a corresponding sparsity bitmap of zero. In the example of FIG. 18, there are 13 unused bytes in memory per XY location as a result of the 16-byte alignment (e.g., 16 - 3 = 13).

In the illustrated example of FIG. 18, external padding is added to the input tensor 1802 to allow the input tensor 1802 and the output tensor 1806 to be the same size when a non 1x1 kernel is used. As described above, an external pad is null data. In the example of FIG. 18, one external pad byte is added at the top, bottom, right, and left of the input tensor 1802. Additionally, as described above, external pad bytes, if not loaded into memory, are implemented as activation sparsity and do not occupy space in memory.

In the illustrated example of FIG. 18, the input tensor 1802 includes first Z values 1808 at a first XY location of the input tensor 1802, second Z values 1810 at a second XY location of the input tensor 1802, third Z values 1812 at a third XY location of the input tensor 1802, and fourth Z values 1814 at a fourth XY location of the input tensor 1802. In the example of FIG. 18, the set of 3x3x3 weight kernels 1804 includes an example first weight kernel 1816, an example second weight kernel 1818, an example third weight kernel 1820, and an example fourth weight kernel 1822. Each of the first weight kernel 1816, the second weight kernel 1818, the third weight kernel 1820, and the fourth weight kernel 1822 has a depth of 3. As such, each of the first weight kernel 1816, the second weight kernel 1818, the third weight kernel 1820, and the fourth weight kernel 1822 occupies 27 bytes (e.g., $X_{KERNEL}$ * $Y_{KERNEL}$ * NUM_CHANNELS) in memory. Thus, MAC circuitry performs 27 MAC operations to generate each of the output points 1824, 1826 of the output tensor 1806. In the example of FIG. 18, each the first weight kernel 1816, the second weight kernel 1818, the third weight kernel 1820, and the fourth weight kernel 1822 is used four times to generate a single channel (e.g., a step in K) in the output tensor 1806.

In the example of FIG. 18, each of the first weight kernel 1816, the second weight kernel 1818, the third weight kernel 1820, and the fourth weight kernel 1822 is stored contiguously in memory. That is, each of the first weight kernel 1816, the second weight kernel 1818, the third weight kernel 1820, and the fourth weight kernel 1822 are stored in memory as a 27x1 array. In the example of FIG. 18, the first weight kernel 1816, the second weight kernel 1818, the third weight kernel 1820, and the fourth weight kernel 1822 are depicted as 3x3x3 tensors to illustrate how the set of 3x3x3 weight kernels 1804 map to the input tensor 1802.

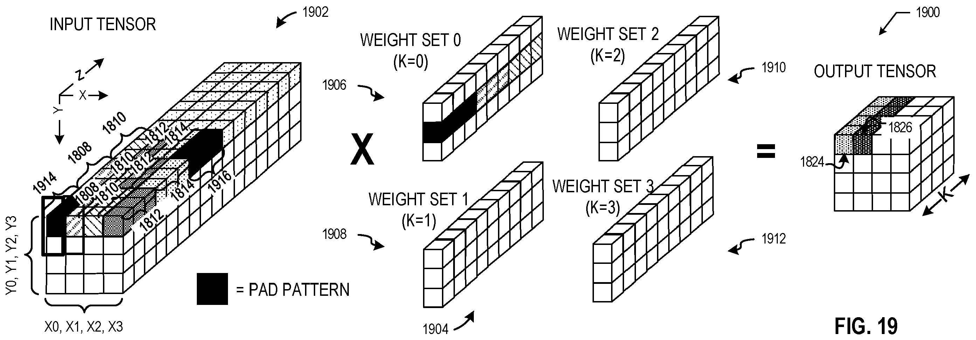

FIG. 19 is a dataflow diagram illustrating an example convolution 1900 of an example reformatted input tensor 1902 with external padding and an example set of reformatted 1x3x9 weight kernels 1904 having a stride of one to determine the example output tensor 1806 of FIG. 18. In the example of FIG. 19, the reformatted input tensor 1902 has dimensions $X = 4$, $Y = 4$, and $Z = 9$. The Z dimension of the reformatted input tensor 1902 can be determined as the product of the width of the first weight kernel 1816 and the number of channels of the input tensor 1802 (e.g., $Z_{REFORMATTED} = X_{KERNEL}*NUM\_CHANNELS$). In the example of FIG. 19, each XY location on the reformatted input tensor 1902 occupies a location in memory that is 16-byte aligned. Accordingly, memory after the channels of the reformatted input tensor 1902 (e.g., $Z > 8$) are unused bytes. In the example of FIG. 19, the data replication preprocessing circuitry 212 reformats the input tensor 1802 according to the tensor data replication configuration to generate the reformatted input tensor 1902.

In the illustrated example of FIG. 19, the set of reformatted 1x3x9 weight kernels 1904 includes an example first weight kernel 1906, an example second weight kernel 1908, an example third weight kernel 1910, and an example fourth weight kernel 1912. In the example of FIG. 19, the input tensor 1802 is reformatted so that the dimensions of respective weight kernels can be changed from $X_{KERNEL}*Y_{KERNEL}$ to $1*Y_{KERNEL}$. For example, each of the first weight kernel 1906, the second weight kernel 1908, the third weight kernel 1910, and the fourth weight kernel 1912 is a 1x3 kernel with a depth of 9.

In the example of FIG. 19, while the shape of respective ones of the set of 3x3x3 weight kernels 1804 are reformatted to the set of reformatted 1x3x9 weight kernels 1904, the manner in which the set of 3x3x3 weight kernels 1804 is stored in memory does not change. Instead, to reformat the set of 3x3x3 weight kernels 1804, the MAC circuitry 220 sequences the set of 3x3x3 weight kernels 1804 through the MAC circuits of FIG. 11 to accommodate the new dimensions of the reformatted input tensor 1902.

In the illustrated example of FIG. 19, the parameter determining circuitry 802 determines a width (e.g., 3), a height (e.g., 3), and a stride (e.g., 1) of the first weight kernel 1816. The parameter determining circuitry 802 additionally determines a width (e.g., 4), a height (e.g., 4), and a depth (e.g., 3) of the input tensor 1802. In the example of FIG. 19, the padding circuitry 804 determine whether external padding is to be applied to the input tensor 1802. In response to determining that external padding is to be applied, the padding circuitry 804 loads a first external pad 1914 before the first X location at the first Y location (e.g., to the left) of the input tensor 1802. Additionally, the padding circuitry 804 loads a second external pad 1916 after the last X location at the first Y location (e.g., to the right) of the input tensor 1802. Subsequently, the storage control circuitry 806 selects the first Y location of the input tensor 1802 (e.g., $Y = 0$). The storage control circuitry 806 additionally selects the first X location of the input tensor 1802 at the selected Y location. Because the padding circuitry 804 added the first external pad 1914 before the first X location and the second external pad 1916 after the last X location at the first Y location, the input tensor 1802 appears to have an X dimension of 6. As such, the storage control circuitry 806 selects the X location of the first external pad 1914 when selecting the first X location at the selected Y location (e.g., $X = -1$, $Y = 0$).

In the illustrated example of FIG. 19, starting at the selected XY location, the storage control circuitry 806 copies one or more Z values, up to the depth of the input tensor 1802, of consecutive XY locations that overlap the width of the first weight kernel 1816. For example, as the storage control circuitry 806 is starting at the first XY location of the input tensor 1802 ($X = -1$, $Y = 0$) and the width of the first weight kernel 1816 is 3, the storage control circuitry 806 copies the first external pad 1914, the first Z values 1808, and the second Z values 1810. The storage control circuitry 806 loads the copied one or more Z values in a next XY location of the reformatted input tensor 1902. If this is the first load operation, the storage control circuitry 806 loads the copied one or more Z values in the first XY location of the reformatted input tensor 1902 ($X = 0$, $Y = 0$) and increment the X location for subsequent iterations.

Thus, the storage control circuitry 806 loads the first external pad 1914 in the first XY location of the reformatted input tensor 1902 ($X = 0$, $Y = 0$), followed by the first Z values 1808, and then the second Z values 1810. As such, data for a Y location of a kernel to be convolved with the reformatted input tensor 1902 is present in the same memory location. The storage control circuitry 806 then determines if there is sufficient data of the input tensor 1802 (e.g., an additional X location) outside the width of the first weight kernel 1216. As the third XY location of the input tensor 1802 ($X = 2$, $Y = 0$), the fourth XY location of the input tensor 1802, and the second external pad 1916 are outside the width of the first weight kernel 1816, the storage control circuitry 806 selects the next X location of the input tensor 1802 at the selected Y location according to the stride of the first weight kernel 1816. Because the stride of the first weight kernel 1816 is one, the storage control circuitry 806 selects the first XY location of the input tensor 1802 ($X = 0$, $Y = 0$).

In the illustrated example of FIG. 19, the storage control circuitry 806 copies one or more Z values, up to the depth of the input tensor 1802, of consecutive XY locations that overlap the width of the first weight kernel 1816 starting at the selected XY location. For example, as the storage control circuitry 806 is starting at the first XY location of the input tensor 1802 ($X = 0$, $Y = 0$) and the width of the first weight kernel 1816 is 3, the storage control circuitry 806 copies the first Z values 1808, the second Z values 1810, and the third Z values 1812. The storage control circuitry 806 loads the copied one or more Z values in a next XY location of the reformatted input tensor 1902.

Thus, for example, because the previously loaded XY location was the first XY location of the reformatted input tensor 1902, the storage control circuitry 806 loads the first Z values 1808 in the second XY location of the reformatted input tensor 1902 (X = 1, Y = 0), followed by the second Z values 1810, and then the third Z values 1812. Processing continues similarly for the vertical strides of the first weight kernel 1816.

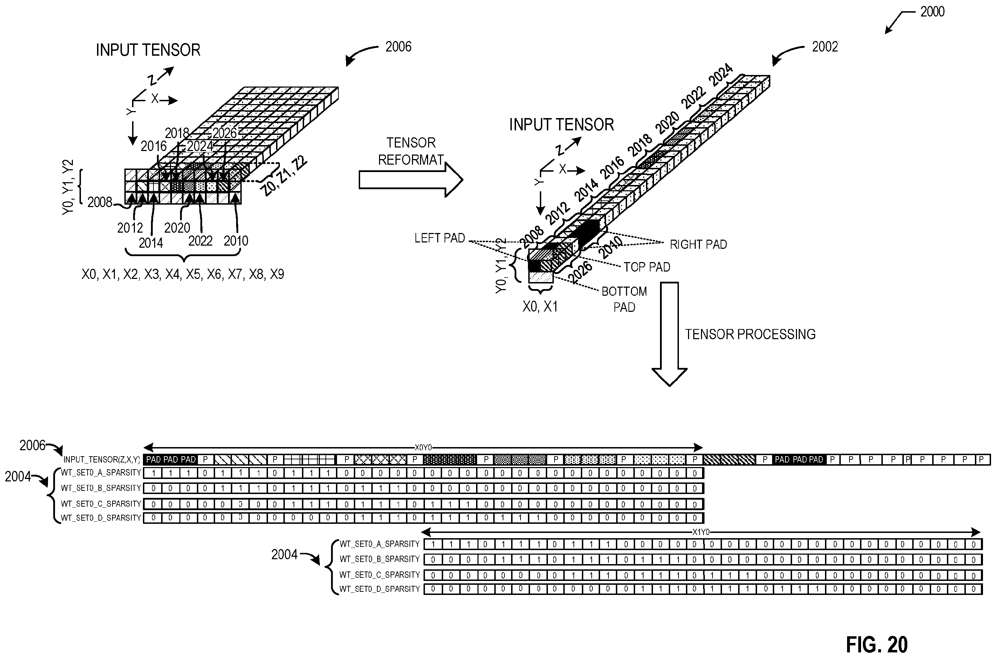

FIG. 20 is a dataflow diagram illustrating an example convolution of an example reformatted input tensor 2002 with padding and an example 3x3x3 weight kernel having a stride of one and one or more weight sparsity bitmaps 2004 to facilitate refined fractional striding. In the example of FIG. 20, the fractional stride preprocessing circuitry 214 repurposes weight sparsity to refine the fractional stride and allow activations of input tensors to be selected at a granularity of 4 bytes. By combining sparsity with storage element pointers, the fractional stride preprocessing circuitry 214 generates the reformatted input tensor 2002 from an example input tensor 2006. In the example of FIG. 20, the input tensor 2006 has dimensions X = 8, Y = 1, and Z = 3 but is to be padded to have dimensions X = 10, Y = 3, and Z = 3.

In the illustrated example of FIG. 20, the padding control circuitry 1004 determines whether external padding is to be applied to the input tensor 2006. In response to determining that external padding is to be applied to the input tensor 2006, the padding control circuitry 1004 loads a first external pad 2008 before the first X location at the first Y location of the input tensor 2006 (e.g., to the left of the input tensor 2006). As such, data for a Y location of a kernel to be convolved with the input tensor 2006 is present in the same memory location. Additionally, the padding control circuitry 1004 loads a second external pad 2010 after the last X location at the first Y location of the input tensor 2006 (e.g., to the right of the input tensor 2006). As such, data for a Y location of a kernel to be convolved with the input tensor 2006 is present in the same memory location. The top and bottom pads of the input tensor 2006 are inserted as sparsity by the AI accelerator circuitry 208 during execution.

As such, in the illustrated example of FIG. 20, the input tensor 2006 includes the first external pad 2008, first Z values 2012 at a first XY location of the input tensor 2006, second Z values 2014 at a second XY location of the input tensor 2006, third Z values 2016 at a third XY location of the input tensor 2006, and fourth Z values 2018 at a fourth XY location of the input tensor 2006. The input tensor 2006 also includes fifth Z values 2020 at a fifth XY location of the input tensor 2006, sixth Z values 2022 at a sixth XY location of the input tensor 2006, seventh Z values 2024 at a seventh XY location of the input tensor 2006, eighth Z values 2026 at an eight XY location of the input tensor 2006, and the second external pad 2010. In the example of FIG. 20, the sparsity generation circuitry 1006 determines whether internal padding is to be applied to the input tensor 2006. For example, the sparsity generation circuitry 1006 determines whether internal padding is to be applied to the input tensor 2006 by dividing the granularity of storage elements by a depth of the input tensor 2006. If the remainder of the division operation is not zero, the sparsity generation circuitry 1006 determines that internal padding is to be applied and vice versa.

In the illustrated example of FIG. 20, in response to determining that internal padding is to be applied to the input tensor 2006, the sparsity generation circuitry 1006 is to separate Z values of each XY location of the input tensor 2006 by a number of pads. To determine the number of pads, the sparsity generation circuitry 1006 first rounds the depth of the input tensor 2006 up to the nearest multiple of four that returns a remainder of zero when divided into the granularity of the storage elements (e.g., 16). Then, the sparsity generation circuitry 1006 finds the difference between the rounded value and the depth of the input tensor 2006 to determine the number of pads.

In the illustrated example of FIG. 20, the granularity of storage elements is 16 and the depth of the input tensor 2006 is 3. As such, the sparsity generation circuitry 1006 determines the number of pads to be 1 (e.g., 4 - 3 = 1). In examples disclosed herein, the length of an internal pad for an input tensor is one byte. Thus, the 3 channels of the input tensor 2006 are internally padded out to four bytes to align groups of three channels to the granularity of the storage element (e.g., 4 x (3 channel bytes + 1 pad byte) = 16 bytes). The internal pad byte is not processed as the weight sparsity bitmap is zero for the internal pad byte.

In the illustrated example of FIG. 20, the tensor and weight control circuitry 1002 replicates each weight kernel that is to be convolved with the input tensor 2006 to generate N weight kernels for each weight kernel where N matches the number of points of an output tensor that can be generated per XY location of the reformatted input tensor 2002. In the example of FIG. 20, the MAC circuitry 220 can generate 4 points of an output tensor per XY location of the reformatted input tensor 2002. Thus, the tensor and weight control circuitry 1002 replicates each weight kernel to generate 4 weight kernels for each weight kernel. Additionally, the sparsity generation circuitry 1006 generates the one or more weight sparsity bitmaps 2004 where each weight sparsity bitmap includes a different weight sparsity pattern (e.g., WEIGHT_SET0_A, WEIGHT_SET0_B, WEIGHT_SET0_C, WEIGHT_SET0_D). In the example of FIG. 20, the one or more weight sparsity bitmaps 2004 include N weight sparsity bitmaps. In the example of FIG. 20, the sparsity generation circuitry 1006 generates the one or more weight sparsity bitmaps 2004 where each weight sparsity bitmap includes a sparsity pattern offset from the start of respective weight sparsity bitmaps by the product of the number of strides of the selected weight kernel and the sum of the depth of the input tensor 2006 and the number of internal pads. In the example of FIG. 20, the depth of the input tensor 2006 is 3 and the number of internal pads is 1. Thus, in the example of FIG. 20, respective sparsity patterns are offset by the product of the number of strides of the selected weight kernel and 4. The sparsity pattern of each weight sparsity bitmap includes $w_K$ sets of $d$ consecutive one bits where $w_K$ is the width of the weight kernel and $d$ is the depth of the input tensor. As internal padding is applied to the input tensor 2006, the sparsity generation circuitry 1006 appends each of the $w_K$ sets with one zero bits to match the number of internal pads.

In the illustrated example of FIG. 20, the pointer control circuitry 1008 determines a fractional stride offset to apply to consecutive storage element pointers based on the depth of the input tensor 2006, the stride of the selected weight kernel, and internal pad lengths if applied. For example, the pointer control circuitry 1008 determines the fractional stride offset according to equation 1 above. In the example of FIG. 20, after determining the fractional striding offset, the pointer control circuitry 1008 offsets consecutive storage element pointers by the offset.

With the channels of the input tensor 2006 aligned with the granularity of the storage element and the fractional stride offset applied, the MAC circuits of FIG. 11 process the activations of the input tensor 2006 with the different weight sparsity bitmaps to select the desired input activations for each convolution. For example, the combined sparsity and storage elements pointers of the fractional stride preprocessing circuitry 214 cause the MAC circuits of FIG. 11 to processes the input tensor 2006 as a 32 channel input tensor, effectively reformatting the input tensor 2006 to the reformatted input tensor 2002. Additionally, the combined sparsity and storage element pointers of the fractional stride preprocessing circuitry 214 cause MAC circuits of FIG. 11 to processes the 3x3x3 weight kernel as a 1x3x9 weight kernel. For example, the one or more weight sparsity bitmaps 2004 select the desired bytes of the input tensor 2006 and the fractional stride of 50% is provided using overlapping storage elements. The depth of the reformatted input tensor 2002 can be determined via equation 2 above.

Table 2 shows MAC utilization for ResNet-50 and MobileNet for tensor data replication configuration and fractional striding configuration compared to normal processing. In the example of Table 1, ResNet-50 utilizes a 7x7 weight kernel having a stride of 2 and MobileNet utilize a 3x3 weight kernel having a stride of 2.

Table 2

| Kernel Parameters | | | Normal Processing | | Tensor Data Replication | | Fractional Striding | |
|---|---|---|---|---|---|---|---|---|
| $X_{KERNEL}$ | $Y_{KERNEL}$ | Stride | Workload Cycle Count (clocks) | MAC Utilization (%) | Workload Cycle Count (clocks) | MAC Utilization (%) | Workload Cycle Count (clocks) | MAC Utilization (%) |
| 3 | 3 | 2 | 3055 | 28.3 | 2509 | 34.4 | 1897 | 45.51 |
| 7 | 7 | 2 | 16724 | 28.11 | 6001 | 78.4 | 9345 | 50.31 |

For ResNet-50, Table 2 shows an increase in utilization of 2.8x and 1.8x for tensor data replication and fractional striding, respectively. For MobileNet table 2 shows an increase in MAC utilization of 1.2x and 1.6x for tensor data replication and fractional striding, respectively. In the example of table 2, the increase in MAC utilization translates to a reduction in the number of cycles to process the layer of between 18% and 65%. This is a significant improvement for the input layer compared to existing technology.

As mentioned above, AI accelerator circuitry is highly efficient for deeper layers in a network, but shallow layers can reduce such efficiency. Additionally, increased sparsity in both activation and weight data for such layers can result in shallow layers (e.g., an input layer) taking a significant percentage of the compute time for the overall network. For example, the input layer to the ResNet-50 network takes 10.7% of the overall time for the network to execute without advantages of examples disclosed herein. Conversely, examples disclosed herein increased MAC utilization of between 1.8x and 2.8x which reduces the overall processing for the network by between 4.8% and 6.9%.

Table 2 indicates that tensor data replication performed better than fractional striding for MobileNet and that fractional striding performed better than tensor data replication for ResNet-50. These differences are due, in part, to how the different configurations are processed by AI accelerator circuitry. Such differences can be mitigated by a compiler (e.g., the compiler 210) implementing a cost table associated with each configuration and choosing the optimal solution.

Table 3 shows the activation and weight footprint for tensor data replication and fractional striding for ResNet-50 and MobileNet. For both MobileNet and ResNet-50, the memory footprint when implementing tensor data replication is about 50% that of normal processing. Additionally, the memory footprint when implementing fractional striding is about 25% that of normal processing. For edge devices where memory is a limited resource, reducing memory footprint is a significant benefit achieved by examples disclosed herein.

Table 3

| Network | Normal Processing | | Tensor Data Replication | | Fractional Striding | |
|---|---|---|---|---|---|---|
| | Activation Memory Footprint | Weight Memory Footprint | Activation Memory Footprint | Weight Memory Footprint | Activation Memory Footprint | Weight Memory Footprint |
| MobileNet - 244x244x3, 3x3 S2, K=32 | 802,816 | 800 | 401,408 | 800 | 200,704 | 2,480 |
| ResNet-50 - 244x244x3, 7x7 S2, K=64 | 802,816 | 10,432 | 401,408 | 10,432 | 200,704 | 15,072 |

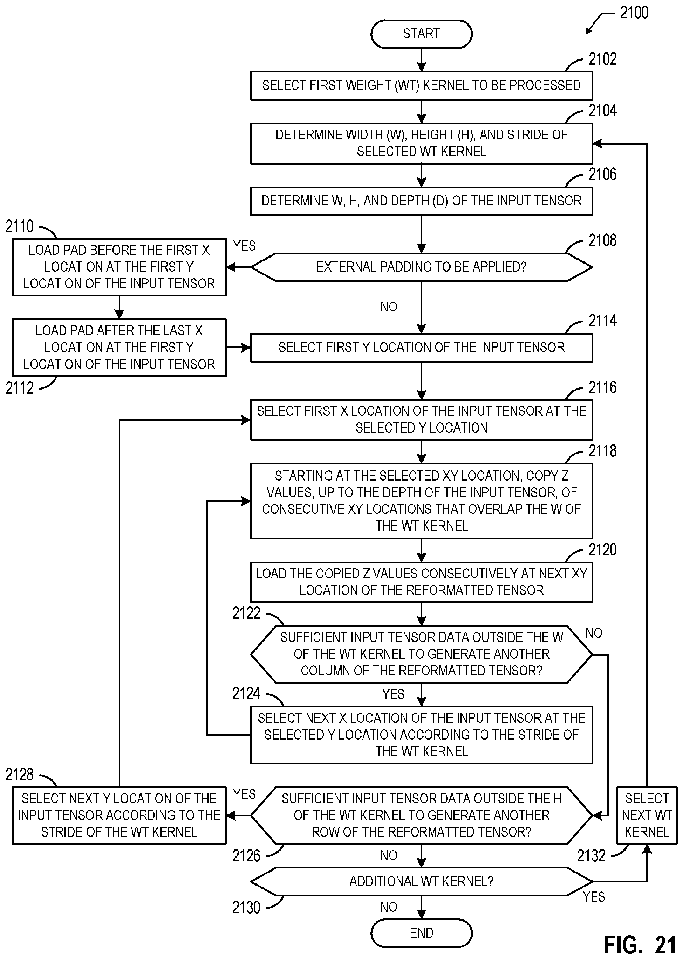

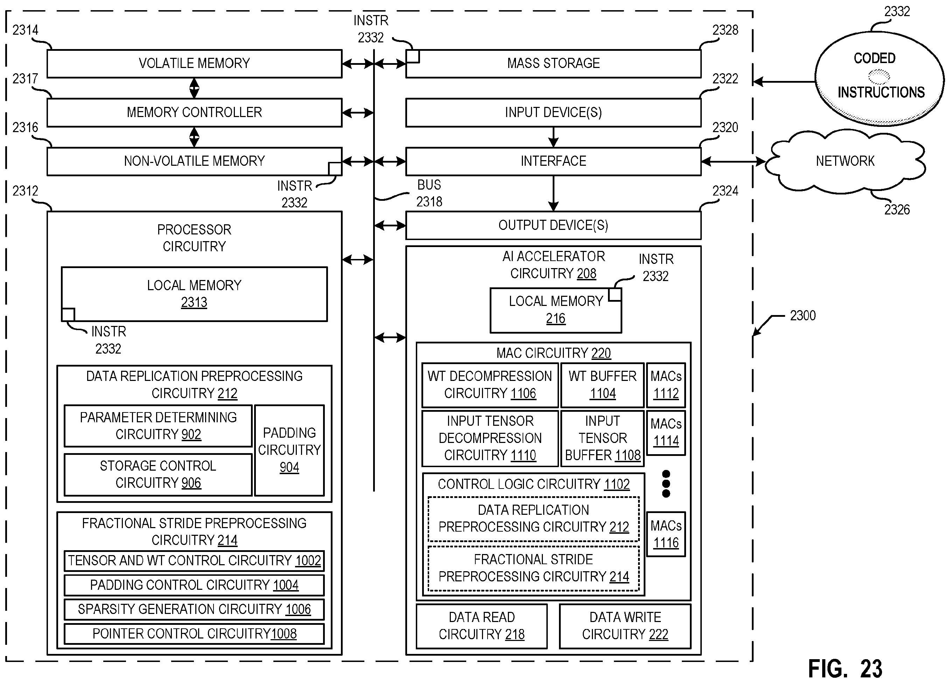

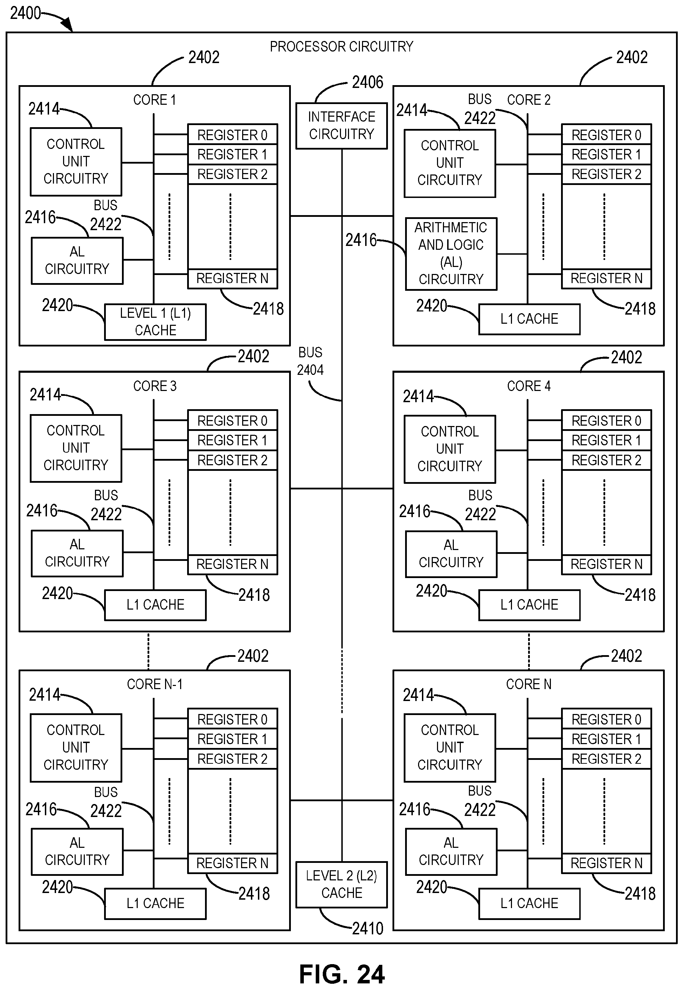

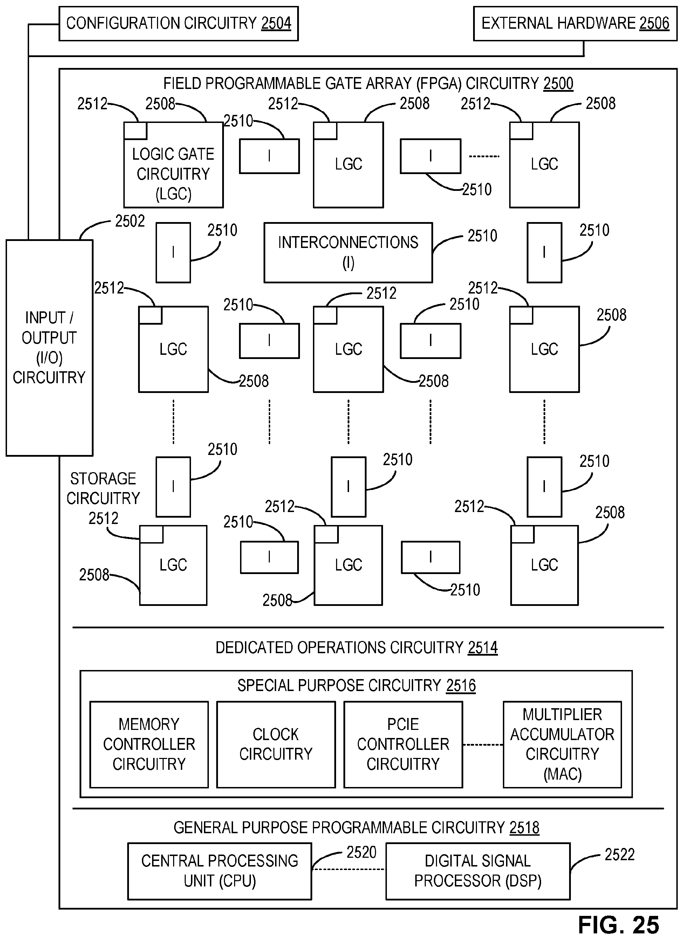

In some examples, the data replication preprocessing circuitry 212 includes means for determining one or more parameters. For example, the means for determining one or more parameters may be implemented by the parameter determining circuitry 802. In some examples, the parameter determining circuitry 802 may be implemented by machine executable instructions such as that implemented by at least blocks 2102, 2104, 2106, 2130, and 2132 of FIG. 21 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the parameter determining circuitry 802 is implemented by other hardware logic circuitry, hardware implemented state machines, and/or any other combination of hardware, software, and/or firmware. For example, the parameter determining circuitry 802 may be implemented by at least one or more hardware circuits (e.g., processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

In some examples, the data replication preprocessing circuitry 212 includes means for padding. For example, the means for padding may be implemented by the padding circuitry 804. In some examples, the padding circuitry 804 may be implemented by machine executable instructions such as that implemented by at least blocks 2108, 2110, and 2112 of FIG. 21 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the padding circuitry 804 is implemented by other hardware logic circuitry, hardware implemented state machines, and/or any other combination of hardware, software, and/or firmware. For example, the padding circuitry 804 may be implemented by at least one or more hardware circuits (e.g., processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

In some examples, the data replication preprocessing circuitry 212 includes means for controlling storage. For example, the means for controlling storage may be implemented by the storage control circuitry 806. In some examples, the storage control circuitry 806 may be implemented by machine executable instructions such as that implemented by at least blocks 2114, 2116, 2118, 2120, 2122, 2124, 2126, and 2128 of FIG. 21 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the storage control circuitry 806 is implemented by other hardware logic circuitry, hardware implemented state machines, and/or any other combination of hardware, software, and/or firmware. For example, the storage control circuitry 806 may be implemented by at least one or more hardware circuits (e.g., processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

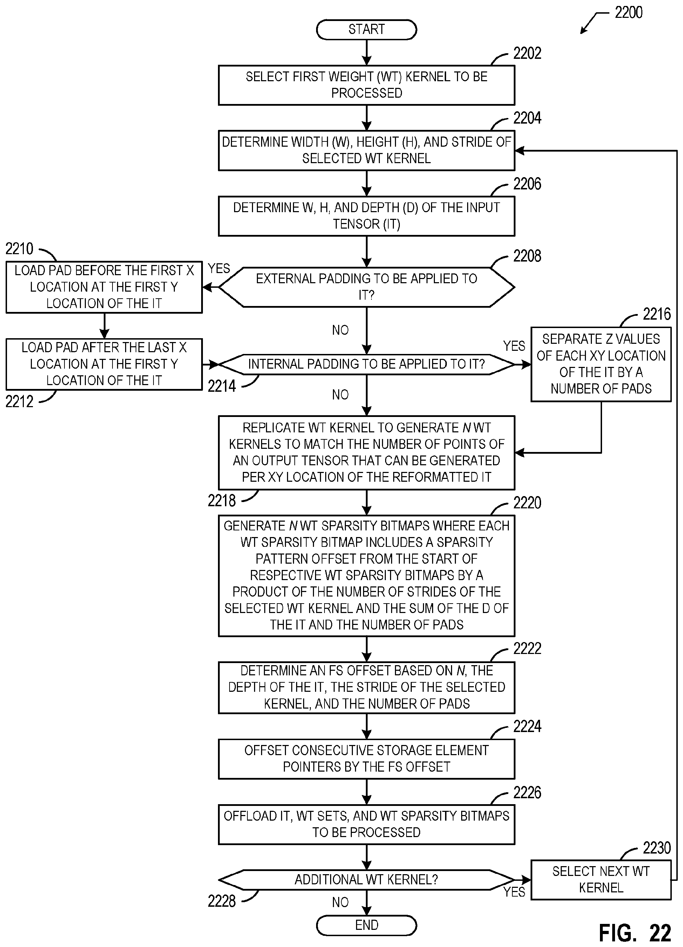

In some examples, the fractional stride preprocessing circuitry 214 includes means for controlling one or more tensors. For example, the means for controlling one or more tensors may be implemented by the tensor and weight control circuitry 1002. In some examples, the tensor and weight control circuitry 1002 may be implemented by machine executable instructions such as that implemented by at least blocks 2202, 2204, 2206, 2218, 2226, 2228, and 2230 of FIG. 22 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the tensor and weight control circuitry 1002 is implemented by other hardware logic circuitry, hardware implemented state machines, and/or any other combination of hardware, software, and/or firmware. For example, the tensor and weight control circuitry 1002 may be implemented by at least one or more hardware circuits (e.g.,

processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

In some examples, the fractional stride preprocessing circuitry 214 includes means for padding. For example, the means for padding may be implemented by the padding control circuitry 1004. In some examples, the padding control circuitry 1004 may be implemented by machine executable instructions such as that implemented by at least blocks 2208, 2210, and 2212 of FIG. 22 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the padding control circuitry 1004 is implemented by other hardware logic circuitry, hardware implemented state machines, and/or any other combination of hardware, software, and/or firmware. For example, the padding control circuitry 1004 may be implemented by at least one or more hardware circuits (e.g., processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

In some examples, the fractional stride preprocessing circuitry 214 includes means for generating sparsity. For example, the means for generating sparsity may be implemented by the sparsity generation circuitry 1006. In some examples, the sparsity generation circuitry 1006 may be implemented by machine executable instructions such as that implemented by at least blocks 2214 and 2216 of FIG. 22 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the sparsity generation circuitry 1006 is implemented by other hardware logic circuitry, hardware implemented state machines, and/or any other combination of hardware, software, and/or firmware. For example, the sparsity generation circuitry 1006 may be implemented by at least one or more hardware circuits (e.g., processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

In some examples, the fractional stride preprocessing circuitry 214 includes means for controlling one or more pointers. For example, the means for controlling one or more pointers may be implemented by the pointer control circuitry 1008. In some examples, the pointer control circuitry 1008 may be implemented by machine executable instructions such as that implemented by at least blocks 2220, 2222, and 2224 of FIG. 22 executed by processor circuitry, which may be implemented by the example processor circuitry 2312 of FIG. 23, the example processor circuitry2400 of FIG. 24, and/or the example Field Programmable Gate Array (FPGA) circuitry 2500 of FIG. 25. In other examples, the pointer control circuitry 1008 is implemented by other hardware logic circuitry, hardware implemented state machines, and/or any other combination of hardware, software, and/or firmware. For example, the pointer control circuitry 1008 may be implemented by at least one or more hardware circuits (e.g., processor circuitry, discrete and/or integrated analog and/or digital circuitry, an FPGA, Application Specific Integrated Circuitry (ASIC), a comparator, an operational-amplifier (op-amp), a logic circuit, etc.) structured to perform the corresponding operation without executing software or firmware, but other structures are likewise appropriate.

While an example manner of implementing the data replication preprocessing circuitry 212 of FIG. 2 is illustrated in FIG. 8, one or more of the elements, processes, and/or devices illustrated in FIG. 8 may be combined, divided, re-arranged, omitted, eliminated, and/or implemented in any other way. Additionally, while an example manner of implementing the fractional stride preprocessing circuitry 214 of FIG. 2 is illustrated in FIG. 10, one or more of the elements, processes, and/or devices illustrated in FIG. 10 may be combined, divided, re-arranged, omitted, eliminated, and/or implemented in any other way. Further, the example parameter determining circuitry 802, the example padding circuitry 804, the example storage control circuitry 806, and/or, more generally, the example data replication preprocessing circuitry 212 of FIGS. 2 and/or 8, and/or the example tensor and weight control circuitry 1002, the example padding control circuitry 1004, the example sparsity generation circuitry 1006, the example pointer control circuitry 1008, and/or, more generally, the example fractional stride preprocessing circuitry 214 of FIGS. 2 and/or 10, may be implemented by hardware alone or by hardware in combination with software and/or firmware. Thus, for example, any of the example parameter determining circuitry 802, the example padding circuitry 804, the example storage control circuitry 806, and/or, more generally, the example data replication preprocessing circuitry 212 of FIGS. 2 and/or 8, and/or the example tensor and weight control circuitry 1002, the example padding control circuitry 1004, the example sparsity generation circuitry 1006, the example pointer control circuitry 1008, and/or, more generally, the example fractional stride preprocessing circuitry 214 of FIGS. 2 and/or 10 could be implemented by processor circuitry, analog circuit(s), digital circuit(s), logic circuit(s), programmable processor(s), programmable microcontroller(s), graphics processor unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). Further still, the example data replication preprocessing circuitry 212 of FIG. 2 may include one or more elements, processes, and/or devices in addition to, or instead of, those illustrated in FIG. 8, and/or may include more than one of any or all of the illustrated elements, processes, and devices. Additionally, the fractional stride preprocessing circuitry 214 of FIG. 2 may include one or more elements, processes, and/or devices in addition to, or instead of, those illustrated in FIG. 10, and/or may include more than one of any or all of the illustrated elements, processes, and devices.

A flowchart representative of example hardware logic circuitry, machine-readable instructions, hardware implemented state machines, and/or any combination thereof for implementing the data replication preprocessing circuitry 212 of FIGS. 2 and/or 8 is shown in FIG. 21. The machine-readable instructions may be one or more executable and/or instantiate-able programs or portion(s) of an executable and/or instantiate-able program for execution and/or instantiation by processor circuitry, such as the processor circuitry 2312 shown in the example processor platform 2300 discussed below in connection with FIG. 23 and/or the example processor circuitry discussed below in connection with FIGS. 24 and/or 25. The program may be embodied in software stored on one or more non-transitory computer readable storage media such as a CD, a floppy disk, a hard disk drive (HDD), a DVD, a Blu-ray disk, a volatile memory (e.g., Random-Access Memory (RAM) of any type, etc.), or a non-volatile memory (e.g., FLASH memory, an HDD, etc.) associated with processor circuitry located in one or more hardware devices, but the entire program and/or parts thereof could alternatively be executed and/or instantiated by one or more hardware devices other than the processor circuitry and/or embodied in firmware or dedicated hardware. The machine-readable instructions may be distributed across multiple hardware devices and/or executed by two or more hardware devices (e.g., a server and a client hardware device) and/or instantiated by two or more hardware devices. For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowchart illustrated in FIG. 21, many other methods of implementing the example data replication preprocessing circuitry 212 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

A flowchart representative of example hardware logic circuitry, machine-readable instructions, hardware implemented state machines, and/or any combination thereof for implementing the fractional stride preprocessing circuitry 214 of FIGS. 2 and/or 10 is shown in FIG. 22. The machine-readable instructions may be one or more executable and/or instantiate-able programs or portion(s) of an executable and/or instantiate-able program for execution and/or instantiation by processor circuitry, such as the processor circuitry 2312 shown in the example processor platform 2300 discussed below in connection with FIG. 23 and/or the example processor circuitry discussed below in connection with FIGS. 24 and/or 25. The program may be embodied in software stored on one or more non-transitory computer readable storage media such as a CD, a floppy disk, a hard disk drive (HDD), a DVD, a Blu-ray disk, a volatile memory (e.g., Random-Access Memory (RAM) of any type, etc.), or a non-volatile memory (e.g., FLASH memory, an HDD, etc.) associated with processor circuitry located in one or more hardware devices, but the entire program and/or parts thereof could alternatively be executed and/or instantiated by one or more hardware devices other than the processor circuitry and/or embodied in firmware or dedicated hardware. The machine-readable instructions may be distributed across multiple hardware devices and/or executed by two or more hardware devices (e.g., a server and a client hardware device) and/or instantiated by two or more hardware devices. For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowchart illustrated in FIG. 22, many other methods of implementing the example fractional stride preprocessing circuitry 214 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine-readable instructions described herein may be stored in one or more of a compressed format, an encrypted format, a fragmented format, a compiled format, an executable format, a packaged format, etc. Machine-readable instructions as described herein may be stored as data or a data structure (e.g., as portions of instructions, code, representations of code, etc.) that may be utilized to create, manufacture, and/or produce machine executable instructions. For example, the machine-readable instructions may be fragmented and stored on one or more storage devices and/or computing devices (e.g., servers) located at the same or different locations of a network or collection of networks (e.g., in the cloud, in edge devices, etc.). The machine-readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine-readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine-readable instructions may be stored in a state in which they may be read by processor circuitry, but require addition of a library (e.g., a dynamic link library (DLL)), a software development kit (SDK), an application programming interface (API), etc., in order to execute and/or instantiate the machine-readable instructions on a particular computing device or other device. In another example, the machine-readable instructions may need to be configured (e.g., settings stored, data input, network addresses recorded, etc.) before the machine-readable instructions and/or the corresponding program(s) can be executed and/or instantiated in whole or in part. Thus, machine-readable media, as used herein, may include machine-readable instructions and/or program(s) regardless of the particular format or state of the machine-readable instructions and/or program(s) when stored or otherwise at rest or in transit.

The machine-readable instructions described herein can be represented by any past, present, or future instruction language, scripting language, programming language, etc. For example, the machine-readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 21 and/or 22 may be implemented using executable instructions (e.g., computer and/or machine-readable instructions) stored on one or more non-transitory computer and/or machine-readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media. In some examples disclosed herein, instructions stored in non-transitory computer readable storage medium, when executed, cause processor circuitry to perform operations disclosed herein.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 21 is a flowchart representative of example machine-readable instructions and/or example operations 2100 that may be executed and/or instantiated by processor circuitry to implement the data replication preprocessing circuitry 212 of FIGS. 2 and/or 8. The machine-readable instructions and/or example operations 2100 begin at block 2102 where the parameter determining circuitry 802 selects a first weight kernel that is to be processed by AI accelerator circuitry. At block 2104, the parameter determining circuitry 802 determines a width, a height, and a stride of the selected weight kernel.

In the illustrated example of FIG. 21, at block 2106, the parameter determining circuitry 802 determines a width, a height, and a depth of an input tensor to be processed by AI accelerator circuitry. At block 2108, the padding circuitry 804 determines whether external padding is to be applied to the input tensor. For example, at block 2108, the padding circuitry 804 determines whether external padding is to be applied to an input tensor based on the dimensions of the weight kernel and/or desired dimension of an output tensor. In response to the padding circuitry 804 determining that padding is to be applied to the input tensor (block 2108: YES), the machine-readable instructions and/or operations 2100 proceed to block 2110. At block 2110, the padding circuitry 804 loads a first external pad before the first X location at the first Y location of the input tensor (e.g., to the left of the input tensor). At block 2112, the padding circuitry 804 loads a second pad after the last X location at the first Y location of the input tensor (e.g., to the right of the input tensor).

In the illustrated example of FIG. 21, returning to block 2108, in response to the padding circuitry 804 determining that padding is not to be applied to the input tensor (block 2108: NO), the machine-readable instructions and/or operations 2100 proceed to block 2114. At block 2114, the storage control circuitry 806 selects a first Y location of the input tensor to be reformatted. At block 2116, the storage control circuitry 806 selects a first X location of the input tensor at the selected Y location.

In the illustrated example of FIG. 21, at block 2118, starting at the selected XY location, the storage control circuitry 806 copies Z values, up to the depth of the input tensor, of consecutive XY locations of the input tensor that overlap the width of the weight kernel that is to be convolved with the input tensor. At block 2120, the storage control circuitry 806 loads the copied Z values consecutively in a next XY location of the reformatted tensor. For example, on a first iteration of block 2120, the storage control circuitry 806 loads the copied Z values consecutively in a first XY location (X = 0, Y = 0) of the reformatted tensor. On subsequent iterations of block 2120, the storage control circuitry 806 loads the copied Z values in a next XY location of the reformatted tensor equal to the number of iterations after the initial iteration.

In the illustrated example of FIG. 21, at block 2122, the storage control circuitry 806 determines whether there is sufficient input tensor data outside the width of the weight kernel to generate another column of the reformatted tensor. For example, at block 2122, the storage control circuitry 806 determines whether there is an additional X location of the input tensor outside the width of the weight kernel. In response to the storage control circuitry 806 determining that there is sufficient input tensor data outside the width of the weight kernel to generate another column of the reformatted tensor (block 2122: YES) the machine-readable instructions and/or operations 2100 proceed to block 2124. At block 2124, the storage control circuitry 806 selects a next X location of the input tensor at the selected Y location according to the stride of the weight kernel. After block 2124, the machine-readable instructions and/or operations 2100 return to block 2118.

In the illustrated example of FIG. 21, in response to the storage control circuitry 806 determining that there is not sufficient input tensor data outside the width of the weight kernel to generate another column of the reformatted tensor (block 2122: NO) the machine-readable instructions and/or operations 2100 proceed to block 2126. At block 2126, the storage control circuitry 806 determines whether there is sufficient input tensor data outside the height of the weight kernel to generate another row of the reformatted tensor. For example, at block 2126, the storage control circuitry 806 determines whether an additional Y location of the input tensor outside the height of the weight kernel. In response to the storage control circuitry 806 determining that there is sufficient input tensor data outside the height of the weight kernel to generate another row of the reformatted tensor (block 2126: YES) the machine-readable instructions and/or operations 2100 proceed to block 2128. At block 2128, the storage control circuitry 806 selects a next Y location of the input tensor according to the stride of the weight kernel. After block 2128, the machine-readable instructions and/or operations 2100 return to block 2116.

In the illustrated example of FIG. 21, in response to the storage control circuitry 806 determining that there is not sufficient input tensor data outside the height of the weight kernel to generate another row of the reformatted tensor (block 2126: NO) the machine-readable instructions and/or operations 2100 proceed to block 2130. At block 2130, the parameter determining circuitry 802 determines whether there is an additional weight kernel to be processed. In response to the parameter determining circuitry 802 determining that there is an additional weight kernel to be processed (block 2130: YES) the machine-readable instructions and/or operations 2100 proceed to block 2132 where the parameter determining circuitry 802 selects a next weight kernel to be processed. After block 2132, the machine-readable instructions and/or operations 2100 return to block 2104. In response to the parameter determining circuitry 802 determining that there is not an additional weight kernel to be processed (block 2130: NO) the machine-readable instructions and/or operations 2100 terminate.

FIG. 22 is a flowchart representative of example machine-readable instructions and/or example operations 2200 that may be executed and/or instantiated by processor circuitry to implement the fractional stride preprocessing circuitry 214 of FIGS. 2 and/or 10. The machine-readable instructions and/or operations 2200 begin at block 2202 where the tensor and weight control circuitry 1002 selects a first weight kernel to be processed. At block 2204, the tensor and weight control circuitry 1002 determines a width, a height, and a stride of the selected weight kernel. At block 2206, the tensor and weight control circuitry 1002 determines a width, a height, and a depth of an input tensor to be convolved with the weight kernel.

In the illustrated example of FIG. 22, at block 2208, the padding control circuitry 1004 determines whether external padding is to be applied to the input tensor. In response to the padding control circuitry 1004 determining that external padding is to be applied to the input tensor (block 2208: YES), the machine-readable instructions and/or operations 2200 proceed to block 2210. At block 2210, the padding control circuitry 1004 loads an external pad before the first X location at the first Y location of the input tensor (e.g., to the left of the input tensor). In the example of FIG. 22, at block 2212, the padding control circuitry 1004 loads an external pad after the last X location at the first Y location of the input tensor (e.g., to the right of the input tensor).

In the illustrated example of FIG. 22, in response to the padding control circuitry 1004 determining that external padding is not to be applied to the input tensor (block 2208: NO), the machine-readable instructions and/or operations 2200 proceed to block 2214. At block 2214, the sparsity generation circuitry 1006 determines whether internal padding is to be applied to the input tensor. For example, at block 2214, the sparsity generation circuitry 1006 determines whether internal padding is to be applied to the input tensor by dividing the granularity of storage elements by a depth of the input tensor. In the example of FIG. 22, in response to the sparsity generation circuitry 1006 determining that internal padding is to be applied to the input tensor (block 2214: YES), the machine-readable instructions and/or operations 2200 proceed to block 2216. At block 2216, the sparsity generation circuitry 1006 separates Z values of each XY location of the input tensor by a number of pads. In response to the sparsity generation circuitry 1006 determining that internal padding is not to be applied to the input tensor (block 2214: NO), the machine-readable instructions and/or operations 2200 proceed to block 2218.

In the illustrated example of FIG. 22, at block 2218, the tensor and weight control circuitry 1002 replicates the selected weight kernel to generate N weight kernels to match the number of points of an output tensor that can be generated per XY location of the reformatted input tensor. For example, at block 2218, the tensor and weight control circuitry 1002 replicates the selected weight kernel to generate four weight kernels. In the example of FIG. 22, the tensor and weight control circuitry 1002 replicates the selected weight kernel before compression (e.g., the selected weight kernel is dense). At block 2220, the sparsity generation circuitry 1006 generates N weight sparsity bitmaps where each weight sparsity bitmap includes sparsity pattern offset from the start of respective weight sparsity bitmaps by a product of the number of strides of the selected weight kernel and the sum of the depth of the input tensor and the number of internal pads. For example, if the depth of the input tensor is 3 and the number of internal pads is 1, then respective sparsity patterns are offset by a product of the number of strides of the weight kernel and 4. In the example of FIG. 22, the sparsity pattern of each weight sparsity bitmap includes $w_K$ sets of $d$ consecutive one bits where $w_K$ is the width of the weight kernel and $d$ is the depth of the input tensor. If internal padding is applied to the input tensor, the sparsity generation circuitry 1006 appends each of the $w_K$ sets with one or more zero bits equal to the number of internal pads.

In the illustrated example of FIG. 22, at block 2222, the pointer control circuitry 1008 determines a fractional stride offset to apply to consecutive storage element pointers based on N, the depth of the input tensor, the stride of the weight kernel, and internal pad lengths if applied. For example, the pointer control circuitry 1008 determines the fractional stride offset according to equation 1. In the example of FIG. 22, at block 2224, the pointer control circuitry 1008 offsets consecutive ones of the storage element pointers by the fractional stride offset. In the example of FIG. 22, at block 2226, the tensor and weight control circuitry 1002 offloads the input tensor, one or more weight kernels, and one or more weight sparsity bitmaps to be processed. At block 2228 the tensor and weight control circuitry 1002 determines whether there is an additional weight kernel to be processed. In response to the tensor and weight control circuitry 1002 determining that there is an additional weight kernel to be processed (block 2228: YES) the machine-readable instructions and/or operations 2200 proceed to block 2230 where the tensor and weight control circuitry 1002 selects a next weight kernel to be processed. In response to the tensor and weight control circuitry 1002 determining that there is not an additional weight kernel to be processed (block 2228: NO) the machine-readable instructions and/or operations 2200 terminate.

FIG. 23 is a block diagram of an example processor platform 2300 structured to execute and/or instantiate the machine-readable instructions and/or operations 2100 of FIG. 21 to implement the data replication preprocessing circuitry 212 of FIGS. 2 and/or 8 and/or the machine-readable instructions and/or operations 2200 of FIG. 22 to implement the fractional stride preprocessing circuitry 214 of FIGS. 2 and/or 10. The processor platform 2300 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 2300 of the illustrated example includes processor circuitry 2312. The processor circuitry 2312 of the illustrated example is hardware. For example, the processor circuitry 2312 can be implemented by one or more integrated circuits, logic circuits, FPGAs microprocessors, CPUs, GPUs, DSPs, and/or microcontrollers from any desired family or manufacturer. The processor circuitry 2312 may be implemented by one or more semiconductor based (e.g., silicon based) devices. In this example, the processor circuitry 2312 implements the example parameter determining circuitry 802, the example padding circuitry 804, the example storage control circuitry 806, and/or, more generally, the data replication preprocessing circuitry 212 and/or, the example tensor and weight control circuitry 1002, the example padding control circuitry 1004, the example sparsity generation circuitry 1006, the example pointer control circuitry 1008, and/or, more generally, the fractional stride preprocessing circuitry 214.

The processor circuitry 2312 of the illustrated example includes a local memory 2313 (e.g., a cache, registers, etc.). The processor circuitry 2312 of the illustrated example is in communication with a main memory including a volatile memory 2314 and a non-volatile memory 2316 by a bus 2318. The volatile memory 2314 may be implemented by Synchronous Dynamic Random-Access Memory (SDRAM), Dynamic Random-Access Memory (DRAM), RAMBUS® Dynamic Random-Access Memory (RDRAM®), and/or any other type of RAM device. The non-volatile memory 2316 may be implemented by flash memory and/or any other desired type of memory device. Access to the main memory 2314, 2316 of the illustrated example is controlled by a memory controller 2317.

The processor platform 2300 of the illustrated example also includes the AI accelerator circuitry 208. The example AI accelerator circuitry 208 includes the example local memory 216, the example data read circuitry 218, the example MAC circuitry 220, and the example data write circuitry 222. In the example of FIG. 23, the example MAC circuitry 220 includes the example control logic circuitry 1102, the example weight buffer 1104, the example weight decompression circuitry 1106, the example input tensor buffer 1108, the example input tensor decompression circuitry 1110, the example first column of MAC circuits $1112_{1,1}$ - $1112_{1,M}$, the example second column of MAC circuits $1114_{1,1}$ - $1114_{1,M}$, and the example Nth column of MAC circuits $1116_{N,1}$ - $1116_{N,M}$. In some examples, the control logic circuitry 1102 implements the example parameter determining circuitry 802, the example padding circuitry 804, the example storage control circuitry 806, and/or, more generally, the data replication preprocessing circuitry 212 and/or, the example tensor and weight control circuitry 1002, the example padding control circuitry 1004, the example sparsity generation circuitry 1006, the example pointer control circuitry 1008, and/or, more generally, the fractional stride preprocessing circuitry 214. As described above, the AI accelerator circuitry 208 of the illustrated example includes the local memory 216. The AI accelerator circuitry 208 of the illustrated example is in communication with the main memory including the volatile memory 2314 and the non-volatile memory 2316 by the bus 2318.

The processor platform 2300 of the illustrated example also includes interface circuitry 2320. The interface circuitry 2320 may be implemented by hardware in accordance with any type of interface standard, such as an Ethernet interface, a universal serial bus (USB) interface, a Bluetooth® interface, a near field communication (NFC) interface, a PCI interface, and/or a PCIe interface.

In the illustrated example, one or more input devices 2322 are connected to the interface circuitry 2320. The input device(s) 2322 permit(s) a user to enter data and/or commands into the processor circuitry 2312. The input device(s) 2322 can be implemented by, for example, an audio sensor, a microphone, a camera (still or video), a keyboard, a button, a mouse, a touchscreen, a track-pad, a trackball, an isopoint device, and/or a voice recognition system.

One or more output devices 2324 are also connected to the interface circuitry 2320 of the illustrated example. The output devices 2324 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 2320 of the illustrated example, thus, typically includes a graphics driver card, a graphics driver chip, and/or graphics processor circuitry such as a GPU.

The interface circuitry 2320 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 2326. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 2300 of the illustrated example also includes one or more mass storage devices 2328 to store software and/or data. Examples of such mass storage devices 2328 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 2332, which may be implemented by the machine-readable instructions of FIGS. 21 and/or 23, may be stored in the mass storage device 2328, in the volatile memory 2314, in the non-volatile memory 2316, and/or on a removable non-transitory computer readable storage medium such as a CD or DVD.

FIG. 24 is a block diagram of an example implementation of the processor circuitry 2312 of FIG. 23. In this example, the processor circuitry 2312 of FIG. 23 is implemented by a microprocessor 2400. For example, the microprocessor 2400 may implement multi-core hardware circuitry such as a CPU, a DSP, a GPU, an XPU, etc. Although it may include any number of example cores 2402 (e.g., 1 core), the microprocessor 2400 of this example is a multi-core semiconductor device including N cores. The cores 2402 of the microprocessor 2400 may operate independently or may cooperate to execute machine-readable instructions. For example, machine code corresponding to a firmware program, an embedded software program, or a software program may be executed by one of the cores 2402 or may be executed by multiple ones of the cores 2402 at the same or different times. In some examples, the machine code corresponding to the firmware program, the embedded software program, or the software program is split into threads and executed in parallel by two or more of the cores 2402. The software program may correspond to a portion or all of the machine-readable instructions and/or operations represented by the flowcharts of FIGS. 21 and/or 22.

The cores 2402 may communicate by an example bus 2404. In some examples, the bus 2404 may implement a communication bus to effectuate communication associated with one(s) of the cores 2402. For example, the bus 2404 may implement at least one of an Inter-Integrated Circuit (I2C) bus, a Serial Peripheral Interface (SPI) bus, a PCI bus, or a PCIe bus. Additionally or alternatively, the bus 2404 may implement any other type of computing or electrical bus. The cores 2402 may obtain data, instructions, and/or signals from one or more external devices by example interface circuitry 2406. The cores 2402 may output data, instructions, and/or signals to the one or more external devices by the interface circuitry 2406. Although the cores 2402 of this example include example local memory 2420 (e.g., Level 1 (L1) cache that may be split into an L1 data cache and an L1 instruction cache), the microprocessor 2400 also includes example shared memory 2410 that may be shared by the cores (e.g., Level 2 (L2_ cache)) for high-speed access to data and/or instructions. Data and/or instructions may be transferred (e.g., shared) by writing to and/or reading from the shared memory 2410. The local memory 2420 of each of the cores 2402 and the shared memory 2410 may be part of a hierarchy of storage devices including multiple levels of cache memory and the main memory (e.g., the main memory 2314, 2316 of FIG. 23). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 2402 may be referred to as a CPU, DSP, GPU, etc., or any other type of hardware circuitry. Each core 2402 includes control unit circuitry 2414, arithmetic and logic (AL) circuitry (sometimes referred to as an ALU circuitry) 2416, a plurality of registers 2418, the L1 cache 2420, and an example bus 2422. Other structures may be present. For example, each core 2402 may include vector unit circuitry, single instruction multiple data (SIMD) unit circuitry, load/store unit (LSU) circuitry, branch/jump unit circuitry, floating-point unit (FPU) circuitry, etc. The control unit circuitry 2414 includes semiconductor-based circuits structured to control data movement (e.g., coordinate data movement) within the corresponding core 2402. The AL circuitry 2416 includes semiconductor-based circuits structured to perform one or more mathematic and/or logic operations on the data within the corresponding core 2402. The AL circuitry 2416 of some examples performs integer based operations. In other examples, the AL circuitry 2416 also performs floating point operations. In yet other examples, the AL circuitry 2416 may include first AL circuitry that performs integer based operations and second AL circuitry that performs floating point operations. In some examples, the AL circuitry 2416 may be referred to as an Arithmetic Logic Unit (ALU) and/or arithmetic and logic circuitry. The registers 2418 are semiconductor-based structures to store data and/or instructions such as results of one or more of the operations performed by the AL circuitry 2416 of the corresponding core 2402. For example, the registers 2418 may include vector register(s), SIMD register(s), general purpose register(s), flag register(s), segment register(s), machine specific register(s), instruction pointer register(s), control register(s), debug register(s), memory management register(s), machine check register(s), etc. The registers 2418 may be arranged in a bank as shown in FIG. 24. Alternatively, the registers 2418 may be organized in any other arrangement, format, or structure including distributed throughout the core 2402 to shorten access time. The bus 2422 may implement at least one of an I2C bus, a SPI bus, a PCI bus, or a PCIe bus

Each core 2402 and/or, more generally, the microprocessor 2400 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 2400 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 25 is a block diagram of another example implementation of the processor circuitry 2312 of FIG. 23. In this example, the processor circuitry 2312 is implemented by FPGA circuitry 2500. The FPGA circuitry 2500 can be used, for example, to perform operations that could otherwise be performed by the example microprocessor 2400 of FIG. 24 executing corresponding machine-readable instructions. However, once configured, the FPGA circuitry 2500 instantiates the machine-readable instructions in hardware and, thus, can often execute the operations faster than they could be performed by a general purpose microprocessor executing the corresponding software.

More specifically, in contrast to the microprocessor 2400 of FIG. 24 described above (which is a general purpose device that may be programmed to execute some or all of the machine-readable instructions represented by the flowcharts of FIGS. 21 and/or 22 but whose interconnections and logic circuitry are fixed once fabricated), the FPGA circuitry 2500 of the example of FIG. 25 includes interconnections and logic circuitry that may be configured and/or interconnected in different ways after fabrication to instantiate, for example, some or all of the machine-readable instructions represented by the flowchart of FIGS. 21 and/or 22. In particular, the FPGA circuitry 2500 may be thought of as an array of logic gates, interconnections, and switches. The switches can be programmed to change how the logic gates are interconnected by the interconnections, effectively forming one or more dedicated logic circuits (unless and until the FPGA circuitry 2500 is reprogrammed). The configured logic circuits enable the logic gates to cooperate in different ways to perform different operations on data received by input circuitry. Those operations may correspond to some or all of the software represented by the flowcharts of FIGS. 21 and/or 22 (e.g., operations corresponding to instructions represented by flowcharts of FIGS. 21 and/or 22). As such, the FPGA circuitry 2500 may be structured to effectively instantiate some or all of the machine-readable instructions of the flowcharts of FIGS. 21 and/or 22 as dedicated logic circuits to perform the operations corresponding to those software instructions in a dedicated manner analogous to an ASIC. Therefore, the FPGA circuitry 2500 may perform the operations corresponding to the some or all of the machine-readable instructions of FIGS. 21 and/or 22 faster than the general purpose microprocessor can execute the same.

In the example of FIG. 25, the FPGA circuitry 2500 is structured to be programmed (and/or reprogrammed one or more times) by an end user by a hardware description language (HDL) such as Verilog. The FPGA circuitry 2500 of FIG. 25, includes example input/output (I/O) circuitry 2502 to obtain and/or output data to/from example configuration circuitry 2504 and/or external hardware (e.g., external hardware circuitry) 2506. For example, the configuration circuitry 2504 may implement interface circuitry that may obtain machine-readable instructions to configure the FPGA circuitry 2500, or portion(s) thereof. In some such examples, the configuration circuitry 2504 may obtain the machine-readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 2506 may implement the microprocessor 2400 of FIG. 24. The FPGA circuitry 2500 also includes an array of example logic gate circuitry 2508, a plurality of example configurable interconnections 2510, and example storage circuitry 2512. The logic gate circuitry 2508 and interconnections 2510 are configurable to instantiate one or more operations that may correspond to at least some of the machine-readable instructions of FIGS. 21 and/or 22 and/or other desired operations. The logic gate circuitry 2508 shown in FIG. 25 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 2508 to enable configuration of the electrical structures and/or the logic gates to form circuits to perform desired operations. The logic gate circuitry 2508 may include other electrical structures such as look-up tables (LUTs), registers (e.g., flip-flops or latches), multiplexers, etc.

The interconnections 2510 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 2508 to program desired logic circuits.

The storage circuitry 2512 of the illustrated example is structured to store result(s) of the one or more of the operations performed by corresponding logic gates. The storage circuitry 2512 may be implemented by registers or the like. In the illustrated example, the storage circuitry 2512 is distributed amongst the logic gate circuitry 2508 to facilitate access and increase execution speed.

The example FPGA circuitry 2500 of FIG. 25 also includes example Dedicated Operations Circuitry 2514. In this example, the Dedicated Operations Circuitry 2514 includes special purpose circuitry 2516 that may be invoked to implement commonly used functions to avoid the need to program those functions in the field. Examples of such special purpose circuitry 2516 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 2500 may also include example general purpose programmable circuitry 2518 such as an example CPU 2520 and/or an example DSP 2522. Other general purpose programmable circuitry 2518 may additionally or alternatively be present such as a GPU, an XPU, etc., that can be programmed to perform other operations.

Although FIGS. 24 and 25 illustrate two example implementations of the processor circuitry 2312 of FIG. 23, many other approaches are contemplated. For example, as mentioned above, modern FPGA circuitry may include an on-board CPU, such as one or more of the example CPU 2520 of FIG. 25. Therefore, the processor circuitry 2312 of FIG. 23 may additionally be implemented by combining the example microprocessor 2400 of FIG. 24 and the example FPGA circuitry 2500 of FIG. 25. In some such hybrid examples, a first portion of the machine-readable instructions represented by the flowcharts of FIGS. 21 and/or 22 may be executed by one or more of the cores 2402 of FIG. 24 and a second portion of the machine-readable instructions represented by the flowcharts of FIGS. 21 and/or 22 may be executed by the FPGA circuitry 2500 of FIG. 25.

In some examples, the processor circuitry 2312 of FIG. 23 may be in one or more packages. For example, the microprocessor 2400 of FIG. 24 and/or the FPGA circuitry 2500 of FIG. 25 may be in one or more packages. In some examples, an XPU may be implemented by the processor circuitry 2312 of FIG. 23, which may be in one or more packages. For example, the XPU may include a CPU in one package, a DSP in another package, a GPU in yet another package, and an FPGA in still yet another package.

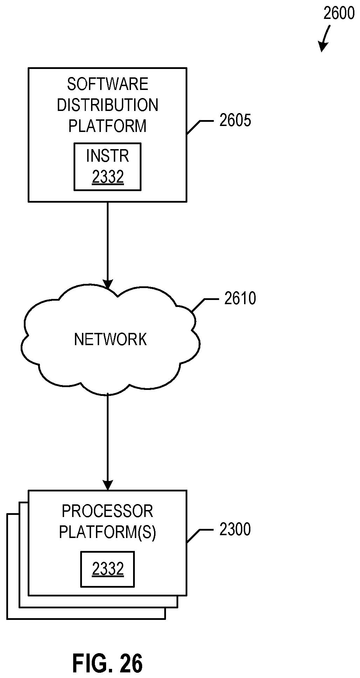

A block diagram illustrating an example software distribution platform 2605 to distribute software such as the example machine-readable instructions 2332 of FIG. 23 to hardware devices owned and/or operated by third parties is illustrated in FIG. 26. The example software distribution platform 2605 may be implemented by any computer server, data facility, cloud service, etc., capable of storing and transmitting software to other computing devices. The third parties may be customers of the entity owning and/or operating the software distribution platform 2605. For example, the entity that owns and/or operates the software distribution platform 2605 may be a developer, a seller, and/or a licensor of software such as the example machine-readable instructions 2332 of FIG. 23. The third parties may be consumers, users, retailers, OEMs, etc., who purchase and/or license the software for use and/or re-sale and/or sub-licensing. In the illustrated example, the software distribution platform 2605 includes one or more servers and one or more storage devices. The storage devices store the machine-readable instructions 2332, which may correspond to the machine-readable instructions and/or operations 2100 of FIG. 21 and/or the machine-readable instructions and/or operations 2200 of FIG. 22, as described above. The one or more servers of the example software distribution platform 2605 are in communication with a network 2610, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine-readable instructions 2332 from the software distribution platform 2605. For example, the software, which may correspond to the machine-readable instructions and/or operations 2100 of FIG. 21, may be downloaded to the example processor platform 2300, which is to execute the machine-readable instructions 2332 to implement the data replication preprocessing circuitry 212 of FIGS. 2 and/or 8. Additionally or alternatively, the software, which may correspond to the machine-readable instructions and/or operations 2200 of FIG. 22, may be downloaded by the example processor platform 2300, which is to execute the machine-readable instructions 2332 to implement the fractional stride preprocessing circuitry 214 of FIGS. 2 and/or 10. In some example, one or more servers of the software distribution platform 2605 periodically offer, transmit, and/or force updates to the software (e.g., the example machine-readable instructions 2332 of FIG. 23) to ensure improvements, patches, updates, etc., are distributed and applied to the software at the end user devices.

From the foregoing, it will be appreciated that example systems, methods, apparatus, and articles of manufacture have been disclosed that increase utilization of NN accelerator circuitry for shallow layers of an NN by reformatting one or more tensors. Example systems, methods, apparatus, and articles of manufacture disclosed herein reduce the time to transfer activation data into the MAC array of AI accelerator circuitry and allows more MACs in the MAC array to operate in parallel. As such, examples disclosed herein increase MAC utilization and reduce the time required to process an input layer (e.g., image) to an NN. Compared to existing technology, examples disclosed herein do not require custom hardware, give better performance across all configurations, and significantly simplify the design from a physical perspective. As such, examples disclosed herein enable higher frequencies of operation and lower power consumption by, for example, eliminating the dedicated interconnect present in existing technology.

Additionally disclosed systems, methods, apparatus, and articles of manufacture improve performance of processing the input tensor to an input layer of a NN. Examples disclosed herein include tensor data replication which describes how tensor data is replicated to improve performance and fractional striding which describes how fractional striding is used to improve performance. Examples disclosed herein increase MAC utilization by using tensor manipulation to allow the MACs to receive more activation data in parallel. In addition to the benefits provided by tensor data replication, fractional striding does not replicate activation data thereby reducing the computational burden of preprocessing activation data for a NN. Reducing preprocessing reduces overall latency and boosts frames per second (FPS).

The disclosed systems, methods, apparatus, and articles of manufacture improve the efficiency of using a computing device by reducing power consumption and increasing framerate. For example, a key metric for image processing CNNs is the number of FPS. Examples disclosed herein reduce the time to process the input layer of a CNN thereby reducing the latency of the CNN and directly improving FPS. Additionally, FPS per Watt (FPS/W) is a key metric for edge neural network accelerators, such as vision processing units. Examples disclosed herein increase FPS and reduce power to deliver a meaningful increase in a key metrics. The disclosed systems, methods, apparatus, and articles of manufacture are accordingly directed to one or more improvement(s) in the operation of a machine such as a computer or other electronic and/or mechanical device.

**Claims**

1.  An apparatus comprising neural network accelerator circuitry, the neural network accelerator circuitry being configured to implement a neural network, and the apparatus being configured to increase utilization of neural network (NN) accelerator circuitry for shallow layers of an NN, the apparatus comprising:

    means for determining one or more parameters to:

    determine a width of a weight kernel; and
    determine a depth of a first tensor; and

    means for controlling storage to:

    starting at a first XY location of the first tensor, copy one or more Z values, up to the depth of the first tensor, of consecutive XY locations that overlap the width of the weight kernel; and
    load the one or more Z values consecutively in a first XY location of a second tensor, for simultaneous input to an array of MAC circuits.

2.  The apparatus of claim 1, wherein the apparatus further including means for padding to:

    determine whether external padding is to be applied to the first tensor based on the width of the weight kernel;
    based on determining that external padding is to be applied:

    load a first external pad before a first X location at a first Y location of the first tensor; and
    load a second external pad after a last X location at the first Y location of the first tensor.

3.  The apparatus of any of claim 1 or 2, wherein the means for controlling storage are to:

    select a first Y location of the first tensor;
    select a first X location of the first tensor at the first Y location to set the first XY location; and
    based on determining that there is sufficient data of the first tensor outside the width of the weight kernel to generate another column of the second tensor, select a second X location at the first Y location according to a stride of the weight kernel.

4.  The apparatus of any of claims 1-3, wherein the means for controlling storage are to, based on determining that there is sufficient data of the first tensor outside a height of the weight kernel to generate another row of the second tensor, select a second Y location of the first tensor according to a stride of the weight kernel.

5.  The apparatus of any of claims 1-4, wherein the first tensor is stored in a memory, the memory being at least one of sixteen byte aligned or thirty two byte aligned.

6.  The apparatus of any of claims 1-5, wherein the first tensor corresponds to an input image to the NN.

7.  The apparatus of any of claims 1-6, wherein the weight kernel is a first weight kernel and the means for determining one or more parameters are to, based on determining that there is an additional weight kernel to be processed, select a second weight kernel.

8.  A method implemented by an apparatus according to any of claims 1-7, for increasing utilization of neural network (NN) accelerator circuitry for shallow layers of an NN, the method comprising:

    determining a width of a weight kernel;
    determining a depth of a first tensor;
    starting at a first XY location of the first tensor, copying one or more Z values, up to the depth of the first tensor, of consecutive XY locations that overlap the width of the weight kernel; and
    loading the one or more Z values consecutively in a first XY location of a second tensor, for simultaneous input to an array of MAC circuits.

9. The method of claim 8, further including:

determining whether external padding is to be applied to the first tensor based on the width of the weight kernel;
based on determining that external padding is to be applied:

loading a first external pad before a first X location at a first Y location of the first tensor; and
loading a second external pad after a last X location at the first Y location of the first tensor.

10. The method of any of claims 8 or 9, further including:

selecting a first Y location of the first tensor;
selecting a first X location of the first tensor at the first Y location to set the first XY location; and
based on determining that there is sufficient data of the first tensor outside the width of the weight kernel to generate another column of the second tensor, selecting a second X location at the first Y location according to a stride of the weight kernel.

11. The method of any of claims 8-10, further including, based on determining that there is sufficient data of the first tensor outside a height of the weight kernel to generate another row of the second tensor, selecting a second Y location of the first tensor according to a stride of the weight kernel.

12. The method of any of claims 8-11, wherein the first tensor is stored in a memory, the memory being at least one of sixteen byte aligned or thirty-two byte aligned.

13. The method of any of claims 8-12, wherein the first tensor corresponds to an input image to the NN.

14. The method of any of claims 8-13, wherein the weight kernel is a first weight kernel, and the method further includes, based on determining that there is an additional weight kernel to be processed, selecting a second weight kernel.

15. A computer program comprising instructions which, when the computer program is executed by the apparatus of any of claims 1-7, cause the apparatus to carry out the method as claimed in any of claims 8-14.


**Patentansprüche**

1. Einrichtung, die eine Neuronalnetzbeschleunigerschaltungsanordnung umfasst, wobei die Neuronalnetzbeschleunigerschaltungsanordnung dazu ausgelegt ist, ein neuronales Netz zu implementieren, und wobei die Einrichtung dazu ausgelegt ist, die Nutzung einer Neuronalnetz(NN)-Beschleunigerschaltungsanordnung für flache Schichten eines NN zu erhöhen, wobei die Einrichtung Folgendes umfasst:
Mittel zum Bestimmen eines oder mehrerer Parameter zum:

Bestimmen einer Breite eines Gewichtskernels; und
Bestimmen einer Tiefe eines ersten Tensors; und
Mittel zum Steuern einer Speicherung zum:

beginnend an einer ersten XY-Position des ersten Tensors, Kopieren eines oder mehrerer Z-Werte, bis zur Tiefe des ersten Tensors, von aufeinanderfolgenden XY-Positionen, die die Breite des Gewichtskernels überlappen; und
Laden des einen oder der mehreren Z-Werte nacheinander an einer ersten XY-Position eines zweiten Tensors zur gleichzeitigen Eingabe in ein Array von MAC-Schaltungen.

2. Einrichtung nach Anspruch 1, wobei die Einrichtung ferner Mittel zum Padding beinhaltet zum:

Bestimmen, ob externes Padding auf den ersten Tensor anzuwenden ist, basierend auf der Breite des Gewichtskernels;
basierend darauf, dass bestimmt wird, dass externes Padding anzuwenden ist:

Laden eines ersten externen Pads vor einer ersten X-Position an einer ersten Y-Position des ersten Tensors; und

Laden eines zweiten externen Pads nach einer letzten X-Position an der ersten Y-Position des ersten Tensors.

3. Einrichtung nach Anspruch 1 oder 2, wobei die zum Steuern des Speichers zu Folgendem ausgelegt sind:

Auswählen einer ersten Y-Position des ersten Tensors;
Auswählen einer ersten X-Position des ersten Tensors an der ersten Y-Position, um die erste XY-Position festzulegen; und
basierend darauf, dass bestimmt wird, dass ausreichend Daten des ersten Tensors außerhalb der Breite des Gewichtskernels vorhanden sind, um eine weitere Spalte des zweiten Tensors zu erzeugen, Auswählen einer zweiten X-Position an der ersten Y-Position gemäß einer Schrittgröße des Gewichtskernels.

4. Einrichtung nach einem der Ansprüche 1-3, wobei die Mittel zum Steuern einer Speicherung basierend darauf, dass bestimmt wird, dass ausreichend Daten des ersten Tensors außerhalb einer Höhe des Gewichtskernels vorhanden sind, um eine weitere Zeile des zweiten Tensors zu erzeugen, ausgelegt sind zum Auswählen einer zweiten Y-Position des ersten Tensors gemäß einer Schrittgröße des Gewichtskernels.

5. Einrichtung nach einem der Ansprüche 1-4, wobei der erste Tensor in einem Speicher gespeichert ist, wobei der Speicher sechzehn-Byte-ausgerichtet oder zweiunddreißig-Byte-ausgerichtet ist.

6. Einrichtung nach einem der Ansprüche 1-5, wobei der erste Tensor einem Eingabeabbild des NN entspricht.

7. Einrichtung nach einem der Ansprüche 1-6, wobei der Gewichtskernel ein erster Gewichtskernel ist und die Mittel zum Bestimmen eines oder mehrerer Parameter basierend darauf, dass bestimmt wird, dass ein zusätzlicher zu verarbeitender Gewichtskernel vorhanden ist, ausgelegt sind zum Auswählen eines zweiten Gewichtskernels.

8. Verfahren, das durch eine Einrichtung nach einem der Ansprüche 1-7 implementiert wird, zum Erhöhen der Nutzung einer Neuronalnetz(NN)-Beschleunigerschaltungsanordnung für flache Schichten eines NN, wobei das Verfahren Folgendes umfasst:

Bestimmen einer Breite eines Gewichtskernels;
Bestimmen einer Tiefe eines ersten Tensors;
beginnend an einer ersten XY-Position des ersten Tensors, Kopieren eines oder mehrerer Z-Werte, bis zur Tiefe des ersten Tensors, von aufeinanderfolgenden XY-Positionen, die die Breite des Gewichtskernels überlappen; und
Laden des einen oder der mehreren Z-Werte nacheinander an einer ersten XY-Position eines zweiten Tensors zur gleichzeitigen Eingabe in ein Array von MAC-Schaltungen.

9. Verfahren nach Anspruch 8, das ferner Folgendes aufweist:

Bestimmen, ob externes Padding auf den ersten Tensor anzuwenden ist, basierend auf der Breite des Gewichtskernels;
basierend darauf, dass bestimmt wird, dass externes Padding anzuwenden ist:

Laden eines ersten externen Pads vor einer ersten X-Position an einer ersten Y-Position des ersten Tensors; und
Laden eines zweiten externen Pads nach einer letzten X-Position an der ersten Y-Position des ersten Tensors.

10. Verfahren nach einem der Ansprüche 8 oder 9, das ferner Folgendes umfasst:

Auswählen einer ersten Y-Position des ersten Tensors;
Auswählen einer ersten X-Position des ersten Tensors an der ersten Y-Position, um die erste XY-Position festzulegen; und
basierend darauf, dass bestimmt wird, dass ausreichend Daten des ersten Tensors außerhalb der Breite des Gewichtskernels vorhanden sind, um eine weitere Spalte des zweiten Tensors zu erzeugen, Auswählen einer zweiten X-Position an der ersten Y-Position gemäß einer Schrittgröße des Gewichtskernels.

11. Verfahren nach einem der Ansprüche 8-10, ferner beinhaltend Auswählen, basierend darauf, dass bestimmt wird, dass ausreichend Daten des ersten Tensors außerhalb einer Höhe des Gewichtskernels vorhanden sind, um eine weitere Zeile des zweiten Tensors zu erzeugen, einer zweiten Y-Position des ersten Tensors gemäß einer Schrittgröße des Gewichtskernels.

12. Verfahren nach einem der Ansprüche 8-11, wobei der erste Tensor in einem Speicher gespeichert ist, wobei der Speicher sechzehn-Byte-ausgerichtet oder zweiunddreißig-Byte-ausgerichtet ist.

13. Verfahren nach einem der Ansprüche 8-12, wobei der erste Tensor einem Eingabeabbild des NN entspricht.

14. Verfahren nach einem der Ansprüche 8-13, wobei der Gewichtskernel ein erster Gewichtskernel ist und das Verfahren ferner Auswählen, basierend darauf, dass bestimmt wird, dass ein zusätzlicher zu verarbeitender Gewichtskernel vorhanden ist, eines zweiten Gewichtskernels beinhaltet.

15. Computerprogramm, das Anweisungen umfasst, die bei Ausführung des Computerprogramms durch die Einrichtung nach einem der Ansprüche 1-7 bewirken, dass die Einrichtung das Verfahren nach einem der Ansprüche 8-14 durchführt.

**Revendications**

1. Appareil comprenant des circuits d'accélérateur de réseau neuronal, les circuits d'accélérateur de réseau neuronal étant configurés pour mettre en œuvre un réseau neuronal, et l'appareil étant configuré pour augmenter l'utilisation de circuits d'accélérateur de réseau neuronal (NN) pour des couches peu profondes d'un NN, l'appareil comprenant :
des moyens pour déterminer un ou plusieurs paramètres pour :

déterminer une largeur d'un noyau de pondération ; et
déterminer la profondeur d'un premier tenseur ; et
des moyens de commande de stockage pour :

en commençant à un premier emplacement XY du premier tenseur, copier une ou plusieurs valeurs Z, jusqu'à la profondeur du premier tenseur, d'emplacements XY consécutifs qui chevauchent la largeur du noyau de pondération ; et
charger la ou les valeurs Z consécutivement dans un premier emplacement XY d'un second tenseur, pour une entrée simultanée dans un réseau de circuits MAC.

2. Appareil selon la revendication 1, dans lequel l'appareil comprend en outre des moyens de remplissage pour :

déterminer si un remplissage externe doit être appliqué au premier tenseur en fonction de la largeur du noyau de pondération ;
sur la détermination du fait qu'un remplissage externe doit être appliqué :

charger un premier remplissage externe avant un premier emplacement X à un premier emplacement y du premier tenseur ; et
charger un deuxième remplissage externe après un dernier emplacement X au premier emplacement y du premier tenseur.

3. Appareil selon l'une quelconque des revendications 1 ou 2, dans lequel les moyens de commander de stockage sont destinés à :

sélectionner un premier emplacement Y du premier tenseur ;
sélectionner un premier emplacement X du premier tenseur au premier emplacement Y pour définir le premier emplacement XY ; et
sur la détermination du fait qu'il existe suffisamment de données du premier tenseur à l'extérieur de la largeur du noyau de pondération pour générer une autre colonne du second tenseur, sélectionner un second emplacement X au premier emplacement Y en fonction d'un pas du noyau de pondération.

4. Appareil selon l'une quelconque des revendications 1 à 3, dans lequel les moyens de commande de stockage sont destinés, sur la détermination du fait qu'il existe suffisamment de données du premier tenseur à l'extérieur d'une hauteur du noyau de pondération pour générer une autre rangée du second tenseur, à sélectionner un second emplacement Y du premier tenseur en fonction d'un pas du noyau de pondération.

5. Appareil selon l'une quelconque des revendications 1 à 4, dans lequel le premier tenseur est stocké dans une mémoire, la mémoire étant au moins l'une parmi seize octets alignés ou trente deux octets alignés.

6. Appareil selon l'une quelconque des revendications 1 à 5, dans lequel le premier tenseur correspond à une image d'entrée du NN.

7. Appareil selon l'une quelconque des revendications 1 à 6, dans lequel le noyau de pondération est un premier noyau de pondération et les moyens pour déterminer un ou plusieurs paramètres sont destinés, sur la détermination du fait qu'il y a un noyau de pondération supplémentaire à traiter, à sélectionner un second noyau de pondération.

8. Procédé mis en œuvre par un appareil selon l'une quelconque des revendications 1 à 7, pour augmenter l'utilisation de circuits d'accélérateur de réseau neuronal (NN) pour des couches peu profondes d'un NN, le procédé comprenant :

   la détermination d'une largeur d'un noyau de pondération ;
   la détermination d'une profondeur d'un premier tenseur ; en commençant à un premier emplacement XY du premier tenseur, la copie d'une ou plusieurs valeurs Z, jusqu'à la profondeur du premier tenseur, d'emplacements XY consécutifs qui chevauchent la largeur du noyau de pondération ; et
   le chargement consécutif de la ou des valeurs Z dans un premier emplacement XY d'un second tenseur, pour une entrée simultanée dans un réseau de circuits MAC.

9. Procédé selon la revendication 8, comportant en outre :

   la détermination du fait qu'un remplissage externe doit ou non être appliqué au premier tenseur en fonction de la largeur du noyau de pondération ;
   sur la détermination du fait qu'un remplissage externe doit être appliqué :

      le chargement d'un premier remplissage externe avant un premier emplacement X à un premier emplacement Y du premier tenseur ; et
      le chargement d'un deuxième remplissage externe après un dernier emplacement X au premier emplacement Y du premier tenseur.

10. Procédé selon l'une quelconque des revendications 8 ou 9, comprenant en outre les étapes suivantes :

    la sélection d'une première position Y du premier tenseur ;
    la sélection d'un premier emplacement X du premier tenseur au premier emplacement Y pour définir le premier emplacement XY ; et
    sur la détermination du fait qu'il existe suffisamment de données du premier tenseur à l'extérieur de la largeur du noyau de pondération pour générer une autre colonne du second tenseur, la sélection d'un second emplacement X au premier emplacement Y en fonction d'un pas du noyau de pondération.

11. Procédé selon l'une quelconque des revendications 8 à 10, comprenant en outre, sur la détermination du fait qu'il existe suffisamment de données du premier tenseur à l'extérieur d'une hauteur du noyau de pondération pour générer une autre rangée du second tenseur, la sélection d'un second emplacement Y du premier tenseur en fonction d'un pas du noyau de pondération.

12. Procédé selon l'une quelconque des revendications 8 à 11, dans lequel le premier tenseur est stocké dans une mémoire, la mémoire étant au moins l'une parmi seize octets alignés ou trente deux octets alignés.

13. Procédé selon l'une quelconque des revendications 8 à 12, dans lequel le premier tenseur correspond à une image d'entrée du NN.

14. Procédé selon l'une quelconque des revendications 8 à 13, dans lequel le noyau de pondération est un premier noyau de pondération, et le procédé comprend en outre, sur la détermination du fait qu'il y a un noyau de pondération supplémentaire à traiter, la sélection d'un second noyau de pondération.

15. Programme informatique comprenant des instructions qui, lorsque le programme informatique est exécuté par l'appareil selon l'une quelconque des revendications 1 à 7, amènent l'appareil à mettre en œuvre le procédé tel que revendiqué dans l'une quelconque des revendications 8 à 14.

RESNET-50 LAYER DIMENSIONS

100

102 104 106 108 110

LAYER

0 10 20 30 40 50

65536 32768 16384 8192 4096 2048 1024 512 256 128 64 32 16 8 4 2 1

SPATIAL (HxW) — DEPTH

FIG. 1

FIG. 2

EP 4 405 861 B1

**FIG. 3**

**FIG. 4**

500

| 512 | 510 | 508 | 506 |
|---|---|---|---|
| SE_PTR_3 | SE_PTR_2 | SE_PTR_1 | SE_PTR_0 |
| SE_PTR_7 | SE_PTR_6 | SE_PTR_5 | SE_PTR_4 |
| SE_PTR_11 | SE_PTR_10 | SE_PTR_9 | SE_PTR_8 |
| 514 ... | | | |
| SE_PTR_N | SE_PTR_N-1 | SE_PTR_N-2 | SE_PTR_N-3 |

502

SE_PTRs

| | |
|---|---|
| X0Y0 Z[15:0] | 516 |
| X1Y0 Z[15:0] | 518 |
| X2Y0 Z[15:0] | 520 |
| X0Y1 Z[15:0] | 522 |
| X1Y1 Z[15:0] | |
| X2Y1 Z[15:0] | |
| X0Y2 Z[15:0] | |
| X1Y2 Z[15:0] | |
| X2Y2 Z[15:0] | |
| X0Y3 Z[15:0] | |
| X1Y3 Z[15:0] | |
| X2Y3 Z[15:0] | |
| ... | |
| XiYj Z[15:0] | 524 |

504

TENSOR
DATA

**FIG. 5**

FIG. 6

FIG. 7

EP 4 405 861 B1

212

DATA REPLICATION PREPROCESSING CIRCUITRY

802 PARAMETER DETERMINING CIRCUITRY

804 PADDING CIRCUITRY

808

806 STORAGE CONTROL CIRCUITRY

**FIG. 8**

214

FRACTIONAL STRIDE PREPROCESSING CIRCUITRY

1002 TENSOR AND WT CONTROL CIRCUITRY

1004 PADDING CONTROL CIRCUITRY

1010

1006 SPARSITY GENERATION CIRCUITRY

1008 POINTER CONTROL CIRCUITRY

**FIG. 10**

900

902

904

224x224x3

*

64x7x7x3

=

OUTPUT
TENSOR

906

112x112x64

REPACK AND REPLICATE INPUT
TENSOR

PACK X PORTIONS OF
KERNEL ALONG Z

EQUIVALENT OUTPUT

908

910

224x224x21

*

64x1x7x21

=

OUTPUT
TENSOR

906

112x112x64

FIG. 9

EP 4 405 861 B1

WEIGHT KERNELS

INPUT TENSOR

220

MAC CIRCUITRY

CONTROL LOGIC CIRCUITRY 1102

WT BUFFER 1104

WEIGHT (WT) DECOMPRESSION CIRCUITRY 1106

INPUT TENSOR BUFFER 1108

INPUT TENSOR DECOMPRESSION CIRCUITRY 1110

MAC 1112$_{1,1}$

MAC 1114$_{2,1}$

MAC 1116$_{N,1}$

MAC 1112$_{1,2}$

MAC 1114$_{2,2}$

MAC 1116$_{N,2}$

MAC 1112$_{1,M}$

MAC 1114$_{2,M}$

MAC 1116$_{N,M}$

TO 222

**FIG. 11**

INPUT TENSOR

1202

WEIGHT SET 0
(K=0)

WEIGHT SET 2
(K=2)

1200

OUTPUT TENSOR

1216

1220

$Z0, Z1, Z2$

1210

1214

1212

1208

$Y0, Y1, Y2, Y3$

WEIGHT SET 1
(K=1)

WEIGHT SET 3
(K=3)

1218

1222

1224

1226

K

1206

$X0, X1, X2, X3$

X

=

FIG. 12

1204

EP 4 405 861 B1

1300

OUTPUT TENSOR

1226
1206
1224

FIG. 13

1310
1312

=

WEIGHT SET 2 (K=2)
WEIGHT SET 3 (K=3)

WEIGHT SET 0 (K=0)
WEIGHT SET 1 (K=1)

1306
1308
1304

X

1302

INPUT TENSOR

Z
X
Y

1208 1210 1212
1210 1212 1214

X0, X1

Y0, Y1, Y2, Y3

FIG. 14

INPUT TENSOR

1502

Z0, Z1, Z2

1510

1512

1516

1514

1508

Y0, Y1, Y2, Y3, Y4

X0, X1, X2, X3, X4

WEIGHT SET 0
(K=0)

1518

WEIGHT SET 2
(K=2)

1522

X

WEIGHT SET 1
(K=1)

1520

WEIGHT SET 3
(K=3)

1524

1504

=

OUTPUT TENSOR

1526

1528

1530

K

1506

FIG. 15

EP 4 405 861 B1

FIG. 16

INPUT TENSOR 1602

WEIGHT SET 0 (K=0) 1606
WEIGHT SET 1 (K=1) 1608
WEIGHT SET 2 (K=2) 1610
WEIGHT SET 3 (K=3) 1612

OUTPUT TENSOR 1600

1604, 1506, 1526, 1528, 1530

1508, 1510, 1512, 1514, 1516

Y0, Y1, Y2, Y3, Y4
X0, X1

FIG. 17

INPUT TENSOR

1802

Z
X
Y

Z0, Z1, Z2

1810

1814

1812

1808

Y0, Y1, Y2, Y3

X0, X1, X2, X3

X

WEIGHT SET 0
(K=0)

1816

WEIGHT SET 2
(K=2)

1820

WEIGHT SET 1
(K=1)

1818

WEIGHT SET 3
(K=3)

1822

1804

=

1800

OUTPUT TENSOR

1826

1824

K

1806

FIG. 18

EP 4 405 861 B1

INPUT TENSOR 1902

WEIGHT SET 0 (K=0) 1906

WEIGHT SET 2 (K=2) 1910

WEIGHT SET 1 (K=1) 1908

WEIGHT SET 3 (K=3) 1912

1904

OUTPUT TENSOR 1900

■ = PAD PATTERN

X0, X1, X2, X3

Y0, Y1, Y2, Y3

FIG. 19

FIG. 20

FIG. 21

2200

START

2202
SELECT FIRST WEIGHT (WT) KERNEL TO BE PROCESSED

2204
DETERMINE WIDTH (W), HEIGHT (H), AND STRIDE OF SELECTED WT KERNEL

2206
DETERMINE W, H, AND DEPTH (D) OF THE INPUT TENSOR (IT)

2208
EXTERNAL PADDING TO BE APPLIED TO IT?

YES →

2210
LOAD PAD BEFORE THE FIRST X LOCATION AT THE FIRST Y LOCATION OF THE IT

2212
LOAD PAD AFTER THE LAST X LOCATION AT THE FIRST Y LOCATION OF THE IT

NO

2214
INTERNAL PADDING TO BE APPLIED TO IT?

YES →

2216
SEPARATE Z VALUES OF EACH XY LOCATION OF THE IT BY A NUMBER OF PADS

NO

2218
REPLICATE WT KERNEL TO GENERATE $N$ WT KERNELS TO MATCH THE NUMBER OF POINTS OF AN OUTPUT TENSOR THAT CAN BE GENERATED PER XY LOCATION OF THE REFORMATTED IT

2220
GENERATE $N$ WT SPARSITY BITMAPS WHERE EACH WT SPARSITY BITMAP INCLUDES A SPARSITY PATTERN OFFSET FROM THE START OF RESPECTIVE WT SPARSITY BITMAPS BY A PRODUCT OF THE NUMBER OF STRIDES OF THE SELECTED WT KERNEL AND THE SUM OF THE D OF THE IT AND THE NUMBER OF PADS

2222
DETERMINE AN FS OFFSET BASED ON $N$, THE DEPTH OF THE IT, THE STRIDE OF THE SELECTED KERNEL, AND THE NUMBER OF PADS

2224
OFFSET CONSECUTIVE STORAGE ELEMENT POINTERS BY THE FS OFFSET

2226
OFFLOAD IT, WT SETS, AND WT SPARSITY BITMAPS TO BE PROCESSED

2228
ADDITIONAL WT KERNEL?

YES →

2230
SELECT NEXT WT KERNEL

NO

END

FIG. 22

FIG. 23

EP 4 405 861 B1

**FIG. 24**

FIG. 25

2600

SOFTWARE
DISTRIBUTION
PLATFORM — 2605

INSTR
2332

NETWORK — 2610

PROCESSOR
PLATFORM(S) — 2300

2332

FIG. 26

**REFERENCES CITED IN THE DESCRIPTION**

**Patent documents cited in the description**

- US 11061738 B2